# EUROPEAN PATENT APPLICATION

(11) **EP 4 842 028 A1**
(43) Date of publication of application: **18.11.2026**
(21) Application number: 25744512.2
(22) Date of filing: 16.01.2025
(51) Int. Cl.: H04W 12/0431

(54) **COMMUNICATION METHOD AND COMMUNICATION APPARATUS**

(30) Priority: 22.01.2024 CN 202410095116
(71) Applicant: Huawei Technologies Co., Ltd., Shenzhen, Guangdong 518129 (CN)
(72) Inventor: WANG, Donghui, Shenzhen, Guangdong 518129 (CN); LIU, Faye, Shenzhen, Guangdong 518129 (CN); SONG, Yurong, Shenzhen, Guangdong 518129 (CN)
(74) Representative: Huawei European IPR
(86) International application number: PCT/CN2025/072828
(87) International publication number: WO 2025/157070

(57) **Abstract**

This application provides a communication method and a communication apparatus. The method includes: receiving first indication information from a communication apparatus, where the first indication information indicates at least one key agreement algorithm; and sending second indication information to the communication apparatus, where the second indication information indicates a first key agreement algorithm, the first key agreement algorithm is one of the at least one key agreement algorithm, the first key agreement algorithm is for determining a first key, and the first key is for encrypting or decrypting a message transmitted between the communication apparatus and a verification network element. The verification network element and the communication apparatus negotiate to determine a key agreement algorithm in an authentication process, so that selection of the key agreement algorithm in the authentication procedure is more flexible, to achieve applicability to more application scenarios.

## Description

This application claims priority to Chinese Patent Application No. 202410095116.1, filed with the China National Intellectual Property Administration on January 22, 2024 and entitled "COMMUNICATION METHOD AND COMMUNICATION APPARATUS", which is incorporated herein by reference in its entirety.

### TECHNICAL FIELD

This application relates to the communication field, and more specifically, to a communication method and a communication apparatus.

### BACKGROUND

In terms of network security, tasks of a network include: performing identity authentication and authorization on a terminal accessing the network, so that the terminal accesses an operator network, thereby initiating air interface encryption for service communication of the terminal. Currently, the terminal and the network generate a shared key using elliptic curve Diffie-Hellman (elliptic curve Diffie-Hellman, ECDH) key agreement. The terminal transmits identification information of the terminal based on the shared key, so that a network side obtains a root key corresponding to the identification information of the terminal device, thereby completing identity authentication between both parties. In the foregoing solution, the network side and the terminal use a fixed key exchange algorithm to generate the shared key, and application scenarios are limited.

### SUMMARY

This application provides a communication method and a communication apparatus, to improve flexibility of accessing a network by a user.

According to a first aspect, a communication method is provided. The method may be performed by a verification network element, or may be performed by a component (for example, a chip or a circuit) of the verification network element. This is not limited. For ease of description, the following uses an example in which the method is performed by the verification network element for description.

The method includes: receiving first indication information from a communication apparatus, where the first indication information indicates at least one key agreement algorithm; and sending second indication information to the communication apparatus, where the second indication information indicates a first key agreement algorithm, the first key agreement algorithm is one of the at least one key agreement algorithm, the first key agreement algorithm is for determining a first key, and the first key is for encrypting or decrypting a message transmitted between the communication apparatus and the verification network element.

According to the foregoing solution, the verification network element and the communication apparatus may negotiate to determine a key agreement algorithm in an authentication process, so that selection of the key agreement algorithm in the authentication procedure is more flexible, to achieve applicability to more application scenarios. That is, the communication apparatus indicates the at least one key agreement algorithm to the verification network element, and the verification network element determines the first key agreement algorithm from the at least one key agreement algorithm, where the first key agreement algorithm is used for the first key.

In some implementations of the first aspect, the first key agreement algorithm is determined based on first information and the first indication information, and the first information includes at least one of the following information: a security level corresponding to a key agreement algorithm, computational complexity of the key agreement algorithm, a network standard, a type of the communication apparatus, and a computing capability of the communication apparatus.

According to the foregoing solution, the first key agreement algorithm is determined based on the first information, so that the first key agreement algorithm is applicable to at least one of different security levels, computational complexity, network standards, types of communication apparatuses, and computing capabilities of the communication apparatuses.

In some implementations of the first aspect, the at least one key agreement algorithm includes at least one of the following:
an elliptic curve Diffie-Hellman (elliptic curve Diffie-Hellman, ECDH) key agreement algorithm, an ephemeral elliptic curve Diffie-Hellman (ephemeral elliptic curve Diffie-Hellman, ECDHE) key agreement algorithm, a key agreement algorithm based on post-quantum cryptography (post-quantum cryptography, PQC), a key agreement algorithm based on PQC and ECDH, a key agreement algorithm based on PQC and ECDHE, and a key agreement algorithm based on a preset key.

In some implementations of the first aspect, the first key is determined based on the first key agreement algorithm.

In some implementations of the first aspect, the first key agreement algorithm is the ECDHE key agreement algorithm. In the ECDHE key agreement algorithm, the verification network element receives a first public key from the communication apparatus, where the first public key is a public key in a first ephemeral public-private key pair generated by the communication apparatus. The verification network element determines the first key based on the first public key and a second private key, where the second private key is a private key in a second ephemeral public-private key pair generated by the verification network element.

According to the foregoing solution, the verification network element and the communication apparatus may negotiate to determine to use the ECDHE key agreement algorithm. In the ECDHE key agreement algorithm, the verification network element and the communication apparatus each generate the first key by using an ephemeral public key generated by the other, thereby improving key exchange security. Furthermore, the key agreement algorithm has lower computational complexity, and is applicable to a communication scenario in which computational complexity of a key agreement algorithm is lower and a security requirement is higher.

In some implementations of the first aspect, the verification network element sends a second public key to the communication apparatus, where the second public key is a public key in the second ephemeral public-private key pair. The second public key is sent to the communication apparatus, so that the communication apparatus determines the first key based on the second public key.

In some implementations of the first aspect, the first key agreement algorithm is the key agreement algorithm based on PQC. In the key agreement algorithm based on PQC, the verification network element receives a third public key from the communication apparatus, where the third public key is a public key in a third ephemeral public-private key pair generated by the communication apparatus based on the post-quantum cryptography algorithm. The verification network element inputs the third public key into the post-quantum cryptography algorithm to generate a ciphertext and the first key.

According to the foregoing solution, the verification network element and the communication apparatus may negotiate to determine to use the key agreement algorithm based on PQC. In the key agreement algorithm based on PQC, the verification network element and the communication apparatus generate the first key by using PQC, so that key exchange security can be improved. The key agreement algorithm is applicable to a communication scenario in which a security requirement is higher.

In some implementations of the first aspect, the verification network element sends the ciphertext to the communication apparatus. The ciphertext is sent to the communication apparatus, so that the communication apparatus determines the first key based on the ciphertext.

In some implementations of the first aspect, the first key agreement algorithm is the key agreement algorithm based on PQC and ECDH. In the key agreement algorithm based on PQC and ECDH, the verification network element receives a first public key and a third public key from the communication apparatus, where the first public key is a public key in a first ephemeral public-private key pair generated by the communication apparatus, and the third public key is a public key in a third ephemeral public-private key pair generated by the communication apparatus based on the post-quantum cryptography algorithm. The verification network element determines a second key based on the first public key and a private key of the verification network element, and inputs the third public key into the post-quantum cryptography algorithm to generate a ciphertext and a third key. The verification network element determines the first key based on the second key and the third key.

According to the foregoing solution, the verification network element and the communication apparatus may negotiate to determine to use the key agreement algorithm based on PQC and ECDH. In the key agreement algorithm based on PQC and ECDH, the verification network element and the communication apparatus may generate the first key based on a key generated based on PQC and a key generated based on ECDH, thereby improving key exchange security. Compared with the key agreement algorithm based on PQC, the key agreement algorithm is applicable to a communication scenario in which a security requirement is higher.

In some implementations of the first aspect, the verification network element sends a public key of the verification network element and the ciphertext to the communication apparatus, where the public key of the verification network element and the ciphertext are used by the communication apparatus to determine the first key.

In some implementations of the first aspect, the first key agreement algorithm is the key agreement algorithm based on PQC and ECDHE. In the key agreement algorithm based on PQC and ECDHE, the verification network element receives a first public key and a third public key from the communication apparatus, where the first public key is a public key in a first ephemeral public-private key pair generated by the communication apparatus, and the third public key is a public key in a third ephemeral public-private key pair generated by the communication apparatus based on the post-quantum cryptography algorithm. The verification network element determines a second key based on the first public key and a second private key, where the second private key is a private key in a second ephemeral public-private key pair generated by the verification network element; and inputs the third public key into the post-quantum cryptography algorithm to generate a ciphertext and a third key. The verification network element determines the first key based on the second key and the third key.

According to the foregoing solution, the verification network element and the communication apparatus may negotiate to determine to use the key agreement algorithm based on PQC and ECDHE. In the key agreement algorithm based on PQC and ECDH, the verification network element and the communication apparatus may generate the first key based on a key generated based on PQC and a key generated based on ECDHE, thereby improving key exchange security. ECDHE has forward security. Compared with a key agreement algorithm based on PQC and ECDH, the key agreement algorithm is applicable to a communication scenario in which a security requirement is higher.

In some implementations of the first aspect, the verification network element sends a second public key and the ciphertext to the communication apparatus, where the second public key is a public key in the second ephemeral public-private key pair. The second public key and the ciphertext are sent to the communication apparatus, so that the communication apparatus determines the first key based on the second public key and the ciphertext.

In some implementations of the first aspect, the verification network element sends a first digital signature to the communication apparatus, where the first digital signature is a signature on a first message using the private key of the verification network element, and the first message includes a message that has been exchanged between the verification network element and the communication apparatus; and sends a certificate of the verification network element to the communication apparatus, where the certificate includes the public key of the verification network element, and the public key of the verification network element is used by the communication apparatus to verify the first digital signature.

For example, the message that has been exchanged between the verification network element and the communication apparatus may include a latest message sent by the verification network element to the terminal device, for example, a message that carries the first digital signature. Alternatively, the exchanged message may include all messages that have been exchanged with the communication apparatus before the verification network element sends a latest message to the communication apparatus (for example, messages that have been exchanged between the verification network element and the communication apparatus from a message via which the communication apparatus sends the first public key or the third public key to the verification network element and that is denoted as a message #1 to a message via which the verification network element sends the first digital signature and that is denoted as a message #2, where the messages that have been exchanged may include the message #1 and the message #2). Optionally, before the verification network element sends the first digital signature to the communication apparatus, the verification network element may store the message that has been exchanged with the communication apparatus.

For example, the message that has been exchanged between the verification network element and the communication apparatus may further include the message for sending the first digital signature. For example, the message for sending the first digital signature is a radio resource control (radio resource control, RRC) message or a non-access stratum (non-access stratum, NAS) message.

According to the foregoing solution, the certificate of the verification network element and the first digital signature are sent to the communication apparatus, so that the communication apparatus performs authentication on the verification network element, a procedure in which the communication apparatus performs authentication on the verification network element is simplified, and signaling overheads can be reduced.

In some implementations of the first aspect, a request message from the communication apparatus is received, where the request message is for requesting to access a network, the request message includes a first identifier encrypted by using the first key, and there is a correspondence between the first identifier and authentication information of the communication apparatus. The verification network element obtains first authentication information in the authentication information based on the first identifier, and performs authentication on the communication apparatus based on the first authentication information.

According to the foregoing solution, the authentication network element obtains, based on the first identifier, authentication information needed by the communication apparatus and corresponding to the first identifier, and performs authentication on the communication apparatus based on the authentication information, so that flexibility of performing authentication on the communication apparatus can be improved.

In some implementations of the first aspect, before the receiving the request message from the communication apparatus, third indication information from the communication apparatus is received, where the third indication information indicates at least one authentication mode, and authentication information, of the communication apparatus, indicated by each of the at least one authentication mode is independent of each other. Fourth indication information is sent to the communication apparatus, where the fourth indication information indicates a first authentication mode, the first authentication mode is one of the at least one authentication mode, and the first authentication mode corresponds to the first authentication information.

According to the foregoing solution, the verification network element and the communication apparatus may negotiate to determine an authentication mode, so that selection of the authentication mode is more flexible, to achieve applicability to more application scenarios. That is, the communication apparatus indicates the at least one authentication mode to the verification network element, and the verification network element determines the first authentication mode from the at least one authentication mode.

In some implementations of the first aspect, the authentication information includes any one of the following information: a credential of the communication apparatus and a cryptographic algorithm, where the credential of the communication apparatus includes a public key of the communication apparatus, and the cryptographic algorithm includes a signature algorithm applicable to the communication apparatus.

According to the foregoing solution, the first authentication mode is determined based on the third information, so that the first authentication mode is applicable to different credentials of the communication apparatus and cryptographic algorithms.

In some implementations of the first aspect, a type of a first identifier indicated by each of the at least one authentication mode is different, and the first identifier includes at least one of the following: a first-type identifier of the communication apparatus, a second-type identifier of the communication apparatus, a block identifier or a transaction identifier, and a pseudo identifier of the communication apparatus, where there is a first correspondence between the first-type identifier and a root key of the communication apparatus, there is a second correspondence between the second-type identifier and at least one credential of the communication apparatus, the block identifier or the transaction identifier is for obtaining the second correspondence stored on a blockchain, and there is a correspondence between the pseudo identifier and the second-type identifier.

According to the foregoing solution, the verification network element may obtain the authentication information of the communication apparatus based on different identifiers, so that the authentication process is applicable to a plurality of scenarios. For example, the first-type identifier may be compatible with a 5G communication system. Compared with the first-type identifier, the second-type identifier may be applied to a scenario of a service that has a higher requirement for confidentiality of personal information. In some scenarios, the pseudo identifier may be used to further improve communication security.

In some implementations of the first aspect, the first authentication mode is determined based on second information and the third indication information, and the second information includes at least one of the following information: an issuer of the credential of the communication apparatus, a security level of the credential of the communication apparatus, and a cryptographic algorithm corresponding to the credential of the communication apparatus.

According to the foregoing solution, the verification network element may select at least one of the issuer of the credential of the communication apparatus, the security level of the credential of the communication apparatus, and the cryptographic algorithm corresponding to the credential of the communication apparatus that are used in the authentication process, so that the authentication process is more flexible.

In some implementations of the first aspect, the first authentication information includes a first credential of the communication apparatus. The first credential is verified based on a credential of an issuer of the first credential. A second digital signature from the communication apparatus is received, where the second digital signature is a signature on a second message using a private key of the communication apparatus, and the second message includes a message that has been exchanged between the communication apparatus and the verification network element. The second digital signature is verified based on a public key corresponding to the first credential.

For example, the message that has been exchanged between the communication apparatus and the verification network element may include a latest message sent by the communication apparatus to the verification network element. For example, the message that has been exchanged may include a message that carries the second digital signature. Alternatively, the message that has been exchanged may include messages after the request message sent by the communication apparatus to the verification network element (including the request message) and before a latest message sent by the communication apparatus to the verification network element (which may include the latest message sent to the verification network element). For example, the latest message sent is a message that carries the second digital signature. Optionally, before the communication apparatus sends the second digital signature to the verification network element, the communication apparatus may store the message that has been exchanged with the verification network element.

The message that carries the first digital signature may be an RRC message or a NAS message.

According to the foregoing solution, the verification network element may verify, by using the first credential, the signature of the communication apparatus on the message that has been exchanged, to verify the communication apparatus; and verify the first credential by using the credential of the issuer of the first credential, to determine security of the first credential, thereby improving security of the authentication process.

According to a second aspect, a communication method is provided. The method may be performed by a verification network element, or may be performed by a component (for example, a chip or a circuit) of the verification network element. This is not limited. For ease of description, the following uses an example in which the method is performed by the verification network element for description.

The method includes: receiving an ephemeral public key from a communication apparatus, where the ephemeral public key is a public key in an ephemeral public-private key pair generated by the communication apparatus; and performing authentication on the communication apparatus based on a first key, where the first key is determined based on the ephemeral public key and a second private key, and the second private key is a private key of the verification network element or a private key in an ephemeral public-private key pair generated by the verification network element; or the first key is generated by inputting the ephemeral public key into a post-quantum cryptography algorithm.

According to the foregoing solution, the verification network element may perform authentication on the communication apparatus based on the first key, where the first key is determined based on the ephemeral public key of the communication apparatus and the private key of the verification network element or the private key in the ephemeral public-private key pair generated by the verification network element, or the first key is generated by inputting the ephemeral public key into the post-quantum cryptography algorithm, so that security of the first key is ensured, and security of performing authentication on the communication apparatus based on the first key is improved.

In some implementations of the second aspect, if the first key is determined based on the ephemeral public key and the second private key, and the second private key is the private key in the ephemeral public-private key pair generated by the verification network element, the verification network element sends a second public key to the communication apparatus, where the second public key includes a public key in the ephemeral public-private key pair generated by the verification network element, and the second public key is used by the communication apparatus to determine the first key.

According to the foregoing solution, the verification network element sends, to the communication apparatus, the public key in the ephemeral public-private key pair generated by the verification network element, so that the communication apparatus determines the first key based on the ephemeral public key. This improves the security of the first key determined by the communication apparatus, so that the authentication security can be improved.

In some implementations of the second aspect, the ephemeral public key is a third public key, the third public key is a public key in a third ephemeral public-private key pair generated by the communication apparatus based on the post-quantum cryptography algorithm, and the first key is generated by inputting the third public key into the post-quantum cryptography algorithm.

According to the foregoing solution, the ephemeral public key of the communication apparatus is input into the post-quantum cryptography algorithm to obtain the first key. This can improve the security of the first key, thereby improving the authentication security.

In some implementations of the second aspect, a ciphertext is sent to the communication apparatus, where the ciphertext is generated by inputting the third public key into the post-quantum cryptography algorithm, and the ciphertext is used by the communication apparatus to determine the first key.

According to the foregoing solution, the ciphertext is sent to the communication apparatus, where the ciphertext is generated by inputting the third public key into the post-quantum cryptography algorithm, so that the communication apparatus generates the first key based on the ciphertext. This can improve the security of the first key, thereby improving the authentication security.

In some implementations of the second aspect, the ephemeral public key includes a first public key and a third public key, the first public key is a public key in a first ephemeral public-private key pair generated by the communication apparatus, the third public key is a public key in a third ephemeral public-private key pair generated by the communication apparatus based on the post-quantum cryptography algorithm, and the first key is determined based on a second key and a third key, where the second key is determined based on the second private key and the first public key, and the third key is generated by inputting the third public key into the post-quantum cryptography algorithm.

According to the foregoing solution, the verification network element may generate the second key based on the first public key generated by the communication apparatus, and generate the third key based on the third public key generated by the communication apparatus based on the post-quantum cryptography algorithm. The first key is generated based on the second key and the third key. This can improve the security of the first key, thereby improving the authentication security.

In some implementations of the second aspect, a ciphertext and a second public key are sent to the communication apparatus, where the second public key includes a public key of the verification network element or a public key in the ephemeral public-private key pair generated by the verification network element, the ciphertext is generated by inputting the third public key into the post-quantum cryptography algorithm, and the ciphertext and the second public key are used by the communication apparatus to determine the first key.

According to the foregoing solution, the ciphertext and the second public key are sent to the communication apparatus, so that the communication apparatus generates the first key based on the ciphertext and the second public key. This can improve the security of the first key, thereby improving the authentication security.

In some implementations of the second aspect, the ephemeral public key is sent based on second indication information, the second indication information indicates a first key agreement algorithm, the first key agreement algorithm is one of at least one key agreement algorithm, and before the receiving the ephemeral public key from the communication apparatus, first indication information from the communication apparatus is received, where the first indication information indicates the at least one key agreement algorithm. The second indication information is sent to the communication apparatus.

According to the foregoing solution, the verification network element and the communication apparatus may negotiate to determine a key agreement algorithm in an authentication process, so that selection of the key agreement algorithm in the authentication procedure is more flexible, to achieve applicability to more application scenarios.

In some implementations of the second aspect, the first key agreement algorithm is determined based on first information and the first indication information, and the first information includes at least one of the following information: a security level corresponding to a key agreement algorithm, computational complexity of the key agreement algorithm, a network standard, a type of the communication apparatus, and a computing capability of the communication apparatus.

For the at least one key agreement algorithm, refer to the descriptions in the first aspect.

In some implementations of the second aspect, a first digital signature is sent to the communication apparatus, where the first digital signature is a signature on a first message using the private key of the verification network element, and the first message includes a message that has been exchanged between the verification network element and the communication apparatus. A certificate of the verification network element is sent to the communication apparatus, where the certificate includes the public key of the verification network element, and the public key of the verification network element is used by the communication apparatus to verify the first digital signature. For the message that has been exchanged between the verification network element and the communication apparatus, refer to the descriptions in the first aspect.

According to the foregoing solution, the first digital signature and the certificate of the verification network element are sent to the communication apparatus, so that the communication apparatus verifies the first digital signature based on the certificate of the verification network element, to verify the verification network element. This authentication mode simplifies the authentication procedure, so that signaling overheads can be reduced.

In some implementations of the second aspect, a request message from the communication apparatus is received, where the request message is for requesting to access a network, the request message includes a first identifier encrypted by using the first key, and there is a correspondence between the first identifier and authentication information of the communication apparatus. The verification network element obtains first authentication information in the authentication information based on the first identifier, and performs authentication on the communication apparatus based on the first authentication information.

According to the foregoing solution, the authentication network element obtains, based on the first identifier, authentication information needed by the communication apparatus and corresponding to the first identifier, and performs authentication on the communication apparatus based on the authentication information, so that flexibility of performing authentication on the communication apparatus can be improved.

In some implementations of the second aspect, before the request message is received from the communication apparatus, third indication information from the communication apparatus is received, where the third indication information indicates at least one authentication mode, and authentication information corresponding to each of the at least one authentication mode is independent of each other. Fourth indication information is sent to the communication apparatus, where the fourth indication information indicates a first authentication mode, the first authentication mode is one of the at least one authentication mode, and the first authentication mode corresponds to the first authentication information.

According to the foregoing solution, the verification network element and the communication apparatus may negotiate to determine an authentication mode, so that selection of the authentication mode is more flexible, to achieve applicability to more application scenarios. That is, the communication apparatus indicates the at least one authentication mode to the verification network element, and the verification network element determines the first authentication mode from the at least one authentication mode.

In some implementations of the second aspect, the authentication information indicates any one of the following information: a credential of the communication apparatus and a cryptographic algorithm, where the credential of the communication apparatus includes a public key of the communication apparatus, and the cryptographic algorithm includes a signature algorithm applicable to the communication apparatus.

According to the foregoing solution, the first authentication mode is determined based on the third information, so that the first authentication mode is applicable to different credentials of the communication apparatus and cryptographic algorithms.

In some implementations of the second aspect, a type of a first identifier indicated by each of the at least one authentication mode is different, and the first identifier includes at least one of the following: a first-type identifier of the communication apparatus, a second-type identifier of the communication apparatus, a block identifier or a transaction identifier, and a pseudo identifier of the communication apparatus, where there is a first correspondence between the first-type identifier and a root key of the communication apparatus, there is a second correspondence between the second-type identifier and at least one credential of the communication apparatus, the block identifier or the transaction identifier is for obtaining the second correspondence stored on a blockchain, and there is a correspondence between the pseudo identifier and the second-type identifier.

According to the foregoing solution, the verification network element may obtain the authentication information of the communication apparatus based on different identifiers, so that the authentication process is applicable to a plurality of scenarios.

In some implementations of the second aspect, the first authentication mode is determined based on second information and the third indication information, and the second information includes at least one of the following information: an issuer of the credential of the communication apparatus, a security level of the credential of the communication apparatus, and a cryptographic algorithm corresponding to the credential of the communication apparatus.

According to the foregoing solution, the verification network element may select at least one of the issuer of the credential of the communication apparatus, the security level of the credential of the communication apparatus, and the cryptographic algorithm corresponding to the credential of the communication apparatus that are used in the authentication process, so that the authentication process is more flexible.

In some implementations of the second aspect, the first authentication information includes a first credential of the communication apparatus. The first credential is verified based on a credential of an issuer of the first credential. A second digital signature from the communication apparatus is received, where the second digital signature is a signature of the communication apparatus on a second message, and the second message includes a message that has been exchanged between the communication apparatus and the verification network element. The second digital signature is verified based on a public key corresponding to the first credential. For the message that has been exchanged between the communication apparatus and the verification network element, refer to the descriptions in the first aspect.

According to the foregoing solution, the verification network element may verify, by using the first credential, the signature of the communication apparatus on the message that has been exchanged, to verify the communication apparatus; and verify the first credential by using the credential of the issuer of the first credential, to determine security of the first credential, thereby improving security of the authentication process.

According to a third aspect, a communication method is provided. The method may be performed by a communication apparatus, or may be performed by a component (for example, a chip or a circuit) of the communication apparatus. This is not limited. For ease of description, the following uses an example in which the method is performed by the communication apparatus for description.

The method includes: sending first indication information to a verification network element, where the first indication information indicates at least one key agreement algorithm; and receiving second indication information from the verification network element, where the second indication information indicates a first key agreement algorithm, the first key agreement algorithm is one of the at least one key agreement algorithm, the first key agreement algorithm is for determining a first key, and the first key is for encrypting or decrypting a message transmitted between the communication apparatus and the verification network element.

According to the foregoing solution, the verification network element and the communication apparatus may negotiate to determine a key agreement algorithm in an authentication process, so that selection of the key agreement algorithm in the authentication procedure is more flexible, to achieve applicability to more application scenarios. That is, the communication apparatus indicates the at least one key agreement algorithm to the verification network element, and the verification network element determines the first key agreement algorithm from the at least one key agreement algorithm, where the first key agreement algorithm is used for the first key.

In some implementations of the third aspect, the first key agreement algorithm is determined based on first information and the first indication information, and the first information includes at least one of the following information: a security level corresponding to a key agreement algorithm, computational complexity of the key agreement algorithm, a network standard, a type of the communication apparatus, and a computing capability of the communication apparatus.

According to the foregoing solution, the first key agreement algorithm is determined based on the first information, so that the first key agreement algorithm is applicable to at least one of different security levels, computational complexity, network standards, types of communication apparatuses, and computing capabilities of the communication apparatuses.

For the at least one key agreement algorithm, refer to the descriptions in the first aspect.

In some implementations of the third aspect, the first key is determined based on the first key agreement algorithm.

In some implementations of the third aspect, the first key agreement algorithm is the ECDHE key agreement algorithm. In the ECDHE key agreement algorithm, a second public key from the verification network element is received, where the second public key is a public key in a second ephemeral public-private key pair generated by the verification network element. The first key is determined based on the second public key and a first private key, where the first private key is a private key in a first ephemeral public-private key pair generated by the communication apparatus.

According to the foregoing solution, the first key is determined based on the received public key in the second ephemeral public-private key pair generated by the verification network element and the private key in the first ephemeral public-private key pair generated by the communication apparatus. This can improve security of the first key, thereby improving authentication security.

In some implementations of the third aspect, a first public key is sent to the verification network element, where the first public key is a public key in a first ephemeral public-private key pair, and the first public key is used by the verification network element to determine the first key.

In some implementations of the third aspect, the first key agreement algorithm is the key agreement algorithm based on PQC. In the key agreement algorithm based on PQC, a ciphertext from the verification network element is received, where the ciphertext is generated by the verification network element based on the post-quantum cryptography algorithm. The ciphertext and a third private key are input into the post-quantum cryptography algorithm to generate the first key, where the third private key is a private key in a third ephemeral public-private key pair generated by the communication apparatus based on the post-quantum cryptography algorithm.

According to the foregoing solution, the first key is determined based on the received ciphertext generated by the verification network element and the private key in the third ephemeral public-private key pair generated by the communication apparatus based on the post-quantum cryptography algorithm. This can improve security of the first key, thereby improving authentication security.

In some implementations of the third aspect, a third public key is sent to the verification network element, where the third public key is a public key in the third ephemeral public-private key pair, and the third public key is used by the verification network element to determine the first key.

In some implementations of the third aspect, the first key agreement algorithm is the key agreement algorithm based on PQC and ECDH. In the key agreement algorithm based on PQC and ECDH, a ciphertext and a public key of the verification network element from the verification network element are received, where the ciphertext is generated by the verification network element based on the post-quantum cryptography algorithm. A second key is determined based on the public key of the verification network element and a first private key, where the first private key is a private key in a first ephemeral public-private key pair generated by the communication apparatus. The ciphertext and a third private key are input into the post-quantum cryptography algorithm to generate a third key, where the third private key is a private key in a third ephemeral public-private key pair generated by the communication apparatus based on the post-quantum cryptography algorithm. The first key is determined based on the second key and the third key.

According to the foregoing solution, the second key is determined based on the received public key of the verification network element and the private key in the first ephemeral public-private key pair generated by the communication apparatus, and the third key is determined based on the received ciphertext generated by the verification network element and the private key in the third ephemeral public-private key pair generated by the communication apparatus based on the post-quantum cryptography algorithm. The first key is determined based on the second key and the third key. This can improve security of the first key, thereby improving authentication security.

In some implementations of the third aspect, the first key agreement algorithm is the key agreement algorithm based on PQC and ECDHE. In the key agreement algorithm based on PQC and ECDHE, a ciphertext and a second public key from the verification network element are received, where the ciphertext is generated by the verification network element based on the post-quantum cryptography algorithm, and the second public key is a public key in a second ephemeral public-private key pair generated by the verification network element. A second key is determined based on the second public key and a first private key, where the first private key is a private key in a first ephemeral public-private key pair generated by the communication apparatus. The ciphertext and a third private key are input into the post-quantum cryptography algorithm to generate a third key, where the third private key is a private key in a third ephemeral public-private key pair generated by the communication apparatus based on the post-quantum cryptography algorithm. The first key is determined based on the second key and the third key.

According to the foregoing solution, the second key is determined based on the received public key in the second ephemeral public-private key pair generated by the verification network element and the private key in the first ephemeral public-private key pair generated by the communication apparatus, and the third key is determined based on the received ciphertext generated by the verification network element and the private key in the third ephemeral public-private key pair generated by the communication apparatus based on the post-quantum cryptography algorithm. The first key is determined based on the second key and the third key. This can improve security of the first key, thereby improving authentication security.

In some implementations of the third aspect, a first public key and a third public key are sent to the verification network element, where the first public key is a public key in the first ephemeral public-private key pair, the third public key is a public key in the third ephemeral public-private key pair, and the first public key and the third public key are used by the verification network element to determine the first key.

In some implementations of the third aspect, a first digital signature from the verification network element is received, where the first digital signature is a signature on a first message using a private key of the verification network element, and the first message includes a message that has been exchanged between the verification network element and the communication apparatus. A certificate of the verification network element from the verification network element is received, where the certificate includes the public key of the verification network element. The first digital signature is verified based on the public key of the verification network element. For the message that has been exchanged between the verification network element and the communication apparatus, refer to the descriptions in the first aspect.

According to the foregoing solution, the certificate of the verification network element and the first digital signature are received, so that the communication apparatus performs authentication on the verification network element, a procedure in which the communication apparatus performs authentication on the verification network element is simplified, and signaling overheads can be reduced.

In some implementations of the third aspect, a request message is sent to the verification network element, where the request message is for requesting to access a network, the request message includes a first identifier encrypted by using the first key, there is a correspondence between the first identifier and authentication information of the communication apparatus, the authentication information includes first authentication information, and the first authentication information is for performing authentication on the communication apparatus.

According to the foregoing solution, the request message is sent to the authentication network element, so that the authentication network element obtains, based on the first identifier, authentication information needed by the communication apparatus and corresponding to the first identifier, and performs authentication on the communication apparatus based on the authentication information, so that flexibility of performing authentication on the communication apparatus can be improved.

In some implementations of the third aspect, before the request message is sent to the verification network element, third indication information is sent to the verification network element, where the third indication information indicates at least one authentication mode, and authentication information indicated by each of the at least one authentication mode is independent of each other. Fourth indication information from the verification network element is received, where the fourth indication information indicates a first authentication mode, the first authentication mode is one of the at least one authentication mode, and the first authentication mode corresponds to the first authentication information.

According to the foregoing solution, the verification network element and the communication apparatus may negotiate to determine an authentication mode, so that selection of the authentication mode is more flexible, to achieve applicability to more application scenarios. That is, the communication apparatus indicates the at least one authentication mode to the verification network element, and the verification network element determines the first authentication mode from the at least one authentication mode.

In some implementations of the third aspect, the authentication information includes any one of the following information: a credential of the communication apparatus and a cryptographic algorithm, where the credential of the communication apparatus includes a public key of the communication apparatus, and the cryptographic algorithm includes a signature algorithm applicable to the communication apparatus.

According to the foregoing solution, the first authentication mode is determined based on the third information, so that the first authentication mode is applicable to different credentials of the communication apparatus and cryptographic algorithms.

In some implementations of the third aspect, a type of a first identifier indicated by each of the at least one authentication mode is different, and the first identifier includes at least one of the following: a first-type identifier of the communication apparatus, a second-type identifier of the communication apparatus, a block identifier or a transaction identifier, and a pseudo identifier of the communication apparatus, where there is a first correspondence between the first-type identifier and a root key of the communication apparatus, there is a second correspondence between the second-type identifier and at least one credential of the communication apparatus, the block identifier or the transaction identifier is for obtaining the second correspondence stored on a blockchain, and there is a correspondence between the pseudo identifier and the second-type identifier.

According to the foregoing solution, the verification network element may obtain the authentication information of the communication apparatus based on different identifiers, so that the authentication process is applicable to a plurality of scenarios. For a scenario to which each type of identifier is applicable, refer to the descriptions in the first aspect.

In some implementations of the third aspect, the first authentication mode is determined based on second information and the third indication information, and the second information includes at least one of the following information: an issuer of the credential of the communication apparatus, a security level of the credential of the communication apparatus, and a cryptographic algorithm corresponding to the credential of the communication apparatus.

According to the foregoing solution, the verification network element may select at least one of the issuer of the credential of the communication apparatus, the security level of the credential of the communication apparatus, and the cryptographic algorithm corresponding to the credential of the communication apparatus that are used in the authentication process, so that the authentication process is more flexible.

In some implementations of the third aspect, a second digital signature is sent to the verification network element, where the second digital signature is a signature on a second message using a private key of the communication apparatus, the second message includes a message that has been exchanged between the communication apparatus and the verification network element, and the second digital signature is used by the verification network element to perform authentication on the communication apparatus. For the message that has been exchanged between the communication apparatus and the verification network element, refer to the descriptions in the first aspect.

According to the foregoing solution, the second digital signature is sent to the verification network element, so that the verification network element verifies, by using a first credential, the signature of the communication apparatus on the message that has been exchanged, to verify the communication apparatus; and verify the first credential by using a credential of an issuer of the first credential, to determine security of the first credential, thereby improving security of the authentication process.

According to a fourth aspect, a communication method is provided. The method may be performed by a communication apparatus, or may be performed by a component (for example, a chip or a circuit) of the communication apparatus. This is not limited. For ease of description, the following uses an example in which the method is performed by the communication apparatus for description.

The method includes: sending an ephemeral public key to a verification network element, where the ephemeral public key is a public key in an ephemeral public-private key pair generated by the communication apparatus, the ephemeral public key is for determining a first key, and the first key is used by the verification network element to perform authentication on the communication apparatus, where the first key is determined based on the ephemeral public key and a second private key, and the second private key is a private key of the verification network element or a private key in an ephemeral public-private key pair generated by the verification network element; or the first key is generated by inputting the ephemeral public key into a post-quantum cryptography algorithm.

According to the foregoing solution, the ephemeral public key is sent to the verification network element, so that the verification network element determines the first key based on the ephemeral public key, and performs authentication on the communication apparatus based on the first key, where the first key is determined based on the ephemeral public key of the communication apparatus and the private key of the verification network element or the private key in the ephemeral public-private key pair generated by the verification network element, or the first key is generated by inputting the ephemeral public key into the post-quantum cryptography algorithm, so that security of the first key is ensured, and security of performing authentication on the communication apparatus based on the first key is improved.

In some implementations of the fourth aspect, if the first key is determined based on the ephemeral public key of the communication apparatus and the private key in the ephemeral public-private key pair generated by the verification network element, the method further includes: receiving a second public key from the verification network element, where the second public key is a public key in the second ephemeral public-private key pair generated by the verification network element; and determining the first key based on a first private key and the second public key, where the first public key is a private key in the first ephemeral public-private key pair.

According to the foregoing solution, the communication apparatus may determine the first key based on an ephemeral public key generated by the verification network element. This improves the security of the first key, so that the authentication security can be improved.

In some implementations of the fourth aspect, the ephemeral public key is a third public key, the third public key is a public key in a third ephemeral public-private key pair generated by the communication apparatus based on the post-quantum cryptography algorithm, and the first key is generated by inputting the third public key into the post-quantum cryptography algorithm.

According to the foregoing solution, the ephemeral public key of the communication apparatus is input into the post-quantum cryptography algorithm to obtain the first key. This can improve the security of the first key, thereby improving the authentication security.

In some implementations of the fourth aspect, the method further includes: receiving a ciphertext from the verification network element, where the ciphertext is generated by inputting the third public key into the post-quantum cryptography algorithm; and inputting the ciphertext and a third private key into the post-quantum cryptography algorithm to generate the first key, where the third private key is a private key in the third ephemeral public-private key pair.

According to the foregoing solution, the ciphertext is sent to the communication apparatus, and the ciphertext and the third private key are input into the post-quantum cryptography algorithm to generate the first key. This can improve the security of the first key, thereby improving the authentication security.

In some implementations of the fourth aspect, the ephemeral public key includes a first public key and a third public key, the first public key is a public key in a first ephemeral public-private key pair generated by the communication apparatus, the third public key is a public key in a third ephemeral public-private key pair generated by the communication apparatus based on the post-quantum cryptography algorithm, and the first key is determined based on a second key and a third key, where the second key is determined based on the second private key and the first public key, and the third key is generated by inputting the third public key into the post-quantum cryptography algorithm.

According to the foregoing solution, the first key is generated based on the second key and the third key. This can improve the security of the first key, thereby improving the authentication security.

In some implementations of the fourth aspect, a ciphertext and a second public key from the verification network element are received, where the second public key includes a public key of the verification network element or a public key in the ephemeral public-private key pair generated by the verification network element, and the ciphertext is generated by inputting the third public key into the post-quantum cryptography algorithm. The second key is generated based on a first private key and the second public key, where the first private key is a private key in the first public-private key pair. The ciphertext and a third private key are input into the post-quantum cryptography algorithm to generate the third key, where the third private key is a private key in the third public-private key pair. The first key is determined based on the second key and the third key.

According to the foregoing solution, the second key is determined based on the received public key of the verification network element or public key in the ephemeral public-private key pair generated by the verification network element and the private key in the first ephemeral public-private key pair generated by the communication apparatus, and the third key is determined based on the received ciphertext generated by the verification network element and the private key in the third ephemeral public-private key pair generated by the communication apparatus based on the post-quantum cryptography algorithm. The first key is determined based on the second key and the third key. This can improve the security of the first key, thereby improving the authentication security.

In some implementations of the fourth aspect, the ephemeral public key is sent based on second indication information, the second indication information indicates a first key agreement algorithm, the first key agreement algorithm is one of at least one key agreement algorithm, and before the receiving the ephemeral public key from the communication apparatus, first indication information is sent to the verification network element, where the first indication information indicates the at least one key agreement algorithm. The second indication information from the verification network element is received.

According to the foregoing solution, the verification network element and the communication apparatus may negotiate to determine a key agreement algorithm in an authentication process, so that selection of the key agreement algorithm in the authentication procedure is more flexible, to achieve applicability to more application scenarios.

In some implementations of the fourth aspect, the first key agreement algorithm is determined based on first information and the first indication information, and the first information includes at least one of the following information: a security level corresponding to a key agreement algorithm, computational complexity of the key agreement algorithm, a network standard, a type of the communication apparatus, and a computing capability of the communication apparatus.

For the at least one key agreement algorithm, refer to the descriptions in the first aspect.

In some implementations of the fourth aspect, the method further includes: receiving a first digital signature from the verification network element, where the first digital signature is a signature on a first message using the private key of the verification network element, and the first message includes a message that has been exchanged between the verification network element and the communication apparatus; receiving a certificate of the verification network element from the verification network element, where the certificate includes the public key of the verification network element; and verifying the first digital signature based on the public key of the verification network element. For the message that has been exchanged between the verification network element and the communication apparatus, refer to the descriptions in the first aspect.

According to the foregoing solution, the first digital signature and the certificate of the verification network element from the verification network element are received, so that the communication apparatus verifies the first digital signature based on the certificate of the verification network element, to verify the verification network element. This authentication mode simplifies the authentication procedure, so that signaling overheads can be reduced.

In some implementations of the fourth aspect, a request message is sent to the verification network element, where the request message is for requesting to access a network, the request message includes a first identifier encrypted by the communication apparatus by using the first key, there is a correspondence between the first identifier and authentication information of the communication apparatus, the authentication information includes first authentication information, and the first authentication information is for performing authentication on the communication apparatus.

According to the foregoing solution, the request message is sent to the verification network element, so that the authentication network element obtains, based on the first identifier, authentication information needed by the communication apparatus and corresponding to the first identifier, and performs authentication on the communication apparatus based on the authentication information, so that flexibility of performing authentication on the communication apparatus can be improved.

In some implementations of the fourth aspect, before the request message is sent to the verification network element, third indication information is sent to the verification network element, where the third indication information indicates at least one authentication mode, and authentication information corresponding to each of the at least one authentication mode is independent of each other. Fourth indication information from the verification network element is received, where the fourth indication information indicates a first authentication mode, the first authentication mode is one of the at least one authentication mode, and the first authentication mode corresponds to the first authentication information.

According to the foregoing solution, the verification network element and the communication apparatus may negotiate to determine an authentication mode, so that selection of the authentication mode is more flexible, to achieve applicability to more application scenarios. That is, the communication apparatus indicates the at least one authentication mode to the verification network element, and the verification network element determines the first authentication mode from the at least one authentication mode.

In some implementations of the fourth aspect, the authentication information indicates any one of the following information: a credential of the communication apparatus and a cryptographic algorithm, where the credential of the communication apparatus includes a public key of the communication apparatus, and the cryptographic algorithm includes a signature algorithm applicable to the communication apparatus.

According to the foregoing solution, the first authentication mode is determined based on the third information, so that the first authentication mode is applicable to different credentials of the communication apparatus and/or cryptographic algorithms.

In some implementations of the fourth aspect, a type of a first identifier indicated by each of the at least one authentication mode is different, and the first identifier includes at least one of the following: a first-type identifier of the communication apparatus, a second-type identifier of the communication apparatus, a block identifier or a transaction identifier, and a pseudo identifier of the communication apparatus, where there is a first correspondence between the first-type identifier and a root key of the communication apparatus, there is a second correspondence between the second-type identifier and at least one credential of the communication apparatus, the block identifier or the transaction identifier is for obtaining the second correspondence stored on a blockchain, and there is a correspondence between the pseudo identifier and the second-type identifier.

According to the foregoing solution, the authentication information of the communication apparatus may be obtained based on different identifiers, so that the authentication process is applicable to a plurality of scenarios. For scenarios to which different types of identifiers are applicable, refer to the descriptions in the first aspect.

In some implementations of the fourth aspect, the first authentication mode is determined based on second information and the third indication information, and the second information includes at least one of the following information: an issuer of the credential of the communication apparatus, a security level of the credential of the communication apparatus, and a cryptographic algorithm corresponding to the credential of the communication apparatus.

In some implementations of the fourth aspect, a second digital signature is sent to the verification network element, where the second digital signature is a signature on a second message using a private key of the communication apparatus, the second message includes a message that has been exchanged between the communication apparatus and the verification network element, and the second digital signature is used by the verification network element to perform authentication on the communication apparatus. For the message that has been exchanged between the communication apparatus and the verification network element, refer to the descriptions in the first aspect.

According to the foregoing solution, the second digital signature is sent to the verification network element, so that the verification network element verifies, by using a first credential, the signature of the communication apparatus on the message that has been exchanged, to verify the communication apparatus; and verify the first credential by using a credential of an issuer of the first credential, to determine security of the first credential, thereby improving security of the authentication process.

According to a fifth aspect, a communication apparatus is provided. The communication apparatus may be used in the verification network element in the first aspect. The communication apparatus may be a verification network element, may be an apparatus (for example, a chip, a chip system, or a circuit) in the verification network element, may be an apparatus that can be used in conjunction with the verification network element, or may be a logical module or software that can implement all or some functions of the verification network element.

In a possible implementation, the communication apparatus may include modules or units that are in one-to-one correspondence with the methods/operations/steps/actions described in the first aspect. The module or unit may be a hardware circuit, may be software, or may be implemented by a combination of the hardware circuit and the software.

In a possible implementation, the apparatus includes a transceiver unit, where the transceiver unit is configured to: receive first indication information from a communication apparatus, where the first indication information indicates at least one key agreement algorithm; and send second indication information to the communication apparatus, where the second indication information indicates a first key agreement algorithm, the first key agreement algorithm is one of the at least one key agreement algorithm, the first key agreement algorithm is for determining a first key, and the first key is for encrypting or decrypting a message transmitted between the communication apparatus and the apparatus.

In some implementations of the fifth aspect, the first key agreement algorithm is determined based on first information and the first indication information. For the first information, refer to the descriptions in the first aspect.

In some implementations of the fifth aspect, for the at least one key agreement algorithm, refer to the descriptions in the first aspect.

In some implementations of the fifth aspect, the apparatus further includes a processing unit, where the processing unit is configured to determine the first key based on the first key agreement algorithm.

In some implementations of the fifth aspect, the first key agreement algorithm is the ECDHE key agreement algorithm. In the ECDHE key agreement algorithm, the transceiver unit is specifically configured to receive a first public key from the communication apparatus, where the first public key is a public key in a first ephemeral public-private key pair generated by the communication apparatus. The processing unit is specifically configured to determine the first key based on the first public key and a second private key, where the second private key is a private key in a second ephemeral public-private key pair generated by the apparatus.

In some implementations of the fifth aspect, the transceiver unit is further configured to send a second public key to the communication apparatus, where the second public key is a public key in the second ephemeral public-private key pair. The second public key is sent to the communication apparatus, so that the communication apparatus determines the first key based on the second public key.

In some implementations of the fifth aspect, the first key agreement algorithm is the key agreement algorithm based on PQC. In the key agreement algorithm based on PQC, the transceiver unit is specifically configured to receive a third public key from the communication apparatus, where the third public key is a public key in a third ephemeral public-private key pair generated by the communication apparatus based on the post-quantum cryptography algorithm. The processing unit is specifically configured to input the third public key into the post-quantum cryptography algorithm to generate a ciphertext and the first key.

In some implementations of the fifth aspect, the transceiver unit is further configured to send the ciphertext to the communication apparatus. The ciphertext is sent to the communication apparatus, so that the communication apparatus determines the first key based on the ciphertext.

In some implementations of the fifth aspect, the first key agreement algorithm is the key agreement algorithm based on PQC and ECDH. In the key agreement algorithm based on PQC and ECDH, the transceiver unit is specifically configured to receive a first public key and a third public key from the communication apparatus, where the first public key is a public key in a first ephemeral public-private key pair generated by the communication apparatus, and the third public key is a public key in a third ephemeral public-private key pair generated by the communication apparatus based on the post-quantum cryptography algorithm. The processing unit is specifically configured to: determine a second key based on the first public key and a private key of the apparatus, and input the third public key into the post-quantum cryptography algorithm to generate a ciphertext and a third key. The processing unit is further configured to determine the first key based on the second key and the third key.

In some implementations of the fifth aspect, the transceiver unit is further configured to send a public key of the apparatus and the ciphertext to the communication apparatus, where the public key of the apparatus and the ciphertext are used by the communication apparatus to determine the first key.

In some implementations of the fifth aspect, the first key agreement algorithm is the key agreement algorithm based on PQC and ECDHE. In the key agreement algorithm based on PQC and ECDHE, the transceiver unit is specifically configured to receive a first public key and a third public key from the communication apparatus, where the first public key is a public key in a first ephemeral public-private key pair generated by the communication apparatus, and the third public key is a public key in a third ephemeral public-private key pair generated by the communication apparatus based on the post-quantum cryptography algorithm. The processing unit is specifically configured to: determine a second key based on the first public key and a second private key, where the second private key is a private key in a second ephemeral public-private key pair generated by the apparatus; and input the third public key into the post-quantum cryptography algorithm to generate a ciphertext and a third key. The processing unit is further configured to determine the first key based on the second key and the third key.

In some implementations of the fifth aspect, the transceiver unit is further configured to send a second public key and the ciphertext to the communication apparatus, where the second public key is a public key in the second ephemeral public-private key pair. The second public key and the ciphertext are sent to the communication apparatus, so that the communication apparatus determines the first key based on the second public key and the ciphertext.

In some implementations of the fifth aspect, the transceiver unit is further configured to: send a first digital signature to the communication apparatus, where the first digital signature is a signature on a first message using the private key of the apparatus, and the first message includes a message that has been exchanged between the apparatus and the communication apparatus; and send a certificate of the apparatus to the communication apparatus, where the certificate includes the public key of the apparatus, and the public key of the apparatus is used by the communication apparatus to verify the first digital signature.

In some implementations of the fifth aspect, the transceiver unit is further configured to receive a request message from the communication apparatus, where the request message is for requesting to access a network, the request message includes a first identifier encrypted by using the first key, and there is a correspondence between the first identifier and authentication information of the communication apparatus; and obtain first authentication information in the authentication information based on the first identifier. The processing unit is further configured to perform authentication on the communication apparatus based on the first authentication information.

In some implementations of the fifth aspect, before the receiving the request message from the communication apparatus, the transceiver unit is further configured to receive third indication information from the communication apparatus, where the third indication information indicates at least one authentication mode, and third information indicated by each of the at least one authentication mode is different. The transceiver unit is further configured to send fourth indication information to the communication apparatus, where the fourth indication information indicates a first authentication mode, the first authentication mode is one of the at least one authentication mode, and the first authentication mode corresponds to the first authentication information.

In some implementations of the fifth aspect, for the authentication information, refer to the descriptions in the first aspect.

In some implementations of the fifth aspect, a type of a first identifier indicated by each of the at least one authentication mode is different. For the first identifier, refer to the descriptions in the first aspect.

In some implementations of the fifth aspect, the first authentication mode is determined based on second information and the third indication information. For the second information, refer to the descriptions in the first aspect.

In some implementations of the fifth aspect, the first authentication information includes a first credential of the communication apparatus. The first credential is verified based on a credential of an issuer of the first credential. The transceiver unit is further configured to receive a second digital signature from the communication apparatus, where the second digital signature is a signature on a second message using a private key of the communication apparatus, and the second message includes a message that has been exchanged between the communication apparatus and the apparatus. The processing unit is further configured to verify the second digital signature based on a public key corresponding to the first credential.

According to a sixth aspect, a communication apparatus is provided. The communication apparatus may be used in the verification network element in the second aspect. The communication apparatus may be a verification network element, may be an apparatus (for example, a chip, a chip system, or a circuit) in the verification network element, may be an apparatus that can be used in conjunction with the verification network element, or may be a logical module or software that can implement all or some functions of the verification network element.

In a possible implementation, the communication apparatus may include modules or units that are in one-to-one correspondence with the methods/operations/steps/actions described in the second aspect. The module or unit may be a hardware circuit, may be software, or may be implemented by a combination of the hardware circuit and the software.

In a possible implementation, the apparatus includes a transceiver unit and a processing unit. The transceiver unit is configured to receive an ephemeral public key from a first communication apparatus, where the ephemeral public key is a public key in an ephemeral public-private key pair generated by the first communication apparatus. The processing unit is configured to perform authentication on the first communication apparatus based on a first key, where the first key is determined based on the ephemeral public key and a second private key, and the second private key is a private key of the verification network element or a private key in an ephemeral public-private key pair generated by the verification network element; or the first key is generated by inputting the ephemeral public key into a post-quantum cryptography algorithm.

In some implementations of the sixth aspect, if the first key is determined based on the ephemeral public key and the second private key, and the second private key is the private key in the ephemeral public-private key pair generated by the verification network element, the transceiver unit is further configured to send a second public key to the first communication apparatus, where the second public key includes a public key in the ephemeral public-private key pair generated by the verification network element, and the second public key is used by the first communication apparatus to determine the first key.

In some implementations of the sixth aspect, the ephemeral public key is a third public key, the third public key is a public key in a third ephemeral public-private key pair generated by the first communication apparatus based on the post-quantum cryptography algorithm, and the first key is generated by inputting the third public key into the post-quantum cryptography algorithm.

In some implementations of the sixth aspect, the transceiver unit is further configured to send a ciphertext to the first communication apparatus, where the ciphertext is generated by inputting the third public key into the post-quantum cryptography algorithm, and the ciphertext is used by the first communication apparatus to determine the first key.

In some implementations of the sixth aspect, the ephemeral public key includes a first public key and a third public key, the first public key is a public key in a first ephemeral public-private key pair generated by the first communication apparatus, the third public key is a public key in a third ephemeral public-private key pair generated by the first communication apparatus based on the post-quantum cryptography algorithm, and the first key is determined based on a second key and a third key, where the second key is determined based on the second private key and the first public key, and the third key is generated by inputting the third public key into the post-quantum cryptography algorithm.

In some implementations of the sixth aspect, the transceiver unit is further configured to send a ciphertext and a second public key to the first communication apparatus, where the second public key includes a public key of the verification network element or a public key in the ephemeral public-private key pair generated by the verification network element, the ciphertext is generated by inputting the third public key into the post-quantum cryptography algorithm, and the ciphertext and the second public key are used by the first communication apparatus to determine the first key.

In some implementations of the sixth aspect, the ephemeral public key is sent based on second indication information, the second indication information indicates a first key agreement algorithm, the first key agreement algorithm is one of at least one key agreement algorithm, and before the receiving the ephemeral public key from the first communication apparatus, the transceiver unit is further configured to receive first indication information from the first communication apparatus, where the first indication information indicates the at least one key agreement algorithm. The transceiver unit is further configured to send the second indication information to the first communication apparatus.

In some implementations of the sixth aspect, the first key agreement algorithm is determined based on first information and the first indication information. For the first information, refer to the descriptions in the second aspect.

For the at least one key agreement algorithm, refer to the descriptions in the first aspect.

In some implementations of the sixth aspect, the transceiver unit is further configured to: send a first digital signature to the first communication apparatus, where the first digital signature is a signature on a first message using the private key of the verification network element, and the first message includes a message that has been exchanged between the verification network element and the first communication apparatus; and send a certificate of the verification network element to the first communication apparatus, where the certificate includes the public key of the verification network element, and the public key of the verification network element is used by the first communication apparatus to verify the first digital signature.

In some implementations of the sixth aspect, the transceiver unit is further configured to receive a request message from the first communication apparatus, where the request message is for requesting to access a network, the request message includes a first identifier encrypted by the first communication apparatus by using the first key, and there is a correspondence between the first identifier and authentication information of the first communication apparatus. The processing unit is further configured to: decrypt the encrypted first identifier based on the first key, and obtain first authentication information in the authentication information based on the first identifier. The processing unit is further configured to perform authentication on the first communication apparatus based on the first authentication information.

In some implementations of the sixth aspect, before the receiving the request message from the first communication apparatus, the transceiver unit is further configured to receive third indication information from the first communication apparatus, where the third indication information indicates at least one authentication mode, and authentication information corresponding to each of the at least one authentication mode is independent of each other. The transceiver unit is further configured to send fourth indication information to the first communication apparatus, where the fourth indication information indicates a first authentication mode, the first authentication mode is one of the at least one authentication mode, and the first authentication mode corresponds to the first authentication information.

In some implementations of the sixth aspect, for the authentication information, refer to the descriptions in the second aspect.

In some implementations of the sixth aspect, a type of a first identifier indicated by each of the at least one authentication mode is different. For the first identifier, refer to the descriptions in the second aspect.

In some implementations of the sixth aspect, the first authentication mode is determined based on second information and the third indication information. For the second information, refer to the descriptions in the second aspect.

In some implementations of the sixth aspect, the first authentication information includes a first credential of the first communication apparatus. The first credential is verified based on a credential of an issuer of the first credential. The transceiver unit is further configured to receive a second digital signature from the first communication apparatus, where the second digital signature is a signature of the first communication apparatus on a second message, and the second message includes a message that has been exchanged between the first communication apparatus and the verification network element. The processing unit is further configured to verify the second digital signature based on a public key corresponding to the first credential.

According to a seventh aspect, a communication apparatus is provided. The communication apparatus may be used in the communication apparatus in the third aspect. The communication apparatus may be a terminal device, may be an apparatus (for example, a chip, a chip system, or a circuit) in the terminal device, may be an apparatus that can be used in conjunction with the terminal device, or may be a logical module or software that can implement all or some functions of the terminal device.

In a possible implementation, the communication apparatus may include modules or units that are in one-to-one correspondence with the methods/operations/steps/actions described in the third aspect. The module or unit may be a hardware circuit, may be software, or may be implemented by a combination of the hardware circuit and the software.

In a possible implementation, the apparatus includes a transceiver unit. The transceiver unit is configured to send first indication information to a verification network element, where the first indication information indicates at least one key agreement algorithm. The transceiver unit is further configured to receive second indication information from the verification network element, where the second indication information indicates a first key agreement algorithm, the first key agreement algorithm is one of the at least one key agreement algorithm, the first key agreement algorithm is for determining a first key, and the first key is for encrypting or decrypting a message transmitted between the communication apparatus and the verification network element.

In some implementations of the seventh aspect, the first key agreement algorithm is determined based on first information and the first indication information, and the first information includes at least one of the following information: a security level corresponding to a key agreement algorithm, computational complexity of the key agreement algorithm, a network standard, a type of the communication apparatus, and a computing capability of the communication apparatus.

For the at least one key agreement algorithm, refer to the descriptions in the first aspect.

In some implementations of the seventh aspect, the apparatus further includes a processing unit, where the processing unit is configured to determine the first key based on the first key agreement algorithm.

In some implementations of the seventh aspect, the first key agreement algorithm is the ECDHE key agreement algorithm. In the ECDHE key agreement algorithm, the transceiver unit is further configured to receive a second public key from the verification network element, where the second public key is a public key in a second ephemeral public-private key pair generated by the verification network element. The processing unit is specifically configured to determine the first key based on the second public key and a first private key, where the first private key is a private key in a first ephemeral public-private key pair generated by the communication apparatus.

In some implementations of the seventh aspect, the transceiver unit is further configured to send a first public key to the verification network element, where the first public key is a public key in a first ephemeral public-private key pair, and the first public key is used by the verification network element to determine the first key.

In some implementations of the seventh aspect, the first key agreement algorithm is the key agreement algorithm based on PQC. In the key agreement algorithm based on PQC, the transceiver unit is further configured to receive a ciphertext from the verification network element, where the ciphertext is generated by the verification network element based on the post-quantum cryptography algorithm. The processing unit is further configured to input the ciphertext and a third private key into the post-quantum cryptography algorithm to generate the first key, where the third private key is a private key in a third ephemeral public-private key pair generated by the communication apparatus based on the post-quantum cryptography algorithm.

In some implementations of the seventh aspect, the transceiver unit is further configured to send a third public key to the verification network element, where the third public key is a public key in the third ephemeral public-private key pair, and the third public key is used by the verification network element to determine the first key.

In some implementations of the seventh aspect, the first key agreement algorithm is the key agreement algorithm based on PQC and ECDH. In the key agreement algorithm based on PQC and ECDH, the transceiver unit is further configured to receive a ciphertext and a public key of the verification network element from the verification network element, where the ciphertext is generated by the verification network element based on the post-quantum cryptography algorithm. The processing unit is further configured to: determine a second key based on the public key of the verification network element and a first private key, where the first private key is a private key in a first ephemeral public-private key pair generated by the communication apparatus; and input the ciphertext and a third private key into the post-quantum cryptography algorithm to generate a third key, where the third private key is a private key in a third ephemeral public-private key pair generated by the communication apparatus based on the post-quantum cryptography algorithm. The processing unit is further configured to determine the first key based on the second key and the third key.

In some implementations of the seventh aspect, the first key agreement algorithm is the key agreement algorithm based on PQC and ECDHE. In the key agreement algorithm based on PQC and ECDHE, the transceiver unit is further configured to receive a ciphertext and a second public key from the verification network element, where the ciphertext is generated by the verification network element based on the post-quantum cryptography algorithm, and the second public key is a public key in a second ephemeral public-private key pair generated by the verification network element. The processing unit is further configured to determine a second key based on the second public key and a first private key, where the first private key is a private key in a first ephemeral public-private key pair generated by the communication apparatus. The processing unit is further configured to: input the ciphertext and a third private key into the post-quantum cryptography algorithm to generate a third key, where the third private key is a private key in a third ephemeral public-private key pair generated by the communication apparatus based on the post-quantum cryptography algorithm; and determine the first key based on the second key and the third key.

In some implementations of the seventh aspect, the transceiver unit is further configured to send a first public key and a third public key to the verification network element, where the first public key is a public key in the first ephemeral public-private key pair, the third public key is a public key in the third ephemeral public-private key pair, and the first public key and the third public key are used by the verification network element to determine the first key.

In some implementations of the seventh aspect, the transceiver unit is further configured to: receive a first digital signature from the verification network element, where the first digital signature is a signature on a first message using a private key of the verification network element, and the first message includes a message that has been exchanged between the verification network element and the communication apparatus; and receive a certificate of the verification network element from the verification network element, where the certificate includes the public key of the verification network element. The processing unit is further configured to verify the first digital signature based on the public key of the verification network element.

In some implementations of the seventh aspect, the transceiver unit is further configured to send a request message to the verification network element, where the request message is for requesting to access a network, the request message includes a first identifier encrypted by using the first key, there is a correspondence between the first identifier and authentication information of the communication apparatus, the authentication information includes first authentication information, and the first authentication information is for performing authentication on the communication apparatus.

In some implementations of the seventh aspect, before the sending the request message to the verification network element, the transceiver unit is further configured to send third indication information to the verification network element, where the third indication information indicates at least one authentication mode, and authentication information indicated by each of the at least one authentication mode is independent of each other; and receive fourth indication information from the verification network element, where the fourth indication information indicates a first authentication mode, the first authentication mode is one of the at least one authentication mode, and the first authentication mode corresponds to the first authentication information.

For the authentication information, refer to the descriptions in the third aspect.

In some implementations of the seventh aspect, a type of a first identifier indicated by each of the at least one authentication mode is different. For several types of the first identifier, refer to the descriptions in the third aspect.

In some implementations of the seventh aspect, the first authentication mode is determined based on second information and the third indication information. For the second information, refer to the descriptions in the third aspect.

In some implementations of the seventh aspect, the transceiver unit is further configured to send a second digital signature to the verification network element, where the second digital signature is a signature on a second message using a private key of the communication apparatus, the second message includes a message that has been exchanged between the communication apparatus and the verification network element, and the second digital signature is used by the verification network element to perform authentication on the communication apparatus.

According to an eighth aspect, a communication apparatus is provided. The communication apparatus may be used in the communication apparatus in the fourth aspect. The communication apparatus may be a terminal device, may be an apparatus (for example, a chip, a chip system, or a circuit) in the terminal device, may be an apparatus that can be used in conjunction with the terminal device, or may be a logical module or software that can implement all or some functions of the terminal device.

In a possible implementation, the communication apparatus may include modules or units that are in one-to-one correspondence with the methods/operations/steps/actions described in the fourth aspect. The module or unit may be a hardware circuit, may be software, or may be implemented by a combination of the hardware circuit and the software.

In a possible implementation, the apparatus includes a transceiver unit. The transceiver unit is configured to send an ephemeral public key to a verification network element, where the ephemeral public key is a public key in an ephemeral public-private key pair generated by the communication apparatus, the ephemeral public key is for determining a first key, and the first key is used by the verification network element to perform authentication on the communication apparatus, where the first key is determined based on the ephemeral public key and a second private key, and the second private key is a private key of the verification network element or a private key in an ephemeral public-private key pair generated by the verification network element; or the first key is generated by inputting the ephemeral public key into a post-quantum cryptography algorithm.

In some implementations of the eighth aspect, if the first key is determined based on the ephemeral public key of the communication apparatus and the private key in the ephemeral public-private key pair generated by the verification network element, the transceiver unit is further configured to receive a second public key from the verification network element, where the second public key is a public key in the second ephemeral public-private key pair generated by the verification network element. The apparatus further includes a processing unit, where the processing unit is configured to determine the first key based on a first private key and the second public key, where the first public key is a private key in the first ephemeral public-private key pair.

In some implementations of the eighth aspect, the ephemeral public key is a third public key, the third public key is a public key in a third ephemeral public-private key pair generated by the communication apparatus based on the post-quantum cryptography algorithm, and the first key is generated by inputting the third public key into the post-quantum cryptography algorithm.

In some implementations of the eighth aspect, the transceiver unit is further configured to receive a ciphertext from the verification network element, where the ciphertext is generated by inputting the third public key into the post-quantum cryptography algorithm. The processing unit is further configured to input the ciphertext and a third private key into the post-quantum cryptography algorithm to generate the first key, where the third private key is a private key in the third ephemeral public-private key pair.

In some implementations of the eighth aspect, the ephemeral public key includes a first public key and a third public key, the first public key is a public key in a first ephemeral public-private key pair generated by the communication apparatus, the third public key is a public key in a third ephemeral public-private key pair generated by the communication apparatus based on the post-quantum cryptography algorithm, and the first key is determined based on a second key and a third key, where the second key is determined based on the second private key and the first public key, and the third key is generated by inputting the third public key into the post-quantum cryptography algorithm.

In some implementations of the eighth aspect, the transceiver unit is further configured to receive a ciphertext and a second public key from the verification network element, where the second public key includes a public key of the verification network element or a public key in the ephemeral public-private key pair generated by the verification network element, and the ciphertext is generated by inputting the third public key into the post-quantum cryptography algorithm. The processing unit is further configured to: generate the second key based on a first private key and the second public key, where the first private key is a private key in the first public-private key pair; input the ciphertext and a third private key into the post-quantum cryptography algorithm to generate the third key, where the third private key is a private key in the third public-private key pair; and determine the first key based on the second key and the third key.

In some implementations of the eighth aspect, the ephemeral public key is sent based on second indication information, the second indication information indicates a first key agreement algorithm, the first key agreement algorithm is one of at least one key agreement algorithm, and before the receiving the ephemeral public key from the communication apparatus, the transceiver unit is further configured to: send first indication information to the verification network element, where the first indication information indicates the at least one key agreement algorithm; and receive the second indication information from the verification network element.

In some implementations of the eighth aspect, the first key agreement algorithm is determined based on first information and the first indication information. For the first information, refer to the descriptions in the fourth aspect.

For the at least one key agreement algorithm, refer to the descriptions in the first aspect.

In some implementations of the eighth aspect, the transceiver unit is further configured to: receive a first digital signature from the verification network element, where the first digital signature is a signature on a first message using the private key of the verification network element, and the first message includes a message that has been exchanged between the verification network element and the communication apparatus; and receive a certificate of the verification network element from the verification network element, where the certificate includes the public key of the verification network element. The processing unit is further configured to verify the first digital signature based on the public key of the verification network element.

In some implementations of the eighth aspect, the transceiver unit is further configured to send a request message to the verification network element, where the request message is for requesting to access a network, the request message includes a first identifier encrypted by the communication apparatus by using the first key, there is a correspondence between the first identifier and authentication information of the communication apparatus, the authentication information includes first authentication information, and the first authentication information is for performing authentication on the communication apparatus.

In some implementations of the eighth aspect, before the sending the request message to the verification network element, the transceiver unit is further configured to: send third indication information to the verification network element, where the third indication information indicates at least one authentication mode, and authentication information corresponding to each of the at least one authentication mode is independent of each other; and receive fourth indication information from the verification network element, where the fourth indication information indicates a first authentication mode, the first authentication mode is one of the at least one authentication mode, and the first authentication mode corresponds to the first authentication information.

For the authentication information, refer to the descriptions in the fourth aspect.

In some implementations of the eighth aspect, a type of a first identifier indicated by each of the at least one authentication mode is different. For several types of the first identifier, refer to the descriptions in the fourth aspect.

In some implementations of the eighth aspect, the first authentication mode is determined based on second information and the third indication information. For the second information, refer to the descriptions in the fourth aspect.

In some implementations of the eighth aspect, the transceiver unit is further configured to send a second digital signature to the verification network element, where the second digital signature is a signature on a second message using a private key of the communication apparatus, the second message includes a message that has been exchanged between the communication apparatus and the verification network element, and the second digital signature is used by the verification network element to perform authentication on the communication apparatus.

According to a ninth aspect, a communication apparatus is provided. The apparatus includes a processor. The processor is configured to cause, by executing a computer program (or computer-executable instructions) stored in a memory and/or by using a logic circuit, the apparatus to implement the method according to any one of the first aspect to the fourth aspect and the possible implementations of the first aspect to the fourth aspect.

Optionally, the apparatus further includes the memory. The memory and the processor may be separately deployed, or may be deployed in a centralized manner.

Optionally, the apparatus further includes a communication interface, and the processor is coupled to the communication interface. The communication interface may be a transceiver or an input/output interface.

In an implementation, the apparatus is a verification network element, or a chip configured in the verification network element, or may be a logical module or software that can implement all or some functions of the verification network element. When the apparatus is the chip, the communication interface may be an input/output interface, an interface circuit, an output circuit, an input circuit, a pin, a related circuit, or the like on the chip or a chip system. The processor may alternatively be embodied as a processing circuit or a logic circuit.

In another implementation, the apparatus is a terminal device, or a chip configured in the terminal device, or may be a logical module or software that can implement all or some functions of the terminal device. When the apparatus is the chip, the communication interface may be an input/output interface, an interface circuit, an output circuit, an input circuit, a pin, a related circuit, or the like on the chip or a chip system. The processor may alternatively be embodied as a processing circuit or a logic circuit.

Optionally, the transceiver may be a transceiver circuit. Optionally, the input/output interface may be an input/output circuit.

In a specific implementation process, the processor may be one or more chips, the input circuit may be an input pin, the output circuit may be an output pin, and the processing circuit may be a transistor, a gate circuit, a trigger, various logic circuits, and the like. An input signal received by the input circuit may be received and input by, but not limited to, a receiver, a signal output by the output circuit may be output to, but not limited to, a transmitter and transmitted by the transmitter. In addition, the input circuit and the output circuit may be a same circuit, and the circuit is used as the input circuit and the output circuit at different moments. Specific implementations of the processor and the various circuits are not limited in embodiments of this application.

According to a tenth aspect, a chip system is provided. A processor is configured to execute a computer program or instructions in a memory, so that the chip system implements the method according to any one of the first aspect to the fourth aspect and the possible implementations of the first aspect to the fourth aspect.

According to an eleventh aspect, a communication system is provided, and includes at least one of a verification network element and a terminal device. The verification network element is configured to perform the method according to any one of the first aspect, the second aspect, and the possible implementations of the first aspect and the second aspect. The terminal device is configured to perform the method according to any one of the third aspect, the fourth aspect, and the possible implementations of the third aspect and the fourth aspect.

According to a twelfth aspect, a computer-readable storage medium is provided. The computer-readable storage medium stores a computer program (which may also be referred to as code or instructions). When the computer program is run on a computer, the computer is caused to perform the method according to any one of the first aspect, the second aspect, and the possible implementations of the first aspect and the second aspect.

According to a thirteenth aspect, a computer program product is provided. The computer program product includes a computer program (which may also be referred to as code or instructions). When the computer program is run, a computer is caused to perform the method according to any one of the first aspect to the fourth aspect and the possible implementations of the first aspect to the fourth aspect.

For beneficial effects brought by the fifth aspect to the thirteenth aspect, refer to the descriptions of the beneficial effects in the first aspect to the fourth aspect. Details are not described herein again.

### BRIEF DESCRIPTION OF DRAWINGS

FIG. 1 is a diagram of a communication network architecture applicable to an embodiment of this application;
FIG. 2 is a diagram of an architecture of a communication system used in an embodiment of this application;
FIG. 3 is a schematic flowchart of an authentication process based on an EAP-AKA' architecture;
FIG. 4a and FIG. 4b are a schematic flowchart of a communication method 400 according to this application;
FIG. 5a to FIG. 5f are schematic flowcharts of key agreement methods according to this application;
FIG. 6 is a schematic flowchart of a communication method 600 according to this application;
FIG. 7 is a schematic block diagram of a communication apparatus 700 according to this application;
FIG. 8 is a schematic block diagram of a communication apparatus 800 according to this application; and
FIG. 9 is a schematic block diagram of a chip system 900 according to this application.

### DESCRIPTION OF EMBODIMENTS

The following describes technical solutions in this application with reference to accompanying drawings.

The technical solutions in embodiments of this application may be applied to various communication systems such as a long term evolution (long term evolution, LTE) system, an LTE frequency division duplex (frequency division duplex, FDD) system, an LTE time division duplex (time division duplex, TDD) system, a 5th generation (5th generation, 5G) system, and a system evolved after 5G like a 6th generation (6th generation, 6G) system.

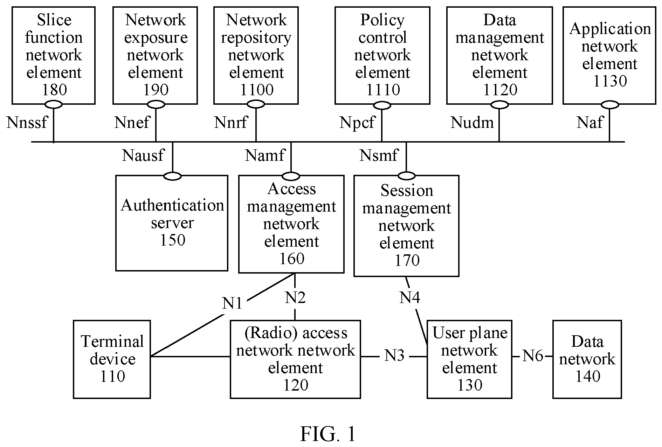

FIG. 1 is a diagram of a communication network architecture applicable to an embodiment of this application. As shown in FIG. 1, the following separately describes parts in the network architecture.

Terminal device (terminal equipment) 110: The terminal device in embodiments of this application may be a device that provides a user with voice and/or data connectivity, a handheld device having a wireless connection function, or another processing device connected to a wireless modem.

The terminal device may also be referred to as a terminal, an access terminal, a subscriber unit, user equipment (user equipment, UE), a subscriber station, a mobile station, a remote station, a remote terminal, a mobile device, a user terminal, a wireless communication device, a user agent, or a user apparatus. The terminal device is a device that includes a wireless communication function (providing the user with the voice/data connectivity), for example, a handheld device or a vehicle-mounted device having a wireless connection function. The terminal in embodiments of this application may be a mobile phone (mobile phone), a tablet computer (pad), a computer with a wireless transceiver function, a train, an airplane, a mobile internet device (mobile internet device, MID), a virtual reality (virtual reality, VR) terminal, an augmented reality (augmented reality, AR) terminal, a smart point of sale (point of sale, POS) machine, customer-premises equipment (customer-premises equipment, CPE), a light terminal device (light UE), reduced capability user equipment (reduced capability UE, REDCAP UE), a wireless terminal (for example, a robot) in industrial control (industrial control), a wireless terminal (for example, a vehicle-mounted device, an entire vehicle device, an in-vehicle module, a vehicle, an automotive chip, an on board unit (on board unit, OBU), or a telematics box (telematics box, T-BOX)) in an internet of vehicles, a wireless terminal in self driving (self driving), a wireless terminal in remote medical (remote medical), a wireless terminal in a smart grid (smart grid), a wireless terminal in transportation security (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a compute device or another processing device connected to a wireless modem, a wearable device, a terminal in a 5G network, a terminal in a network evolved after 5G, or the like. It may be understood that all or some functions of the terminal device in this application may alternatively be implemented by using a software function running on hardware, or may be implemented by using an instantiated virtualization function on a platform (for example, a cloud platform).

The wearable device may also be referred to as a wearable intelligent device, and is a general term of wearable devices, for example, glasses, gloves, watches, clothes, and shoes, that are developed by applying wearable technologies to intelligent designs of daily wear. The wearable device is a portable device that is directly worn or integrated into clothes or an accessory of the user. The wearable device not only is a hardware device, but also implements a powerful function through software support, data exchange, and cloud interaction. In a broad sense, wearable intelligent devices include full-featured and large-size devices that can implement complete or partial functions without depending on smartphones, for example, smart watches or smart glasses, and devices that focus only on a specific type of application function and need to be used in conjunction with other devices such as smartphones, for example, various smart bands or smart jewelry for monitoring physical signs.

The terminal device in this application may further be a module or a unit configured to implement a function of the terminal, for example, a universal integrated circuit card (universal integrated circuit card, UICC). It should be understood that the UICC card is merely used as an example. During actual implementation, the UICC card may alternatively be replaced with a device with a function similar to that of the UICC card, for example, an embedded universal integrated circuit card (embedded universal integrated circuit card, eUICC). In addition, the UICC card may alternatively have another name, for example, a blockchain universal integrated circuit card (blockchain UICC, B-UICC). This is not limited in this application.

(Radio) access network ((radio) access network, (R)AN) node 120: is configured to provide a network access function for a terminal device in a specific area, and can use transmission tunnels with different quality based on a level of the terminal device, a service requirement, and the like. The RAN node can manage a radio resource, and provide an access service for the terminal device, to complete forwarding of a control signal and data of the terminal device between the terminal device and a core network.

In a possible scenario, the RAN node may be a base station (base station), an evolved NodeB (evolved NodeB, eNodeB), an access point (access point, AP), a transmission reception point (transmission reception point, TRP), a next generation NodeB (next generation NodeB, gNB), a base station in a 6G mobile communication system, a base station in a future mobile communication system, an access node in a Wi-Fi system, or the like. The RAN node may be a macro base station, a micro base station, an indoor base station, a relay node, or a donor node, or may be a radio controller in a cloud radio access network (cloud radio access network, CRAN) scenario. Optionally, the RAN node may alternatively be a server, a wearable device, a vehicle, a vehicle-mounted device, or the like. For example, an access network device in a V2X technology may be a road side unit (road side unit, RSU). All or some functions of the RAN node in this application may alternatively be implemented by using a software function running on hardware, or may be implemented by using an instantiated virtualization function on a platform (for example, a cloud platform). The RAN node in this application may alternatively be a logical node, a logical module, or software that can implement all or some functions of the RAN node.

In another possible scenario, a plurality of RAN nodes coordinate to assist the terminal in implementing radio access, and different RAN nodes separately implement some functions of the base station. For example, the RAN node may be a central unit (central unit, CU), a distributed unit (distributed unit, DU), a CU-control plane (control plane, CP), a CU-user plane (user plane, UP), or a radio unit (radio unit, RU). The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may alternatively have different names, but a person skilled in the art may understand meanings thereof. For example, in an open radio access network (open radio access network, O-RAN) system, the CU may also be referred to as an open central unit (open central unit, O-CU) (open CU), the DU may also be referred to as an open distributed unit (open distributed unit, O-DU) (open DU), the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of the software module and the hardware module.

User plane (user plane) network element 130: is for packet routing and forwarding, quality of service (quality of service, QoS) handling on user plane data, and the like.

In a 5G communication system, the user plane network element may be a user plane function (user plane function, UPF) network element. In a communication system evolved after 5G, the user plane network element may still be the UPF network element, or may have another name. This is not limited in this application.

Data network (data network, DN) 140: is a data network that provides a service for the user. Generally, a client is located in the UE, and a service end is located in the data network. The data network may be a private network, for example, a local area network; an external network that is not managed and controlled by an operator, for example, an internet; or a dedicated network jointly deployed by operators, for example, a network that provides an internet protocol (internet protocol, IP) multimedia subsystem (IP multimedia subsystem, IMS) service.

In the communication system evolved after 5G, the DN in the 5G communication system may still be used, or an entity with a similar function may be replaced with another name. This is not limited in this application.

Authentication server (authentication server) 150: is for an authentication service and key generation for bidirectional authentication on the terminal device, and supports a unified authentication framework.

In the 5G communication system, the authentication server may be an authentication server function (authentication server function, AUSF) network element. In the communication system evolved after 5G, the authentication server function network element may still be the AUSF network element, or may have another name. This is not limited in this application.

Access management (access management) network element 160: is mainly for mobility management, access management, and the like, for example, a function like access authorization/authentication.

In the 5G communication system, the access management network element may be an access and mobility management function (access and mobility management function, AMF) network element. In the communication system evolved after 5G, the access management network element may still be the AMF network element, or may have another name. This is not limited in this application.

Session management (session management) network element 170: is mainly for session management, assignment and management of an internet protocol (Internet protocol, IP) address of the terminal device, selection and control of a user plane function, termination of interfaces toward policy control and charging functions, downlink data notification, and the like.

In the 5G communication system, the session management network element may be a session management function (session management function, SMF) network element. In the communication system evolved after 5G, the session management network element may still be the SMF network element, or may have another name. This is not limited in this application.

Slice selection (slice selection) network element 180: is for selection of a group of network slice instances that serve the terminal device, and determining of a group of access management network elements that serve the terminal device.

In the 5G communication system, the network exposure network element may be a network slice selection function (network slice selection function, NSSF) network element. In the communication system evolved after 5G, the network exposure network element may still be the NSSF network element, or may have another name. This is not limited in this application.

Network exposure (network exposure) network element 190: is configured to expose a network capability to a third-party application, and can implement friendly interconnection between the network capability and a service requirement.

In the 5G communication system, the network exposure network element may be a network exposure function (network exposure function, NEF) network element. In the communication system evolved after 5G, the network exposure network element may still be the NEF network element, or may have another name. This is not limited in this application.

Network repository (network repository) network element 1100: is configured to maintain real-time information of all network function services in a network.

In the 5G communication system, the network repository network element may be a network repository function (network repository function, NRF) network element. In the communication system evolved after 5G, the network repository network element may still be the NRF network element, or may have another name. This is not limited in this application.

Policy control (policy control) network element 1110: is for governing a unified policy framework of network behavior, providing policy rule information for a control plane function network element (for example, the AMF or SMF network element), and so on.

In a 4G communication system, the policy control network element may be a policy and charging rules function (policy and charging rules function, PCRF) network element. In the 5G communication system, the policy control network element may be a policy control function (policy control function, PCF) network element. In the communication system evolved after 5G, the policy control network element may still be the PCF network element, or may have another name. This is not limited in this application.

Data management (data management) network element 1120: is for processing of a terminal device identifier, access authentication, registration, mobility management, and the like.

In the 5G communication system, the data management network element may be a unified data management (unified data management, UDM) network element. In the communication system evolved after 5G, the unified data management may still be the UDM network element, or may have another name. This is not limited in this application.

Application (application) network element 1130: is configured to perform application-affected data routing, access a network, interact with a policy framework to perform policy control, and so on.

In the 5G communication system, the application network element may be an application function (application function, AF) network element. In the communication system evolved after 5G, the application network element may still be the AF network element, or may have another name. This is not limited in this application.

The foregoing network architecture may further include an authentication credential repository and processing function (authentication credential repository and processing function, ARPF) network element, a security anchor function (security anchor function, SEAF) network element, and the like (not shown in the figure). The ARPF is mainly configured to: store a root key of the user and authentication-related subscription data, compute a 5G authentication vector, and so on. The SEAF is mainly configured to: derive lower-layer non-access stratum (non-access stratum, NAS) and access stratum (access stratum, AS) keys based on an anchor key, and compare authentication results.

In the foregoing network architecture, N1, N2, N3, N4, N6, Nnssf, Nnef, Nnrf, Npcf, Nudm, Naf, Nausf, Namf, and Nsmf are interface serial numbers. For meanings of the interface serial numbers, refer to meanings defined in the 3GPP standard protocol. The meanings of the interface serial numbers are not limited in this application.

For example, the N2 interface is an interface between the RAN and the access management network element, and is configured to send a radio parameter, NAS signaling, and the like. The N3 interface is an interface between the RAN and the user plane function network element, and is for transmission of user plane data and the like. The N4 interface is an interface between the session management function network element and the user plane function network element, and is for transmission of information such as a service policy, tunnel identification information of an N3 connection, data buffer indication information, and a downlink data notification message. The N6 interface is an interface between the DN and the user plane function network element, and is for transmission of user plane data and the like.

Nnssf, Nnef, Nnrf, Npcf, Nudm, Naf, Nausf, Namf, and Nsmf are service-oriented interfaces. The network elements may exchange information with each other through the service-oriented interfaces.

It should be noted that names of interfaces between the network functions in the figure are merely examples. During specific implementation, the interface names of the system architecture may alternatively be other names. This is not limited in this application. In addition, names of messages (or signaling) transmitted between the foregoing network elements are merely examples, and do not constitute any limitation on functions of the messages.

It should be understood that the foregoing network architecture applied to embodiments of this application is merely an example of a network architecture described from a perspective of a conventional point-to-point architecture and a service-based architecture, a network architecture applicable to embodiments of this application is not limited thereto, and any network architecture that can implement functions of the foregoing network elements is applicable to embodiments of this application.

It should be noted that names of the network elements and the interfaces in this application are merely examples. This application does not exclude a case in which the network elements have other names and the functions of the network elements are combined in the future. With evolution of a communication system, any device or network element that can implement the functions of the foregoing network elements falls within the protection scope of this application.

It may be understood that, the foregoing network elements or functions may be network elements in a hardware device, software functions running on dedicated hardware, or an instantiated virtualization function on a platform (for example, a cloud platform). One or more services may be obtained through division of the foregoing network elements or functions. Further, a service that exists independently of a network function may occur.

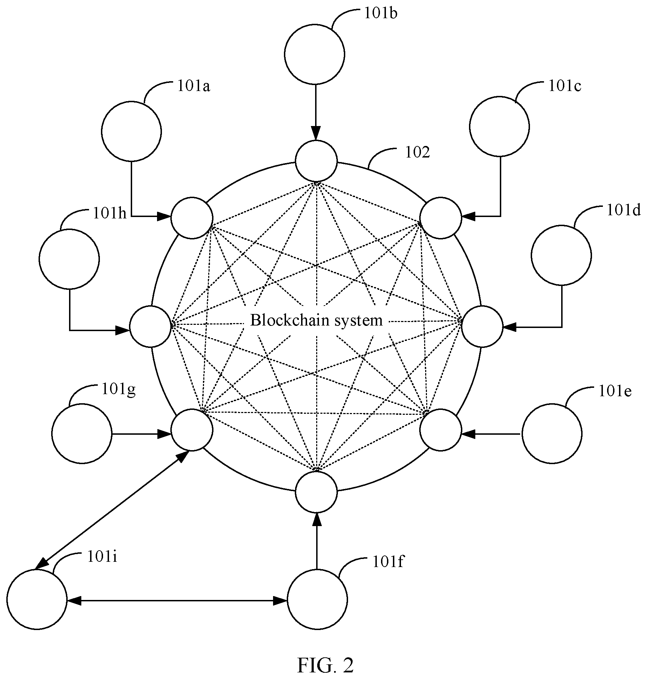

FIG. 2 is a diagram of an architecture of a communication system used in an embodiment of this application.

As shown in FIG. 2, the communication system includes at least one node (nodes 101a to 101i) and a storage system 102.

The storage system 102 may include one or more storage nodes.

The storage system 102 may include one or more of the following: a blockchain system, a distributed storage system, or a communication system.

The blockchain system may include one or more blockchain nodes. That is, a storage node corresponding to the blockchain system may be the blockchain node. The distributed storage system may include one or more distributed storage devices. That is, a storage node corresponding to the distributed storage system may be the distributed storage device. The communication system may include a communication device corresponding to an operator. That is, a storage node corresponding to the communication system may be the communication device corresponding to the operator.

It should be understood that the blockchain node, the storage device in the distributed storage system, and the communication device may be terminal devices or network devices.

Each of the at least one node (the nodes 101a to 101i) may exchange information with the storage system 102. Optionally, if the at least one node includes a plurality of nodes, information may be directly exchanged between nodes in the plurality of nodes. A node in the at least one node (the nodes 101a to 101i) may include a terminal device and/or a network device. The terminal device may be a device corresponding to a user. The network device may be a device corresponding to a card manufacturer or a terminal manufacturer, a device corresponding to a trusted third party, an over-the-air card writing server, a device corresponding to the operator, or a device corresponding to an authoritative organization. The terminal manufacturer may also be referred to as a device manufacturer, a device provider, or the like.

The device corresponding to the card manufacturer or the terminal manufacturer may be a device configured to implement a service of the card manufacturer or the terminal manufacturer, for example, a card writing device of the card manufacturer or the terminal manufacturer. The device corresponding to the operator is a device configured to provide a service of the operator, for example, a server of the operator, a core network element of the operator, or an access network device. The device corresponding to the authoritative organization is a device that may be configured to provide a service of the authoritative organization, for example, a server or a host of the authoritative organization. The device corresponding to the trusted third party is a device that may be configured to provide a service of a trusted third-party organization, for example, a server or a host of the trusted third-party organization.

It may be understood that the card manufacturer, the terminal manufacturer, the trusted third party, the operator, or the authoritative organization is used as an example. During actual implementation, another organization or institution may further exist.

For ease of understanding of the technical solutions in embodiments of this application, some terms or concepts that may be used in embodiments of this application are first briefly described.

### 1. Key

The key is a parameter that is input in an algorithm for converting a plaintext into a ciphertext or converting the ciphertext into the plaintext.

### 2. Public key and private key

The public key and the private key are a key pair (namely, one public key and one private key) obtained by using an algorithm. One is public and is referred to as the public key, and the other is reserved and is referred to as the private key. The key pair obtained by using the algorithm can ensure worldwide uniqueness. When this key pair is used, if one of the keys is used to encrypt a segment of data, the other key needs to be used for decryption. For example, if the public key in the key pair is used to encrypt the data, the private key in the key pair needs to be used for decryption, and vice versa. If the public key in the key pair is used to encrypt the data but the private key in the key pair is not used for decryption, or if the private key in the key pair is used to encrypt the data but the public key in the key pair is not used for decryption, the decryption will fail.

### 3. Blockchain (blockchain, BC)

Transactions in a network are generated and stored in blocks, and are linked to a chained structure in a chronological order. Confirmed and proven transactions in the network are linked from a start block to a latest block of the blockchain, and a ledger formed by linking a plurality of blocks is referred to as the blockchain.

A blockchain technology implements a chained data structure formed by sequentially linking data and information blocks in the chronological order, and implements cryptographically guaranteed tamper-proof and unforgeable distributed storage. Generally, data and information in the blockchain may be referred to as "transactions (Transactions)".

The blockchain technology is not a single technology, but a system that integrates application of peer-to-peer transmission, a consensus mechanism, distributed data storage, and a cryptography principle. The system has technical features of being fully public and tamper-proof.
(1) Peer-to-peer transmission: Nodes participating in the blockchain are independent and peer-to-peer, and synchronization of data and information is implemented between the nodes by using a peer-to-peer transmission technology. The nodes may be different physical machines, or may be different instances on cloud.
(2) Consensus mechanism: The consensus mechanism in the blockchain is a process in which participating nodes from a plurality of parties reach an agreement on specific data and information through interaction between the nodes according to a preset logical rule. The consensus mechanism needs to depend on a well-designed algorithm. Therefore, different consensus mechanisms have different performance (for example, transaction throughputs in transactions per second (transactions per second, TPS), delays in reaching a consensus, consumed compute resources, and consumed transmission resources).
(3) Distributed data storage: The distributed storage in the blockchain means that the nodes participating in the blockchain each have independent and complete data, ensuring that the data storage is fully public among the nodes. Different from conventional distributed data storage in which data is divided into a plurality of copies for backup or synchronous storage according to a specific rule, the distributed data storage in the blockchain implements highly consistent data storage based on a consensus between the peer-to-peer and independent nodes in the blockchain.
(4) Cryptography principle: The blockchain usually implements trusted information dissemination, verification, and the like based on an asymmetric encryption technology.

A concept of a "block" is to organize one or more data records in a form of the "block", and a size of the "block" may be customized based on an actual application scenario. A "chain" is a data structure, and "blocks" that store data records are connected in the data structure in the chronological order by using a hash technology. In the blockchain, each "block" includes two parts: a "block header" and a "block body". The "block body" includes transaction records packed into the "block". The "block header" includes a root hash of all transactions in the "block" and a hash in a previous "block". The data structure in the blockchain ensures that data stored on the blockchain has a feature of being tamper-proof.

### 4. Information/Data on-chain

Information/Data on-chain means that information/data is packed into a block by using the consensus mechanism to become a new block, and is linked to a previous block to become tamper-proof information/data on the chain.

### 5. Smart contract

The smart contract is a computer protocol intended to disseminate, verify, or execute a contract in an informatization manner. All users on the blockchain can view a blockchain-based smart contract. However, this causes all vulnerabilities, including a security vulnerability, to be visible and possibly be incapable of being remediated quickly.

The smart contract in the blockchain field has the following features:
Rules are open and transparent, and the rules and data in the contract are visible to the outside. All transactions are publicly visible, and no false or hidden transactions exist.

The blockchain technology has features of being "open and transparent" and "tamper-proof", which are given to the blockchain by the smart contract. The smart contract allows trusted transactions to be performed without a third party. These transactions are queryable and irreversible. The smart contract is based on tamper-proof data, and can automatically execute some predefined rules and clauses.

### 6. Self-controlled identity (self-controlled identity, scID)

The scID may identify identity information of a first node (for example, any one of the nodes 101a to 101i). The scID may be a decentralized root credential (decentralized root credential, DRC), or a decentralized identity credential (decentralized identity credential, DIC), or a decentralized self-controlled credential (decentralized self-controlled credential, DSCC). The scID may be generated by the first node or a node other than the first node. For example, if the scID is the DRC, the DRC may be generated by a trusted node other than the first node; or if the scID is the DIC or the DSCC, the DSCC may be generated by the first node.

The scID may correspond to different service scenarios. For example, in a scenario of a service that has a higher requirement for confidentiality of personal information, the scID may be the DRC. That is, the DRC may be used to complete the service. For another example, in a scenario in which a trust requirement for the first node is lower, the SID may be the DIC or the DSCC. That is, the DIC or the DSCC may be used to complete a service.

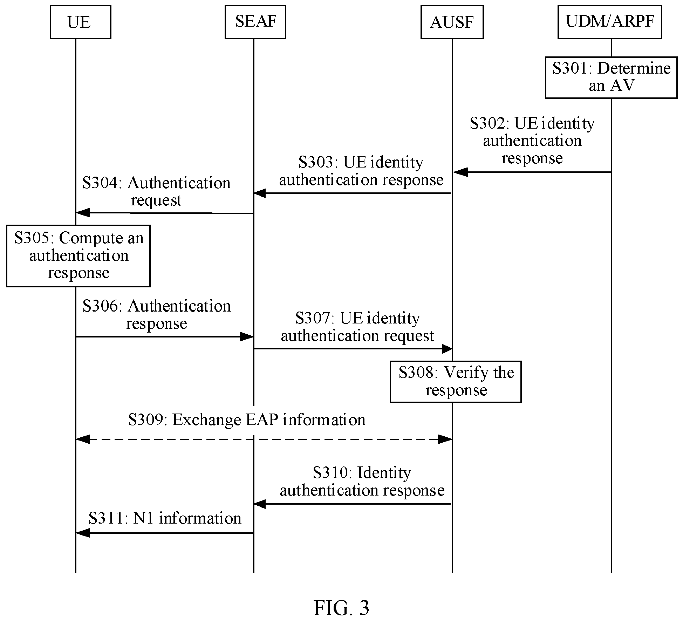

In a current mobile communication network, before UE accesses a network, a network side performs identity authentication on the UE. For example, the UE and the network generate a key k through ECDH key agreement. A principle of ECDH is as follows: A public key of the network is preset inside the UE, and the UE generates an ephemeral public-private key pair of the UE before the UE accesses the network. The UE generates the key k through computation by using an ephemeral private key of the UE and the public key of the network. The UE encrypts a subscription permanent identifier (subscription permanent identifier, SUPI) by using the key k, combines a ciphertext of the SUPI and an ephemeral public key of the UE into a subscription concealed identifier (subscription concealed identifier, SUCI), and sends the SUCI to the network side. The network side computes the key k by using a private key of the network and the ephemeral public key of the UE. Subsequently, the network side decrypts the SUCI by using the key k to obtain the SUPI, and queries for a root key corresponding to the SUPI. Bidirectional identity authentication is performed by using the root key (for details, refer to the descriptions in FIG. 3).

FIG. 3 is a schematic flowchart of an authentication process based on an extensible authentication protocol (extensible authentication protocol, EAP) AKA'. The authentication process includes the following content.

S301: A UDM/An ARPF determines an authentication vector (authentication vector, AV).

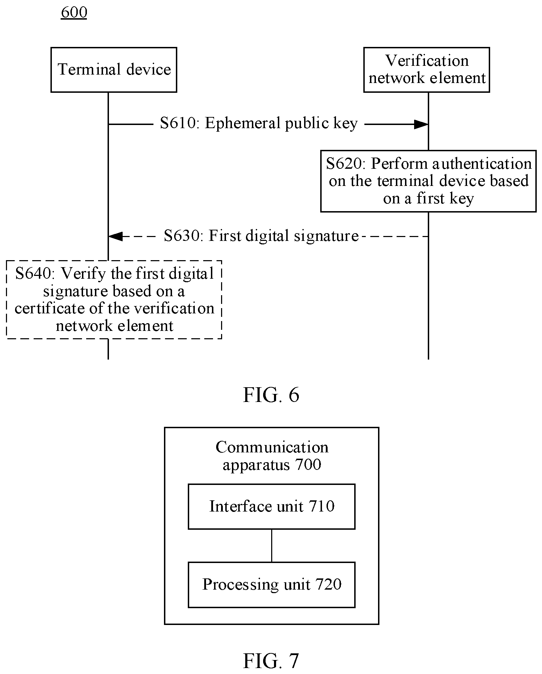

After receiving a UE ID and a serving network name (SN name) that are sent by an AUSF, the UDM/ARPF determines the AV based on the received information. A quintuple included in the AV may be: an authentication random number (random, RAND), an authentication token (authentication token, AUTN), an expected response (expected response, XRES) parameter, a cipher key (cipher key, CK), and an integrity key (integrity key, IK). A process of generating the parameters in the AV is shown in FIG. 6. For a specific procedure thereof, refer to an existing procedure. Details are not described herein.

Then, the UDM/ARPF updates the AV based on the SN name and a key derivation function (key derivation function, KDF) algorithm. Specifically, a CK' and an IK' are computed based on the SN name and the KDF algorithm, and the CK and the IK in the original AV are replaced with the CK' and the IK'.

S302: The UDM/ARPF sends a UE identity authentication response to the AUSF.

The UE identity authentication response sent by the UDM/ARPF to the AUSF may be an Nudm_UEAuthentication_Get Response, and the UE identity authentication response may include an updated authentication vector (denoted as an AV'). Parameters, for authentication, included in the AV' may be the RAND, the AUTN, the XRES, the CK', and the IK'.

S303: The AUSF sends a UE identity authentication response to an SEAF.

The UE identity authentication response sent by the AUSF to the SEAF may be an EAP-request (EAP-request) message or an AKA'-challenge (AKA'-challenge) message. The EAP-request or the AKA'-challenge includes the RAND and the AUTN.

S304: The SEAF sends an authentication request to UE.

The authentication request (authentication request) sent by the SEAF to the UE may be the forwarded EAP-request or AKA'-challenge received in step S303, where the EAP-request or the AKA'-challenge includes the RAND and the AUTN.

Specifically, the SEAF forwards the EAP-request or the AKA'-challenge to a USIM of the UE.

S305: The UE computes an authentication response.

Specifically, after receiving the RAND and AUTN in the EAP-request or the AKA'-challenge, the USIM of the UE verifies whether the AUTN is correct. If the AUTN is correct, the USIM computes and replies with a RES, the CK, and the IK, and then sends the RES, the CK, and the IK to ME of the UE. The ME then computes the CK' and the IK' based on the SN name and the KDF algorithm. The CK' and the IK' may be used by the UE to generate a key corresponding to a key of the AUSF.

S306: The UE sends the authentication response to the SEAF.

The authentication response sent by the UE to the SEAF may be an EAP-response (EAP-response) message or an AKA'-challenge (AKA'-challenge) message. The EAP-response and the AKA'-challenge include the RES.

S307: The SEAF forwards the message received in step S306 to the AUSF.

S308: The AUSF verifies the response.

The AUSF may compare whether the RES is equal to an RES stored by the AUSF. If the RES is equal to the RES stored by the AUSF, the AUSF successfully verifies the UE.

Optionally, the AUSF and the UE may further exchange the EAP-request message/an AKA'-notification (AKA'-notification) message and the EAP-response message/an AKA'-notification message in step S309.

S310: The AUSF sends a UE identity authentication response to the SEAF.

The AUSF may generate an extended master session key (extended master session key, EMSK) based on the CK' and the IK', use the first 256 bits (bits) of the EMSK as the key (denoted as K_{AUSF}) of the AUSF, then derive a key K_{SEAF} of the SEAF based on K_{AUSF}, and send an EAP success (EAP success) message and K_{SEAF} to the SEAF.

S311: The SEAF sends an N1 message to the UE.

The N1 message may be the EAP success message.

In the foregoing solution, the network side and the terminal generate a shared key by using a fixed key exchange algorithm, and an application scenario is limited. For example, for some low-power terminal devices, computational complexity of ECDH key agreement is higher. For another example, ECDH key agreement may be incapable of satisfying an application scenario in which a security requirement is higher. Specifically, in an ECDH key agreement process, a terminal side computes the shared key by using a fixed public key on the network side. Therefore, the key agreement algorithm does not have forward security.

As application scenarios (for example, different security requirements) of a terminal and a network in a mobile communication system increase, how to improve flexibility of an authentication procedure of the terminal and the network is a problem that needs to be considered.

In view of this, this application provides a communication method and a communication apparatus, to help alleviate or resolve the foregoing problem.

For ease of understanding of embodiments of this application, the following several points are described.

First, in this application, "indicate" may be understood as "enable", and "enable" may include "directly enable" and "indirectly enable". When a piece of information is described to enable A, the information may directly enable A or indirectly enable A, but it does not mean that the information definitely carries A.

Information enabled by the information is referred to as to-be-enabled information. In a specific implementation process, the to-be-enabled information is enabled in a plurality of manners, for example, but not limited to, directly enabling the to-be-enabled information, for example, enabling the to-be-enabled information or an index of the to-be-enabled information. Alternatively, the to-be-enabled information may be indirectly enabled by enabling other information, where there is an association relationship between the other information and the to-be-enabled information. Alternatively, only a part of the to-be-enabled information may be enabled, and other parts of the to-be-enabled information are known or agreed in advance. For example, specific information may alternatively be enabled through a pre-agreed (for example, specified in a protocol) sequence of information, to reduce enabling overheads to some extent. In addition, a common part of the information may alternatively be identified and enabled in a unified manner, to reduce enabling overheads caused by enabling the same information separately.

Second, "first", "second", and various numerical numbers (for example, "#1" and "#2") shown in this application are merely for ease of description, and are for distinguishing between objects, but are not for limiting the scope of embodiments of this application, for example, are for distinguishing between different messages, but are not for describing a specific sequence or order. It should be understood that objects described in such a way are interchangeable in an appropriate case, so that a solution other than embodiments of this application can be described.

Third, in this application, "preconfigured" may include being predefined, for example, defined in a protocol. "Being predefined" may be implemented by prestoring corresponding code or a corresponding table in a device (for example, including network elements) or in another manner that may indicate related information. A specific implementation thereof is not limited in this application.

Fourth, the term "and/or" in this specification describes only an association relationship between associated objects, and represents that three relationships may exist. For example, A and/or B may represent the following three cases: Only A exists, both A and B exist, and only B exists. In addition, the character "/" in this specification generally indicates an "or" relationship between the associated objects.

Fifth, that one piece of information (for example, information #1) "includes" another piece of information (for example, information #2) in embodiments of this application may be understood as that the information #1 explicitly carries or implicitly carries the information #2. For example, the information #1 directly carries the information #2. For another example, the information #1 carries indication information indicating the information #2, and a receiving end device receiving the information #1 may obtain the information #2 based on the indication information. The indication information indicating the information #2 may be predefined or specified in a protocol, or may be explicitly or implicitly indicated.

Without a loss of generality, the following uses interaction between network elements as an example to describe in detail the communication method provided in embodiments of this application.

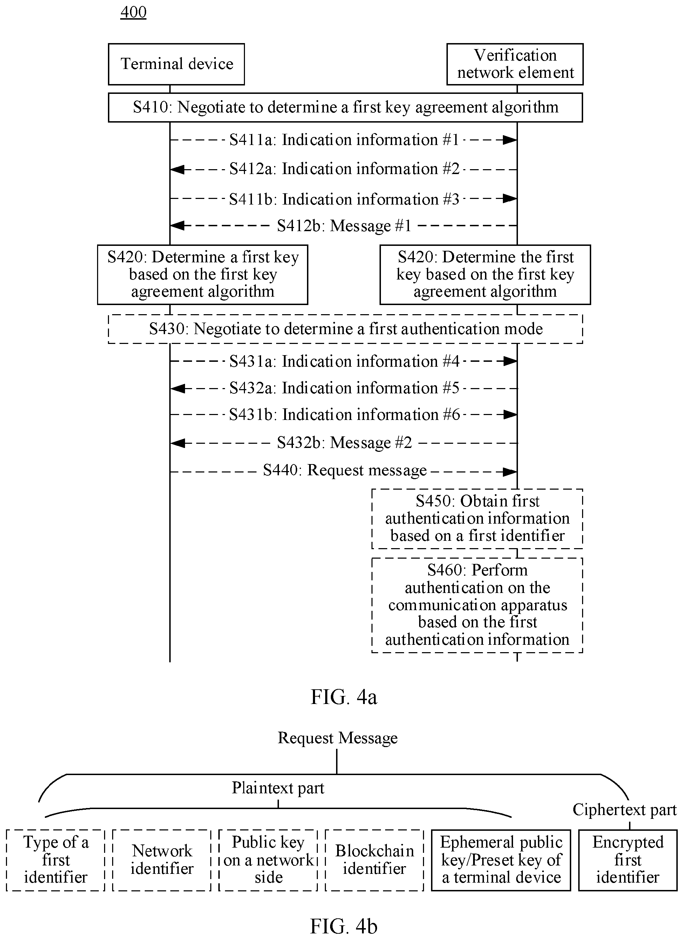

FIG. 4a and FIG. 4b are a schematic flowchart of a communication method according to an embodiment of this application. As shown in FIG. 4a, the method may include the following steps.

S410: A terminal device (an example of a communication apparatus) and a verification network element negotiate to determine a first key agreement algorithm.

The verification network element may be an access network device that provides a service for the terminal device. Alternatively, when a CU and a DU of the access network device are separated, the verification network element may be the CU of the access network device. Alternatively, the verification network element is an edge computing node, for example, an edge application server (edge application server, EAS) deployed in an edge data network (edge data network, EDN). Alternatively, the verification network element is a core network element of an operator #1, for example, an AMF, an AUSF, or a UDM. The operator #1 may be an operator subscribed to by the terminal device or another operator. This is not limited.

The first key agreement algorithm is one of at least one key agreement algorithm. The first key agreement algorithm is used by the terminal device and the verification network element to subsequently perform key agreement to determine a first key. The first key may be for encrypting or decrypting a message transmitted between the terminal device and the verification network element.

For example, the at least one key agreement algorithm may include at least one of the following algorithms:
an elliptic curve Diffie-Hellman (elliptic curve Diffie-Hellman, ECDH) key agreement algorithm, an ephemeral elliptic curve Diffie-Hellman (ephemeral elliptic curve Diffie-Hellman, ECDHE) key agreement algorithm, a key agreement algorithm based on post-quantum cryptography (post-quantum cryptography, PQC), a key agreement algorithm based on PQC and ECDH, a key agreement algorithm based on PQC and ECDHE, and a key agreement algorithm based on a pre-shared key (pre-shared key, PSK).

That is, the first key agreement algorithm that the terminal device and the verification network element negotiate to determine is any one of the foregoing key agreement algorithms.

It may be understood that, for the at least one key agreement algorithm, security levels and computational complexity corresponding to algorithms are different. For example, the security levels corresponding to the algorithms may be sorted in descending order as follows: the key agreement algorithm based on PQC and ECDHE, the key agreement algorithm based on PQC and ECDH, the key agreement algorithm based on PQC, the ECDHE key agreement algorithm, the ECDH key agreement algorithm, and the key agreement algorithm based on a PSK. Sorting of the computational complexity corresponding to the algorithms is similar to sorting of the security levels corresponding to the algorithms.

Optionally, the at least one key agreement algorithm may further correspond to different network standards. In other words, each of the at least one key agreement algorithm is applicable to one or more network standards.

For example, a 5G network may correspond to the ECDH key agreement algorithm, the ECDHE key agreement algorithm, and the key agreement algorithm based on a PSK. A network in a communication system evolved after 5G, for example, a 6G network, may correspond to the ECDHE key agreement algorithm, the key agreement algorithm based on PQC, the key agreement algorithm based on PQC and ECDH, and the key agreement algorithm based on PQC and ECDHE.

For another example, a 5G network may correspond to the ECDH key agreement algorithm, the ECDHE key agreement algorithm, and the key agreement algorithm based on a PSK. A network in a communication system evolved after 5G, for example, a 6G network, may correspond to the key agreement algorithm based on PQC, the key agreement algorithm based on PQC and ECDH, and the key agreement algorithm based on PQC and ECDHE.

It should be understood that the foregoing correspondences between the key agreement algorithms and the network standards are merely examples. This is not limited in this application.

Specifically, the terminal device and the verification network element may negotiate to determine the first key agreement algorithm in the following manners:
Manner 1: The verification network element determines the first key agreement algorithm from the at least one key agreement algorithm. A specific process may include S411a and S412a.

S411a: The terminal device sends indication information #1 (an example of first indication information) to the verification network element. Accordingly, the verification network element receives the first indication information from the terminal device.

The indication information #1 indicates the at least one key agreement algorithm, or the indication information #1 indicates to determine the first key agreement algorithm from the at least one key agreement algorithm.

Optionally, the indication information #1 may further indicate to determine the first key agreement algorithm.

S412a: The verification network element sends indication information #2 (an example of second indication information) to the terminal device. Accordingly, the terminal device receives the indication information #2 from the verification network element.

The indication information #2 indicates the first key agreement algorithm, and the first key agreement algorithm is one of the at least one key agreement algorithm.

Specifically, the verification network element determines the first key agreement algorithm from the at least one key agreement algorithm, and indicates the first key agreement algorithm to the terminal device.

For example, the verification network element may determine the first key agreement algorithm based on first information and the indication information #1.

The first information may include at least one of the following information: a security level corresponding to a key agreement algorithm, computational complexity of the key agreement algorithm, a network standard, a type of the terminal device, and a computing capability of the terminal device.

For example, the verification network element may determine the first key agreement algorithm based on an item in the first information.

For example, if it is determined that a security level requirement of current communication between the terminal device and the verification network element is lower, the verification network element may select a key agreement algorithm with a lower security level, for example, select the ECDH key agreement algorithm.

For another example, if it is determined that the computing capability of the terminal device is low, or the terminal device is a low-power terminal device, the verification network element may select a key exchange algorithm with lower computational complexity, for example, the ECDH key agreement algorithm or the key agreement algorithm based on a PSK.

For another example, if a current network is the 5G network, the verification network element may select a key agreement algorithm corresponding to the 5G network, for example, one of the ECDH key agreement algorithm, the ECDHE key agreement algorithm, and the key agreement algorithm based on a PSK. If the current network is the network in the communication system evolved after 5G, the verification network element may select one of the ECDH key agreement algorithm, the ECDHE key agreement algorithm, the key agreement algorithm based on PQC, the key agreement algorithm based on PQC and ECDH, and the key agreement algorithm based on PQC and ECDHE.

Alternatively, the verification network element determines the first key agreement algorithm based on a plurality of pieces of information in the first information.

For example, the verification network element may determine a current network standard, select a key agreement algorithm applicable to the network standard, and select, based on a security level requirement or the computing capability of the terminal device on this basis, a key agreement algorithm with a higher security level or a key agreement algorithm with lower computational complexity. For example, based on determining of that a current network is the 5G network, the verification network element may select the ECDHE key agreement algorithm with a higher security level, to ensure communication security; or select the key agreement algorithm based on a PSK with lower computational complexity, to reduce power consumption of the terminal device.

Manner 2: The terminal device determines the first key agreement algorithm from the at least one key agreement algorithm, and indicates the first key agreement algorithm to the verification network element. A specific process may include S411b and S412b.

S411b: The terminal device sends indication information #3 to the verification network element. Accordingly, the verification network element receives the indication information #3 from the terminal device.

The indication information #3 indicates the first key agreement algorithm, or the indication information #3 indicates to determine whether to use the first key agreement algorithm.

Specifically, the terminal device determines the first key agreement algorithm from the at least one key agreement algorithm, and indicates the first key agreement algorithm to the verification network element.

For example, the terminal device may determine the first key agreement algorithm from the at least one key agreement algorithm based on first information. For the first information, refer to the descriptions in S411a.

For a specific example of determining, by the terminal device, the first key agreement algorithm based on the first information, refer to the descriptions in S411a. For example, the terminal device may select, based on a security level of current communication, a key agreement algorithm corresponding to the security level. For another example, the terminal device selects, based on a computing capability or a type of the terminal device, a key agreement algorithm corresponding to the computing capability. For another example, the terminal device selects, based on a network standard, a key agreement algorithm corresponding to the network standard.

Optionally, S412b: The verification network element sends a message #1 to the terminal device. Accordingly, the terminal device receives the message #1 from the verification network element.

The message #1 may be an acknowledgement message or a rejection message. The message #1 is sent based on the indication information #3. That is, the verification network element determines whether to use the first key agreement algorithm indicated by the indication information #3. If the verification network element determines to use the first key agreement algorithm, the verification network element may send the acknowledgement message to the terminal device. If the verification network element determines not to use the first key agreement algorithm, the verification network element may send the rejection message to the terminal device.

For example, when the first key agreement algorithm selected by the terminal device satisfies a given security level, network standard, and the like of a network, the acknowledgement message is sent to the terminal device. When the first key agreement algorithm selected by the terminal device does not satisfy a given security level, network standard, and the like of a network, the rejection message may be sent to the terminal device.

Optionally, if the verification network element sends the rejection message to the terminal device, the rejection message may further carry a rejection reason. For example, the rejection reason may be that a security level is insufficient or a requirement of the network standard is not satisfied. After receiving the rejection message, the terminal device may re-determine the first key agreement algorithm based on the rejection reason.

Optionally, the method further includes the following step:
S420: The verification network element and the terminal device determine the first key based on the first key agreement algorithm.

For example, when the first key agreement algorithm is the ECDH key agreement algorithm, the terminal device sends, to the verification network element, a public key (denoted as a first public key) in a first ephemeral public-private key pair generated by the terminal device. The verification network element determines the first key based on the first public key and a private key of the verification network element.

Optionally, the verification network element sends a public key of the verification network element to the terminal device, or a public key of the verification network element may be preset in the terminal device. The terminal device generates the first key based on a private key (denoted as a first private key) in the generated first ephemeral public-private key pair and the public key of the verification network element.

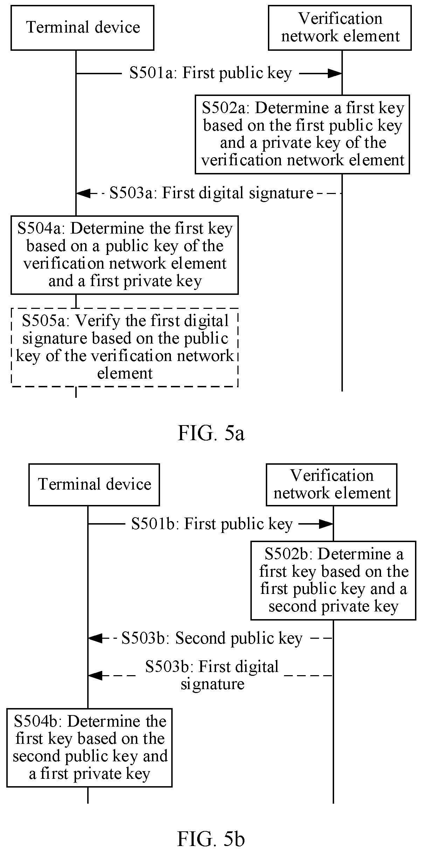

For a specific process in which the verification network element and the terminal device generate the first key based on the ECDHE key agreement algorithm, refer to descriptions in FIG. 5a.

When the first key agreement algorithm is the ECDHE key agreement algorithm, the terminal device sends, to the verification network element, a first public key in a first ephemeral public-private key pair generated by the terminal device. The verification network element determines the first key based on the first public key and a private key (denoted as a second private key) in a second ephemeral public-private key pair generated by the verification network element.

Optionally, the verification network element sends a public key (denoted as a second public key) in the second ephemeral public-private key pair to the terminal device. The terminal device generates the first key based on the second public key and a first private key in the first ephemeral public-private key pair.

For a specific process in which the verification network element and the terminal device generate the first key based on the ECDHE key agreement algorithm, refer to descriptions in FIG. 5b.

When the first key agreement algorithm is the key agreement algorithm based on PQC, the terminal device sends, to the verification network element, a public key (denoted as a third public key) in a third ephemeral public-private key pair generated based on a post quantum algorithm. The verification network element inputs the third public key into the post quantum algorithm to generate a ciphertext and the first key.

Optionally, the verification network element sends the ciphertext to the terminal device. The terminal device inputs the ciphertext and a third private key into the post-quantum cryptography algorithm to obtain the first key.

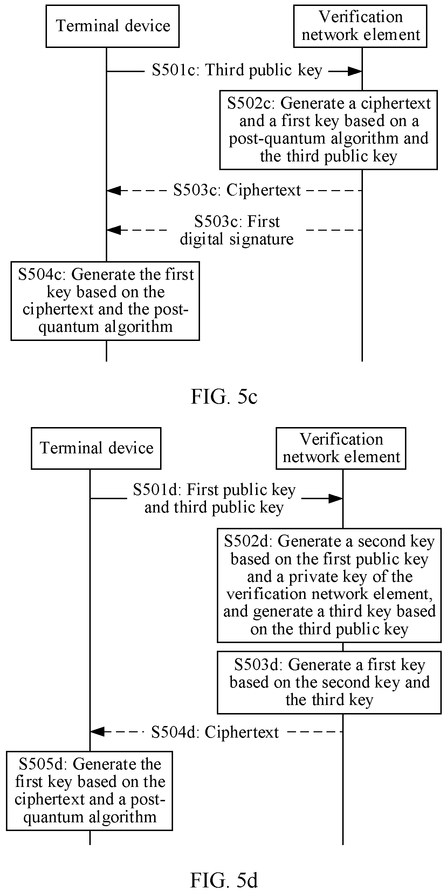

For a specific process in which the verification network element and the terminal device generate the first key based on the key agreement algorithm based on PQC, refer to descriptions in FIG. 5c.

When the first key agreement algorithm is the key agreement algorithm based on PQC and ECDH, the terminal device sends a first public key and a third public key to the verification network element. For the first public key and the third public key, refer to the foregoing descriptions. The verification network element determines a second key based on the first public key and a private key of the verification network element, and inputs the third public key into the post-quantum cryptography algorithm to generate a ciphertext and a third key. The verification network element determines the first key based on the second key and the third key.

Optionally, the verification network element sends a public key of the verification network element and the ciphertext to the terminal device. The terminal device generates the second key based on a first private key and the public key of the verification network element, and inputs the ciphertext and a third private key into the post-quantum cryptography algorithm to obtain the third key. The terminal device determines the first key based on the second key and the third key.

For a specific process in which the verification network element and the terminal device generate the first key based on the key agreement algorithm based on PQC and ECDH, refer to descriptions in FIG. 5d.

When the first key agreement algorithm is the key agreement algorithm based on PQC and ECDHE, the terminal device sends a first public key and a third public key to the verification network element. For the first public key and the third public key, refer to the foregoing descriptions. The verification network element determines a second key based on the first public key and a second private key, and inputs the third public key into the post-quantum cryptography algorithm to generate a ciphertext and a third key. For the second private key, refer to the foregoing descriptions. The verification network element determines the first key based on the second key and the third key.

Optionally, the verification network element sends a second public key and the ciphertext to the terminal device. The terminal device generates the second key based on a first private key and the second public key, and inputs the ciphertext and a third private key into the post-quantum cryptography algorithm to obtain the third key. The terminal device determines the first key based on the second key and the third key. For the second public key and the first private key, refer to the foregoing descriptions.

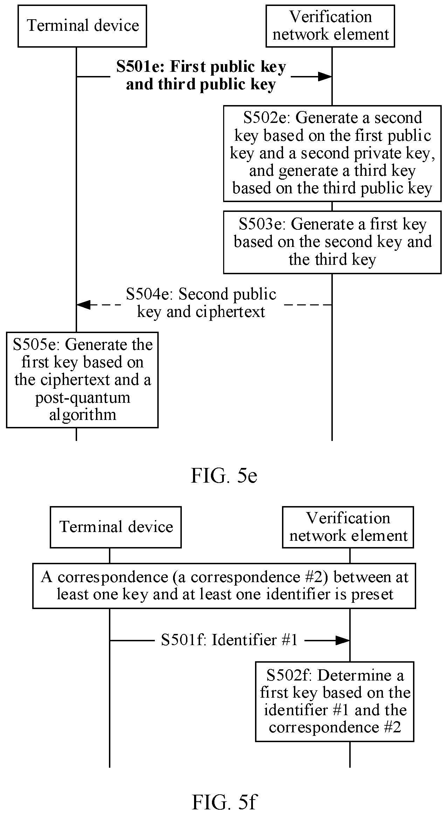

For a specific process in which the verification network element and the terminal device generate the first key based on the key agreement algorithm based on PQC and ECDHE, refer to descriptions in FIG. 5e.

When the first key agreement algorithm is the key agreement algorithm based on a PSK, before key agreement, at least one key is preset in the terminal device and the verification network element, and the at least one key is in one-to-one correspondence with at least one identifier. In other words, a correspondence (denoted as a correspondence #2) between the at least one key and the at least one identifier is preset in the terminal device and the verification network element. The terminal device sends an identifier corresponding to the first key to the verification network element, where the first key is one of the at least one key. The verification network element determines the first key based on the identifier of the first key and the correspondence #2.

For a specific process in which the verification network element and the terminal device generate the first key based on the key agreement algorithm based on a PSK, refer to descriptions in FIG. 5f.

Optionally, the method further includes: The verification network element sends, to the terminal device, a certificate of the verification network element (or the certificate of the verification network element is preset in the terminal device) and a digital signature (an example of a first digital signature) on a first message using the private key of the verification network element. The first message may include a message that has been exchanged between the verification network element and the terminal device. The terminal device verifies the first digital signature based on the certificate of the verification network element, to verify the verification network element.

For example, if the certificate of the verification network element is issued by an operator, in other words, a signature on the certificate of the verification network element is generated by using a private key of the operator, the terminal device may verify the certificate of the verification network element based on a certificate of the operator. Further, the terminal device verifies the first digital signature based on a public key in the certificate of the verification network element, to perform authentication on the verification network element.

For example, the certificate of the operator may be preset in the terminal device, or the terminal device may receive the certificate of the operator from the verification network element, where the certificate of the operator includes a public key of the operator. The terminal device may verify, by using a public key in the certificate of the operator, the signature on the certificate of the verification network element using the private key of the operator, and further verify the first digital signature based on the public key of the verification network element. If verification succeeds in all of the foregoing processes, it indicates that authentication performed by the terminal device on the verification network element succeeds.

Alternatively, the terminal device may verify the first digital signature based on the public key in the certificate of the verification network element, to perform authentication on the verification network element.

It should be understood that the verification network element may send the certificate of the verification network element and/or the first digital signature to the terminal device in a key agreement process. For example, when sending the public key of the verification network element, the second public key, or the ciphertext to the terminal device, the verification network element sends the certificate of the verification network element and/or the first digital signature to the terminal device. Alternatively, that the verification network element sends the certificate of the verification network element and/or the first digital signature to the terminal device may be independent of a key agreement process. This is not limited in this application.

The certificate of the verification network element may include an identifier of the verification network element, the public key of the verification network element, information about an issuer of the certificate, for example, an identifier of the issuer and a signature of the issuer, and information about the certificate, for example, a validity period and a version number of the certificate.

It should be understood that, if the certificate of the verification network element is preset in the terminal device, the step of sending, by the verification network element, the certificate of the verification network element to the terminal device may not be performed.

It should be understood that the certificate of the verification network element and the first digital signature may be sent via a same message, or may be separately sent. This is not limited. For example, the certificate of the verification network element and the first digital signature are sent by using an RRC message, a NAS message, or other downlink signaling. This is not limited.

Optionally, the method further includes the following step:
S430: The terminal device and the verification network element negotiate to determine a first authentication mode.

The first authentication mode is one of at least one authentication mode. Authentication information corresponding to each of the at least one authentication mode is independent of each other. For example, the authentication information corresponding to all authentication modes are different, and/or authentication procedures corresponding to all the authentication modes are different.

For example, the authentication information may include at least one of the following information: a credential of the terminal device and a cryptographic algorithm.

The credential of the terminal device may include at least one verifiable credential (verifiable credential, VC) or at least one verifiable attestation (verifiable attestation, VA) of the terminal device. Credential information corresponding to different credentials is different. The credential information may include information about issuers of the credentials, a public key of the terminal device, validity periods of the credentials, and the like.

The information about the issuers of the credentials may include public keys of the issuers of the credentials, and identifiers and/or names of the issuers of the credentials. For example, the issuers of the credentials may be different operators, card manufacturers, terminal manufacturers, authoritative organizations, trusted third-party organizations, or over-the-air card writing servers.

The cryptographic algorithm may also be referred to as a cryptographic suite. The cryptographic algorithm includes at least one of the following: a key length, an encryption algorithm, a decryption algorithm, a signature algorithm, a public parameter, or the like.

Alternatively, the authentication information may include a root key of the terminal device, an authentication vector (authentication vector, AV) of the terminal device, or an address of a smart contract. The authentication vector is determined based on the root key of the terminal device. The address of the smart contract may be for obtaining the authentication vector, of the terminal device, stored in the smart contract. For example, the authentication vector may be an extensible authentication protocol authentication and key agreement (extensible authentication protocol authentication and key agreement, EAP-AKA) AV or a 5G home environment authentication vector (5G home environment authentication vector, 5G HE AV).

It should be understood that the foregoing authentication vector is merely an example, and this application is not limited thereto.

Optionally, a type of a first identifier indicated by each of the at least one authentication mode is different.

There is a correspondence (denoted as a correspondence #1) between the first identifiers and the authentication information of the terminal device, and the first identifier may be for obtaining the authentication information of the terminal device.

For example, the correspondence #1 may be stored in a storage system, for example, the foregoing storage system 102. Specifically, the correspondence #1 may be stored in a storage node corresponding to the storage system. For example, if the storage system is a blockchain system, the storage node may be a blockchain node. For example, the correspondence may be stored on the blockchain node in a form of a block or a transaction, namely, information on-chain. If the storage system is a distributed storage system, the storage node may be a node in the distributed storage system. In some possible scenarios, the distributed storage node may be a blockchain node. If the storage system is a communication system, the storage node may be a communication device in the communication system. For example, the communication device is a functional network element that can store subscription data of the terminal device.

A type of the first identifier may be any one of the following, in other words, the first identifier may include any one of the following types of identifiers: a first-type identifier, a second-type identifier, a block identifier or a transaction identifier, and a pseudo (pseudo) identifier.

The first-type identifier includes but is not limited to the following identifier:
a subscription permanent identifier (subscription permanent identifier, SUPI), a subscription concealed identifier (subscription concealed identifier, SUCI), a generic public subscription identifier (generic public subscription identifier, GPSI), a permanent equipment identifier (permanent equipment identifier, PEI), or a mobile subscriber international ISDN/PSTN number (mobile subscriber international ISDN/PSTN number, MSISDN), where an ISDN is an integrated services digital network (Integrated Services Digital Network), and a PSTN is a public switched telephone network (public switched telephone network).

The second-type identifier is an scID of the terminal device, and the second-type identifier may be a DRC, a DIC, or a DSCC.

The first-type identifier may be understood as an identifier allocated by a network side or an access network side to the terminal device or a permanent identifier of the terminal device. The first-type identifier is universal, and is applicable to authentication on the terminal device in a 5G communication system or a communication system before 5G. The second-type identifier may be generated by the terminal device or a trusted node (for example, the storage node shown in FIG. 2) other than the terminal device. Compared with the first-type identifier, the second-type identifier is more flexibly generated. Furthermore, the second-type identifier may be applied to a scenario of a service that has a higher requirement for confidentiality of personal information.

The block identifier or the transaction identifier may be for obtaining the correspondence #1 stored on the blockchain. In other words, when the first identifier is the block identifier or the transaction identifier, the correspondence #1 stored on the blockchain may be obtained by using the first identifier.

There is a correspondence between the pseudo identifier and the second-type identifier. That is, when the first identifier is the pseudo identifier, the second-type identifier is determined based on the correspondence between the pseudo identifier and the second-type identifier. Compared with directly using the second-type identifier, using the pseudo identifier may further improve communication security.

Specifically, the terminal device and the verification network element may negotiate to determine the first authentication mode in the following manners:
Manner 1: The verification network element determines the first authentication mode from the at least one authentication mode. A specific process may include S431a and S432a.

S431a: The terminal device sends indication information #4 (an example of third indication information) to the verification network element. Accordingly, the verification network element receives the indication information #4 from the terminal device.

The indication information #4 may indicate the at least one authentication mode. In other words, the indication information #4 may indicate to determine the first authentication mode from the at least one authentication mode.

Alternatively, the indication information #4 indicates to determine the first authentication mode.

S432a: The verification network element sends indication information #5 (an example of fourth indication information) to the terminal device. Accordingly, the terminal device receives the indication information #5 from the verification network element.

The indication information #5 indicates the first authentication mode.

Specifically, the verification network element may determine the first authentication mode from the at least one authentication mode based on second information.

The second information may include at least one of the following information: information about an issuer of the credential, a security level of the credential, a security level of the cryptographic algorithm, and computational complexity of the cryptographic algorithm.

For example, if the credential of the terminal device includes a credential issued by a card manufacturer and a credential issued by the operator, the verification network element may select a credential issued by an operator of a network accessed this time for verification. That is, the first authentication mode may correspond to the credential issued by an operator of a network accessed this time.

For another example, if the terminal device has two certificates, where one is a post-quantum certificate, and the other is a non-post-quantum certificate (for example, a Rivest-Shamir-Adleman (Rivest-Shamir-Adleman, RSA) certificate or an elliptic curve digital signature algorithm (elliptic curve digital signature algorithm, ECDSA) certificate), the verification network element may select a certificate (for example, the post-quantum certificate) with a higher security level based on security levels of the certificates. In other words, the first authentication mode may correspond to the post-quantum certificate of the terminal device.

Manner 2: The terminal device determines the first authentication mode from the at least one authentication mode, and indicates the first authentication mode to the verification network element. A specific determining manner may include S431b and S432b.

S431b: The terminal device sends indication information #6 to the verification network element. Accordingly, the verification network element receives the indication information #6 from the terminal device.

The indication information #6 indicates the first authentication mode, or the indication information #6 indicates to determine whether to use the first authentication mode.

Specifically, the terminal device determines the first authentication mode from the at least one authentication mode based on second information, and sends the indication information #6 to the verification network element.

For a specific example of determining, by the terminal device, the first authentication mode based on the second information, refer to the descriptions in S432a.

Optionally, S432b: The verification network element sends a message #2 to the terminal device. Accordingly, the terminal device receives the message #2 from the verification network element.

The message #2 may be an acknowledgement message or a rejection message. The message #2 is sent based on the indication information #6. That is, the verification network element determines whether to use the first authentication mode indicated by the indication information #6. If the verification network element determines to use the first authentication mode, the verification network element may send the acknowledgement message to the terminal device. If the verification network element determines not to use the first authentication mode, the verification network element may send the rejection message to the terminal device.

For example, when the second information corresponding to the first authentication mode selected by the terminal device satisfies a given requirement (for example, a required issuer of the credential and a required security level of the credential) of the network, the acknowledgement message is sent to the terminal device. When the second information corresponding to the first authentication mode selected by the terminal device does not satisfy a given requirement of the network, the rejection message may be sent to the terminal device.

Optionally, if the verification network element sends the rejection message to the terminal device, the rejection message may further carry a rejection reason. For example, the rejection reason may be that a security level of the credential is insufficient or an issuer is not the required issuer of the credential. After receiving the rejection message, the terminal device may re-determine the first authentication mode based on the rejection reason.

It should be understood that an occasion for determining the authentication mode is not limited in this application. That is, an occasion for performing S430 is not limited. For example, S430 may be performed before or after S410.

Optionally, the method further includes the following step:
S440: The terminal device sends a request message to the verification network element. Accordingly, the verification network element receives the request message from the terminal device.

The request message is for requesting to access the network, and the request message includes the first identifier encrypted by using the first key (namely, a key determined by the terminal device based on the first key agreement algorithm).

For example, a format of the request message may be shown in FIG. 4b. The request message may include a plaintext part and a ciphertext part.

The plaintext part may carry: the type of the first identifier, where the type of the first identifier may be any one of a first type, a second type, or a pseudo identifier type, and it may be understood that the type of the first identifier may be determined by using the first authentication mode; a network identifier (network identifier) (for example, the network identifier is an identifier of an operator subscribed to by the terminal device); a public key on the network side (or an identifier of the public key on the network side), namely, the public key, of the verification network element, used by the terminal device, where for example, the public key of the verification network element is the public key, of the verification network element, used by the terminal device in the ECDH key agreement algorithm, the ECDHE key agreement algorithm, the key agreement algorithm based on PQC and ECDH, and the key agreement algorithm based on PQC and ECDHE; and an ephemeral public key of the terminal device, where for example, the ephemeral public key is the ephemeral public key (for example, the first public key or the third public key) used by the terminal device in the ECDH key agreement algorithm, the ECDHE key agreement algorithm, the key agreement algorithm based on PQC, the key agreement algorithm based on PQC and ECDH, and the key agreement algorithm based on PQC and ECDHE, or the ephemeral public key is a key preset on a terminal device side in the key agreement algorithm based on a PSK. Optionally, the plaintext part further includes a blockchain identifier. That is, when the authentication information of the terminal device is stored on a blockchain, and there are a plurality of blockchains, the blockchain identifier identifies the blockchain on which the authentication information of the terminal device is currently located. The ciphertext part of the request message may include the encrypted first identifier. Optionally, the ciphertext part may further include a session identifier, identifying this time of key agreement.

Optionally, the terminal device sends a second digital signature to the verification network element, where the second digital signature is a signature on a second message or a hash value of the second message using a private key of the terminal device. The second message may include a message that has been exchanged between the terminal device and the verification network element.

For example, the message that has been exchanged between the terminal device and the verification network element may include a latest message sent by the terminal device to the verification network element. For example, the message that has been exchanged may include a message that carries the second digital signature. Alternatively, the message that has been exchanged may include messages after the request message sent by the terminal device to the verification network element (including the request message) and before a latest message sent by the terminal device to the verification network element (which may include the latest message sent to the verification network element). For example, the latest message sent is a message that carries the second digital signature. Optionally, before the terminal device sends the second digital signature to the verification network element, the terminal device may store the message that has been exchanged with the verification network element.

The message that carries the first digital signature may be an RRC message or a NAS message.

For example, the terminal device may determine, based on the first authentication mode, the private key, of the terminal device, corresponding to the first authentication mode, and sign the second message or the hash value of the second message by using the private key. The terminal device may further determine, based on the first authentication mode, a signature algorithm used for signature.

The second digital signature may be carried in the request message or another uplink message. This is not limited.

S450: The verification network element obtains first authentication information of the terminal device based on the first identifier.

Specifically, after receiving the request message from the terminal device, the verification network element may obtain the first identifier through decryption based on the first key (namely, the key determined by the verification network element based on the first key agreement algorithm), and obtain the first authentication information of the terminal device based on the first identifier.

For example, if the first identifier is the first-type identifier, the verification network element may obtain the root key of the terminal device or the authentication vector of the terminal device based on the subscription permanent identifier. That is, the first authentication information may include the root key or the authentication vector of the terminal device.

If the first identifier is the second-type identifier, the verification network element obtains a first credential of the terminal device based on the second-type identifier and the correspondence #1, where the first credential is one of at least one credential of the terminal device. For example, the verification network element may determine the first credential from the at least one credential based on the first authentication mode. That is, the first authentication information may include the first credential.

If the first identifier is the block identifier or the transaction identifier, the verification network element obtains, based on the block identifier or the transaction identifier, the correspondence #1 stored on the blockchain, and selects a first credential from at least one credential of the terminal device. For example, the verification network element may determine the first credential from the at least one credential based on the first authentication mode. That is, the first authentication information may include the first credential.

If the first identifier is the pseudo identifier, the verification network element determines the second-type identifier based on the pseudo identifier and a correspondence between the pseudo identifier and the second-type identifier. Further, the verification network element obtains a first credential based on the second-type identifier and the correspondence #1. For example, the verification network element may determine the first credential from at least one credential based on the first authentication mode. That is, the first authentication information may include the first credential.

S460: The verification network element performs authentication on the communication apparatus based on the first authentication information.

In a possible implementation, the verification network element performs authentication on the terminal device based on the root key or the authentication vector of the terminal device.

For example, the verification network element may generate the authentication vector based on the root key. The verification network element sends some parameters in the authentication vector to the terminal device, so that the terminal device determines the other parameters in the authentication vector. The verification network element may compare the other parameters in the authentication vector that are stored with the other parameters determined by the terminal device, to determine whether authentication on the terminal device succeeds.

In another possible implementation, the verification network element performs authentication on the terminal device based on the first credential.

For example, the verification network element may verify the first credential based on a credential (including a public key of the issuer of the credential) of an issuer of the first credential, that is, verify a signature of the issuer of the first credential on the first credential by using the public key of the issuer of the first credential. If verification succeeds, the verification network element further verifies the second digital signature based on a public key corresponding to the first credential, to determine whether authentication on the terminal device succeeds.

Optionally, the verification network element may directly verify the second digital signature based on the public key corresponding to the first credential, to determine whether the authentication on the terminal device succeeds.

With reference to FIG. 5a to FIG. 5f, the following describes specific manners of determining the first key when the first key agreement algorithm is different algorithms. It should be understood that specific names of the following algorithms are not limited in this application.

FIG. 5a shows a manner of determining the first key based on an ECDH key agreement algorithm. That is, the first key agreement algorithm is the ECDH key agreement algorithm. As shown in FIG. 5a, determining the first key based on the first key agreement algorithm may include the following steps.

S501a: A terminal device sends a first public key to a verification network element. Accordingly, the verification network element receives the first public key from the communication apparatus.

For example, the terminal device generates an ephemeral public-private key pair (denoted as a first ephemeral public-private key pair), and the terminal device sends a public key in the first ephemeral public-private key pair to the verification network element. That is, the first public key is the public key in the first ephemeral public-private key pair.

For example, the terminal device may generate a random number (denoted as a random number #1) as a private key (denoted as a first private key) in the first public-private key pair, and generate the public key, namely, the first public key, in the first public-private key pair based on an elliptic curve algorithm.

For example, the first public key may be carried in a message #1, and the message #1 may be an RRC message, a NAS message, or other uplink signaling. This is not limited in this application.

Optionally, the terminal device sends an identifier #1 to the verification network element. The identifier #1 identifies this key exchange. In other words, the identifier #1 may be used as a unique identifier of this key exchange process.

For example, the identifier #1 and the first public key may be both carried in the message #1, or may be separately sent. This is not limited in this application.

S502a: The verification network element determines the first key based on the first public key and a private key (denoted as a private key #1) of the verification network element.

For example, the private key #1 may be the private key of the verification network element. A public key (denoted as a public key #1), of the verification network element, corresponding to the private key #1 may be preset in the terminal device. The public key #1 is the public key, of the verification network element, preset in the terminal device.

Optionally, the verification network element sends a certificate of the verification network element to the terminal device. For example, for the certificate of the verification network element, refer to the descriptions in S420.

Optionally, the certificate of the verification network element may further be preset in the terminal device. It should be understood that, if the certificate of the verification network element is preset in the terminal device, the step of sending, by the verification network element, the certificate of the verification network element to the terminal device may not be performed.

Optionally, S503a: The verification network element sends a first digital signature to the terminal device.

The first digital signature is a digital signature on a first message using the private key of the verification network element. The first message may include a message that has been exchanged between the verification network element and the terminal device, for example, the message #1.

The certificate of the verification network element and the signature on the first message using the private key of the verification network element may be both carried in a message #2, or may be separately sent. This is not limited. The message #2 may be an RRC message, a NAS message, or other downlink signaling. This is not limited.

S504a: The terminal device determines the first key based on the public key #1 and the first private key.

Optionally, S505a: The terminal device verifies the first digital signature based on the public key of the verification network element, to perform authentication on the verification network element.

According to the foregoing solution, computational complexity in a key agreement process can be reduced by using the ECDH key agreement algorithm. That is, the terminal device generates the first key by using the public key of the verification network element and the private key in the ephemeral public-private key pair generated by the terminal device, and the verification network element generates the first key based on the private key of the verification network element and the ephemeral public key generated by the terminal device, so that the computational complexity can be reduced.

FIG. 5b shows a manner of determining the first key based on an ECDHE key agreement algorithm. That is, the first key agreement algorithm is the ECDHE key agreement algorithm. As shown in FIG. 5b, determining the first key based on the first key agreement algorithm may include the following steps.

S501b: A terminal device sends a first public key to a verification network element. Accordingly, the verification network element receives the first public key from the communication apparatus.

For details of this step, refer to the descriptions in S501a.

S502b: The verification network element determines the first key based on the first public key and a second private key.

For example, the verification network element generates an ephemeral public-private key pair (denoted as a second ephemeral public-private key pair), where the second private key is a private key in the second public-private key pair. The verification network element computes the first key based on the first public key and the second private key.

For example, the verification network element may generate a random number (denoted as a random number #2) as the private key, namely, the second private key, in the second public-private key pair, and generate a public key (denoted as a second public key) in the second public-private key pair based on an elliptic curve algorithm.

S503b: The verification network element sends the second public key to the terminal device. Accordingly, the terminal device receives the second public key from the verification network element.

For example, the second public key may be carried in a message #3, and the message #3 may be a NAS message, an RRC message, or other downlink signaling. This is not limited.

Optionally, the verification network element sends a certificate of the verification network element to the terminal device. For the certificate of the verification network element, refer to the descriptions in S502a.

Optionally, the verification network element sends, to the terminal device, a digital signature on a first message using a private key of the verification network element. The first message may include a message that has been exchanged between the verification network element and the terminal device, for example, a message #1 and/or the message #3.

S504b: The terminal device determines the first key based on the second public key and a first private key.

That is, the terminal device obtains the first key through computation based on the received public key in the ephemeral public-private key pair generated by the verification network element and the private key in an ephemeral public-private key pair generated by the terminal device.

Optionally, the terminal device verifies the first digital signature based on the certificate of the verification network element, to perform authentication on the verification network element.

According to the foregoing solution, the ECDHE key agreement algorithm is used, and the verification network element and the terminal device each generate the first key by using an ephemeral public key generated by the other, so that key exchange security is improved. Furthermore, the key agreement algorithm has lower computational complexity, and is applicable to a communication scenario in which computational complexity of a key agreement algorithm is lower and a security requirement is higher. In addition, the key agreement algorithm may be compatible with a 5G communication system or a communication system before 5G.

FIG. 5c shows a manner of determining the first key based on a key agreement algorithm based on PQC. That is, the first key agreement algorithm is the key agreement algorithm based on PQC. As shown in FIG. 5c, determining the first key based on the key agreement algorithm based on PQC may include the following steps.

S501c: A terminal device sends a third public key to a verification network element. Accordingly, the verification network element receives the third public key from the terminal device.

For example, the terminal device generates an ephemeral public-private key pair (denoted as a third ephemeral public-private key pair) based on the post-quantum cryptography algorithm, and the terminal device sends a public key in the third ephemeral public-private key pair to the verification network element. That is, the third public key is the public key in the third ephemeral public-private key pair.

For example, the third public key may be carried in a message #3, and the message #3 may be an RRC message, a NAS message, or other uplink signaling. This is not limited in this application.

Optionally, the terminal device sends an identifier #1 to the verification network element. The identifier #1 identifies this key exchange. For example, the identifier #1 and a first public key may be both carried in a message #1, or may be separately sent. This is not limited in this application.

S502c: The verification network element generates a ciphertext and the first key based on the post-quantum cryptography algorithm and the third public key.

For example, the verification network element uses the third public key as an input of the post-quantum cryptography algorithm, to obtain the ciphertext and the first key. In a specific computational process, the verification network element randomly selects m, encrypts m to obtain the ciphertext, and performs a hash operation on the ciphertext and a random number to obtain the first key.

S503c: The verification network element sends the ciphertext to the terminal device. Accordingly, the terminal device receives the ciphertext from the verification network element.

For example, the ciphertext may be carried in a message #4, and the message #4 may be a NAS message, an RRC message, or other downlink signaling. This is not limited.

Optionally, the verification network element sends a certificate of the verification network element to the terminal device. The certificate of the verification network element may be used by the terminal device to verify the authentication network element. Alternatively, a certificate of the verification network element may be preset in the terminal device. For the certificate, refer to the descriptions in S3 in FIG. 5b.

Optionally, the verification network element sends, to the terminal device, a digital signature on a first message using a private key of the verification network element. The first message may include a message that has been exchanged between the verification network element and the terminal device, for example, the message #1.

The certificate of the verification network element and the signature on the first message using the private key of the verification network element may be both carried in the message #4, or may be separately sent. This is not limited.

S504c: The terminal device generates the first key based on the ciphertext and the post-quantum cryptography algorithm.

For example, the terminal device uses the ciphertext and a private key (denoted as a third private key) in the third ephemeral public-private key pair as an input of the post-quantum cryptography algorithm, and obtains the first key through computation.

Optionally, the terminal device verifies the first digital signature based on the certificate of the verification network element, to perform authentication on the verification network element.

According to the foregoing solution, the key agreement algorithm based on PQC is used, and the verification network element and the terminal device may generate the first key by using PQC, so that key exchange security can be improved. The key agreement algorithm is applicable to a communication scenario in which a security requirement is higher.

FIG. 5d shows a manner of determining the first key using a key agreement algorithm based on PQC and ECDH (also referred to as a key agreement algorithm integrating PQC and ECDH). That is, the first key agreement algorithm is the key agreement algorithm based on PQC and ECDH. As shown in FIG. 5d, determining the first key using the key agreement algorithm based on PQC and ECDHE may include the following steps.

S501d: A terminal device sends a first public key and a third public key to a verification network element. Accordingly, the verification network element receives the first public key and the third public key from the terminal device.

For example, the first public key is a public key in a first ephemeral public-private key pair, and the third public key is a public key in a third ephemeral public-private key pair.

The first ephemeral public-private key pair is the public key in the ephemeral public-private key pair generated by the terminal device based on an elliptic curve algorithm. For details, refer to the first public key in S501b. The third public key is the public key in the ephemeral public-private key pair generated by the terminal device based on a post-quantum cryptography algorithm. For details, refer to the third public key in S501c.

S502d: The verification network element generates a second key based on the first public key and a private key of the verification network element, and generates a third key based on the third public key.

A public key (denoted as a public key #1), of the verification network element, corresponding to the private key of the verification network element may be preset in the terminal device.

The verification network element uses the third public key as an input of the post-quantum cryptography algorithm, to obtain a ciphertext and the third key. For details, refer to the descriptions of generating the first key based on the third public key in S502c.

S503d: The verification network element generates the first key based on the second key and the third key.

S504d: The verification network element sends the ciphertext to the terminal device. Accordingly, the terminal device receives the ciphertext from the verification network element.

For this step, refer to the descriptions in S503c.

Optionally, if the public key #1 is not preset in the terminal device, the verification network element sends the public key #1 to the terminal device.

Optionally, the verification network element sends a certificate of the verification network element to the terminal device. The certificate of the verification network element may be used by the terminal device to verify the authentication network element. Alternatively, a certificate of the verification network element may be preset in the terminal device. For the certificate, refer to the descriptions in S3 in FIG. 5a.

Optionally, the verification network element sends, to the terminal device, a digital signature on a first message using the private key of the verification network element. The first message may include a message that has been exchanged between the verification network element and the terminal device.

S505d: The terminal device generates the first key based on the ciphertext and the post-quantum cryptography algorithm.

For example, the terminal device generates the second key based on a first private key and the public key, namely, the public key #1, of the verification network element. The first private key is a private key in the first ephemeral public-private key pair.

The terminal device uses the ciphertext and a third private key as an input of the post-quantum cryptography algorithm, and obtains the third key through computation. Further, the terminal device generates the first key based on the second key and the third key.

Optionally, the terminal device verifies the first digital signature based on the certificate of the verification network element, to perform authentication on the verification network element.

According to the foregoing solution, the key agreement algorithm based on PQC and ECDH is used, and the verification network element and the communication apparatus may generate the first key based on a key generated based on PQC and a key generated based on ECDH. This further improves key exchange security in comparison with the key agreement algorithm based on PQC. The key agreement algorithm is applicable to a communication scenario in which a security requirement is higher.

FIG. 5e shows a manner of determining the first key using a key agreement algorithm based on PQC and ECDHE (also referred to as a key agreement algorithm integrating PQC and ECDHE). That is, the first key agreement algorithm is the key agreement algorithm based on PQC and ECDHE. As shown in FIG. 5d, determining the first key using the key agreement algorithm based on PQC and ECDHE may include the following steps.

S501e: A terminal device sends a first public key and a third public key to a verification network element. Accordingly, the verification network element receives the first public key and the third public key from the terminal device.

For this step, refer to S501d.

S502e: The verification network element generates a second key based on the first public key and a second private key, and generates a third key based on the third public key.

The second private key may be a private key in an ephemeral public-private key pair generated by the verification network element.

For a specific process in which the verification network element generates the third key based on the third public key, refer to the descriptions of generating the first key based on the third public key in S502c.

S503e: The verification network element generates the first key based on the second key and the third key.

S504e: The verification network element sends a ciphertext and a second public key to the terminal device. Accordingly, the terminal device receives the ciphertext and the second public key from the verification network element.

The second public key may be a public key in the ephemeral public-private key pair generated by the verification network element.

Optionally, the verification network element sends a certificate of the verification network element to the terminal device. The certificate of the verification network element may be used by the terminal device to verify the authentication network element. Alternatively, a certificate of the verification network element may be preset in the terminal device. For the certificate, refer to the descriptions in S3 in FIG. 5a.

Optionally, the verification network element sends, to the terminal device, a digital signature (an example of a first digital signature) on a first message using a private key of the verification network element. The first message may include a message that has been exchanged between the verification network element and the terminal device.

S505e: The terminal device generates the first key based on the ciphertext and a post-quantum cryptography algorithm.

For example, the terminal device generates the second key based on a first private key and the second public key. The first private key is a private key in a first ephemeral public-private key pair.

The terminal device uses the ciphertext and a third private key as an input of the post-quantum cryptography algorithm, and obtains the third key through computation. Further, the terminal device generates the first key based on the second key and the third key.

Optionally, the terminal device verifies the first digital signature based on the certificate of the verification network element, to perform authentication on the verification network element.

According to the foregoing solution, the key agreement algorithm based on PQC and ECDHE is used, and the verification network element and the terminal device may generate the first key based on a key generated based on PQC and a key generated based on ECDHE. ECDHE has forward security. Compared with a key agreement algorithm based on PQC and ECDH, the key agreement algorithm is applicable to a communication scenario in which a security requirement is higher.

FIG. 5f shows a manner of determining the first key based on a key agreement algorithm based on a PSK. That is, the first key agreement algorithm is the key agreement algorithm based on a PSK. Before key agreement, at least one key is preset in a terminal device and a verification network element, and the at least one key is in one-to-one correspondence with at least one identifier. In other words, a correspondence (denoted as a correspondence #2) between the at least one key and the at least one identifier is preset in the terminal device and the verification network element.

For example, when the terminal device subscribes to an operator, an operator node may write the correspondence #2 to the terminal device in an over-the-air card writing manner.

S501 f: The terminal device sends an identifier #1 to the verification network element. Accordingly, the verification network element receives the identifier #1 from the terminal device.

The identifier #1 is one of the at least one identifier, and the identifier #1 identifies one (denoted as a key k) of the at least one key. It may be understood that the key k is the first key determined by the terminal device.

S502 f: The verification network element determines the first key based on the identifier #1 and a correspondence #1.

For example, the verification network element may query, based on the identifier #1, the correspondence #1 for the key corresponding to the identifier #1. That is, the verification network element determines the first key.

According to the foregoing solution, the key agreement algorithm based on a PSK is used, and the verification network element and the terminal device may generate the first key by using the preset key. The key agreement algorithm has lower computational complexity, and is applicable to a communication scenario in which computational complexity of a key agreement algorithm is lower.

FIG. 6 is a schematic flowchart of a communication method according to an embodiment of this application. The method may include the following steps.

S610: A terminal device (an example of a terminal device) sends an ephemeral public key to a verification network element. Accordingly, the verification network element receives the ephemeral public key from the terminal device.

The ephemeral public key is a public key in an ephemeral public-private key pair generated by the terminal device. The ephemeral public-private key pair may include a first ephemeral public-private key pair and/or a third ephemeral public-private key pair. Respectively refer to the descriptions in S501b and S501c. Correspondingly, the ephemeral public key may include a first public key and/or a third public key. Respectively refer to the foregoing descriptions.

Optionally, the method further includes: The verification network element determines a first key based on the ephemeral public key. That the verification network element determines the first key based on the ephemeral public key may include the following examples.

Example #1: The ephemeral public key is the first public key, and the verification network element determines the first key based on an ECDH key agreement algorithm.

In this example, the verification network element determines the first key based on the first public key and a private key of the verification network element.

Optionally, the verification network element sends a public key of the verification network element to the terminal device. The terminal device determines the first key based on a first private key and the public key of the verification network element, where the first private key is a private key in the first ephemeral public-private key pair.

For a specific process in which the verification network element and the terminal device determine the first key, refer to the descriptions in FIG. 5a.

Example #2: The ephemeral public key is the first public key, and the verification network element determines the first key based on an ECDHE key agreement algorithm.

In this example, the verification network element determines the first key based on the first public key and a private key in a second ephemeral public-private key pair generated by the verification network element.

Optionally, the verification network element sends a second public key to the terminal device, where the second public key is a public key in the second ephemeral public-private key pair. The terminal device determines the first key based on the second public key.

For a specific process in which the verification network element and the terminal device determine the first key, refer to the descriptions in FIG. 5b.

Example #3: The ephemeral public key is the third public key, and the verification network element determines the first key based on a key agreement algorithm based on PQC.

In this example, the verification network element inputs the third public key into the post-quantum cryptography algorithm to generate a ciphertext and the first key.

Optionally, the verification network element sends the ciphertext to the terminal device. The terminal device inputs a third private key and the ciphertext into the post-quantum cryptography algorithm to obtain the first key.

For a specific process in which the verification network element and the terminal device determine the first key, refer to the descriptions in FIG. 5c.

Example #4: The ephemeral public key includes a first public key and a third public key, and the verification network element determines the first key based on a key agreement algorithm based on PQC and ECDH.

In this example, the verification network element determines a second key based on the first public key and a private key of the verification network element, and inputs the third public key into a post-quantum cryptography algorithm to generate a ciphertext and a third key. The verification network element determines the first key based on the second key and the third key.

Optionally, the verification network element sends a public key of the verification network element and the ciphertext to the terminal device. The terminal device may generate the second key based on the public key of the verification network element and a first private key (refer to the foregoing descriptions), and input a third private key (refer to the foregoing descriptions) and the ciphertext into the post-quantum cryptography algorithm to obtain the third key. The terminal device determines the first key based on the second key and the third key.

For a specific process in which the verification network element and the terminal device determine the first key, refer to the descriptions in FIG. 5d.

Example #5: The ephemeral public key includes a first public key and a third public key, and the verification network element determines the first key based on a key agreement algorithm based on PQC and ECDHE.

In this example, the verification network element determines a second key based on the first public key and a second private key, and inputs the third public key into a post-quantum cryptography algorithm to generate a ciphertext and a third key. For the second private key, refer to the foregoing descriptions. The verification network element determines the first key based on the second key and the third key.

Optionally, the verification network element sends a second public key and the ciphertext to the terminal device. The terminal device may generate the second key based on the second public key and a first private key (refer to the foregoing descriptions), and input a third private key (refer to the foregoing descriptions) and the ciphertext into the post-quantum cryptography algorithm to obtain the third key. The terminal device determines the first key based on the second key and the third key.

For a specific process in which the verification network element and the terminal device determine the first key, refer to the descriptions in FIG. 5e.

Optionally, the terminal device indicates, to the verification network element, an identifier corresponding to a key k (an example of the first key), where the key k is one of at least one key preset in the terminal device, and there is a correspondence (denoted as a correspondence #2) between the at least one key and at least one identifier. The verification network element determines the first key based on the key agreement algorithm based on a PSK. Specifically, the correspondence #2 may be preset in the verification network element. The verification network element determines the first key based on the identifier of the key k and the correspondence #2. For a specific process, refer to the descriptions in FIG. 5f.

For example, the terminal device may determine, based on second indication information, to send the ephemeral public key. The second indication information is from the verification network element, the second indication information indicates a first key agreement algorithm, and the first key agreement algorithm is one of at least one key agreement algorithm. For the at least one key agreement algorithm, refer to the descriptions in S410.

Specifically, the terminal device and the verification network element may negotiate to determine the first key agreement algorithm. That is, in a process of negotiating the first key agreement algorithm, the terminal device receives the second indication information from the verification network element. For a specific process in which the terminal device and the verification network element negotiate to determine the first key agreement algorithm, refer to the descriptions in S410. Details are not described again.

S620: The verification network element performs authentication on the terminal device based on the first key.

Specifically, the verification network element receives a request message from the terminal device, where the request message is for requesting to access a network, and the request message includes a first identifier encrypted by the terminal device by using the first key. The verification network element decrypts the encrypted first identifier based on the first key, and obtains first authentication information based on the first identifier. The verification network element performs authentication on the terminal device based on the first authentication information.

For specific implementation of the foregoing steps, refer to descriptions in S440 to S460. Details are not described again.

The first authentication information is authentication information corresponding to a first authentication mode. Before the request message is sent to the verification network element, the terminal device and the verification network element negotiate to determine the first authentication mode. For a specific process, refer to the descriptions in S430.

For example, the first authentication information includes a first credential of the terminal device. The verification network element performs authentication on the terminal device based on the first credential. For a specific manner in which the verification network element performs authentication on the terminal device based on the first credential, refer to the descriptions in S460.

Optionally, the method further includes S630 and S640.

S630: The verification network element sends a first digital signature to the terminal device. Accordingly, the terminal device receives the first digital signature from the verification network element.

The first digital signature is a signature on a first message using the private key of the verification network element, and the first message includes a message that has been exchanged between the verification network element and the terminal device.

Optionally, if a certificate of the verification network element is not preset in the terminal device, the verification network element sends the certificate of the verification network element to the terminal device, where the certificate includes the public key of the verification network element, and the public key of the verification network element is used by the terminal device to verify the first digital signature.

It should be understood that the verification network element may send the certificate of the verification network element and/or the first digital signature to the terminal device in a key agreement process. For example, when sending the public key of the verification network element, the second public key, or the ciphertext to the terminal device, the verification network element sends the certificate of the verification network element and/or the first digital signature to the terminal device. Alternatively, that the verification network element sends the certificate of the verification network element and/or the first digital signature to the terminal device may be independent of a key agreement process. This is not limited in this application.

S640: The terminal device verifies the first digital signature based on the certificate of the verification network element.

That is, the terminal device verifies the first digital signature based on the certificate of the verification network element, to verify the verification network element. For a process in which the terminal device verifies the verification network element, refer to the descriptions in S420.

With reference to FIG. 4a to FIG. 6, the foregoing describes in detail the communication method provided in embodiments of this application. It should be understood that sequence numbers of the foregoing processes do not mean execution sequences. The execution sequences of the processes should be determined based on functions and internal logic thereof, and should not be construed as any limitation on implementation processes of embodiments of this application.

It should be further understood that, in embodiments of this application, unless otherwise stated or there is a logic conflict, terms and/or descriptions in different embodiments are consistent and may be mutually referenced, and technical features in the different embodiments may be combined into a new embodiment based on an internal logical relationship thereof.

It may be understood that, in the foregoing method embodiments, methods and operations implemented by devices (for example, the foregoing verification network element and terminal device) may alternatively be implemented by components (for example, chips or circuits) of the devices.

The foregoing communication method is mainly described from a perspective of interaction between network elements. It may be understood that, to implement the foregoing functions, each network element includes a corresponding hardware structure and/or software module for performing each function.

With reference to FIG. 7 to FIG. 9, the following describes in detail the communication apparatus provided in embodiments of this application. It should be understood that descriptions of apparatus embodiments and the descriptions of the method embodiments correspond to each other. Therefore, for content that is not described in detail, refer to the foregoing method embodiments. For brevity, details are not described herein again.

FIG. 7 is a diagram of a communication apparatus 700 according to an embodiment of this application.

The apparatus 700 includes an interface unit 710. The interface unit 710 may be configured to implement a corresponding communication function. The interface unit 710 may also be referred to as a communication interface, a communication unit, or a transceiver unit.

Optionally, the apparatus 700 may further include a processing unit 720. The processing unit 720 may be configured to perform data processing.

Optionally, the apparatus 700 further includes a storage unit. The storage unit may be configured to store instructions and/or data. The processing unit 720 may read the instructions and/or the data in the storage unit, so that the apparatus implements actions of different devices in the foregoing method embodiments.

In a possible design, the apparatus 700 may be the verification network element in the foregoing embodiments, or may be a component (for example, a chip) of the verification network element. The apparatus 700 may implement steps or procedures performed by the verification network element in the foregoing method embodiments. The interface unit 710 may be configured to perform receiving and sending-related operations of the verification network element in the foregoing method embodiments. The processing unit 720 may be configured to perform processing-related operations of the verification network element in the foregoing method embodiments.

In another possible design, the apparatus 700 may be the terminal device in the foregoing embodiments, or may be a component (for example, a chip) of the terminal device. The apparatus 700 may implement steps or procedures performed by the terminal device in the foregoing method embodiments. The interface unit 710 may be configured to perform receiving and sending-related operations of the terminal device in the foregoing method embodiments. The processing unit 720 may be configured to perform processing-related operations of the terminal device in the foregoing method embodiments.

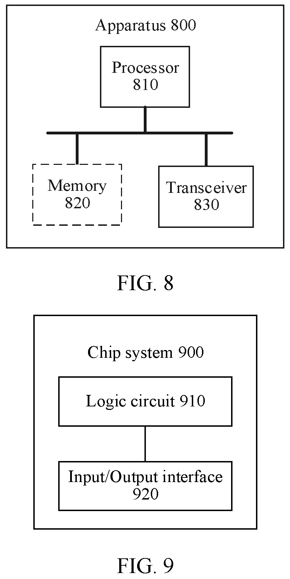

FIG. 8 is a schematic block diagram of a communication apparatus 800 according to an embodiment of this application.

The apparatus 800 includes a processor 810. The processor 810 is coupled to a memory 820. Optionally, the memory 820 is further included. The memory 820 is configured to store a computer program or instructions and/or data. The processor 810 is configured to: execute the computer program or the instructions stored in the memory 820, or read the data stored in the memory 820, to perform the methods in the foregoing method embodiments.

Optionally, there are one or more processors 810.

Optionally, there are one or more memories 820.

Optionally, the memory 820 and the processor 810 are integrated together, or are disposed separately.

Optionally, as shown in FIG. 8, the apparatus 800 further includes a communication interface 830. The communication interface 830 is configured to receive a signal and/or send a signal. For example, the processor 810 is configured to control the communication interface 830 to receive the signal and/or send the signal.

For example, the communication interface 830 may be a transceiver, a circuit, a bus, a module, or another type of communication interface. The communication interface 830 may also be referred to as an interface.

In a solution, the apparatus 800 is configured to implement operations performed by the verification network element in the foregoing method embodiments.

For example, the processor 810 is configured to execute the computer program or the instructions stored in the memory 820, to implement related operations of the verification network element in the foregoing method embodiments.

In another solution, the apparatus 800 is configured to implement operations performed by the terminal device in the foregoing method embodiments.

For example, the processor 810 is configured to execute the computer program or the instructions stored in the memory 820, to implement related operations of the terminal device in the foregoing method embodiments.

In an implementation process, the steps in the foregoing methods may be completed by using a hardware integrated logic circuit in the processor 810 or instructions in a form of software. The methods disclosed with reference to embodiments of this application may be directly performed and completed by a hardware processor, or may be performed and completed by using a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory 820. The processor 810 reads information in the memory 820, and completes the steps of the foregoing methods in combination with hardware thereof. To avoid repetition, details are not described herein again.

It should be understood that, in embodiments of this application, the processor may be one or more integrated circuits, and is configured to execute a related program, to perform the method embodiments of this application.

The processor (for example, the processor 810) may include one or more processors, and is implemented as a combination of compute devices. The processor may include one or more of the following: a microprocessor, a microcontroller, a digital signal processor (digital signal processor, DSP), a digital signal processing device (digital signal processing device, DSPD), an application-specific integrated circuit (application-specific integrated circuit, ASIC), a field programmable gate array (field programmable gate array, FPGA), a programmable logic device (programmable logic device, PLD), gating logic, transistor logic, a discrete hardware circuit, a processing circuit, or other appropriate hardware, firmware, and/or a combination of hardware and software, and is configured to perform various functions described in this disclosure. The processor may be a general-purpose processor or a special-purpose processor. For example, the processor 810 may be a baseband processor or a central processing unit. The baseband processor may be configured to process a communication protocol and communication data. The central processing unit may be configured to cause the apparatus to execute a software program and process data in the software program. A part of the processor may further include a non-volatile random access memory. For example, the processor may further store information about a device type.

The program in this application represents software in a broad sense. A non-limitative example of the software includes program code, a program, a subprogram, instructions, an instruction set, code, a code segment, a software module, an application, a software application program, or the like. The program may be run in the processor and/or a computer, to cause the apparatus to perform various functions and/or processes described in this application.

The memory (for example, the memory 820) may store data needed by the processor (for example, the processor 810) during software execution. The memory may be implemented by using any appropriate storage technology. For example, the memory may be any available storage medium that can be accessed by the processor and/or the computer. A non-limitative example of the storage medium includes: a random access memory (random access memory, RAM), a read-only memory (read-only memory, ROM), an electrically erasable programmable read-only memory (electrically EPROM, EEPROM), a compact disc read-only memory (Compact Disc-ROM, CD-ROM), a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), a direct rambus random access memory (direct rambus RAM, DR RAM), a removable medium, an optical disc memory, a magnetic disk storage medium, a magnetic storage device, a flash memory, a register, a status memory, a remote mounted memory, a local or remote memory component, or any other medium that can carry or store software, data, or information and can be accessible by the processor/computer. It should be noted that the memory described in this specification aims to include but is not limited to these memories and any memory of another appropriate type.

The memory (for example, the memory 820) and the processor (for example, the processor 810) may be separately disposed or integrated together. The memory may be configured to connect to the processor, so that the processor can read information from the memory, and store information in and/or write information to the memory. The memory may be integrated into the processor. The memory and the processor may be disposed in an integrated circuit (for example, the integrated circuit may be disposed in UE or another network node).

FIG. 9 is a schematic block diagram of a chip system 900 according to an embodiment of this application. The chip system 900 (which may be referred to as a processing system) includes a logic circuit 910 and an input/output interface (input/output interface) 920.

The logic circuit 910 may be a processing circuit in the chip system 900. The logic circuit 910 may be coupled to and connected to a storage unit, and invoke instructions in the storage unit, to cause the chip system 900 to implement the methods and functions in embodiments of this application. The input/output interface 920 may be an input/output circuit in the chip system 900, and outputs information processed by the chip system 900, or inputs to-be-processed data or signaling information to the chip system 900 for processing.

In a solution, the chip system 900 is configured to implement operations performed by the verification network element in the foregoing method embodiments.

For example, the logic circuit 910 is configured to implement processing-related operations performed by the verification network element in the foregoing method embodiments, and the input/output interface 920 is configured to implement sending and/or receiving-related operations performed by the verification network element in the foregoing method embodiments.

In another solution, the chip system 900 is configured to implement operations performed by the terminal device in the foregoing method embodiments.

For example, the logic circuit 910 is configured to implement processing-related operations performed by the terminal device in the foregoing method embodiments, and the input/output interface 920 is configured to implement sending and/or receiving-related operations performed by the terminal device in the foregoing method embodiments.

An embodiment of this application further provides a computer-readable storage medium. The computer-readable storage medium stores computer instructions for implementing a method performed by a communication apparatus (for example, the verification network element or the terminal device) in the foregoing method embodiments.

An embodiment of this application further provides a computer program product, including instructions. When the instructions are executed by a computer, a method performed by a communication apparatus (for example, the verification network element or the terminal device) in the foregoing method embodiments is implemented.

An embodiment of this application further provides a communication system. The communication system includes at least one of the verification network element and the terminal device in the foregoing embodiments.

For explanations and beneficial effects of related content of any one of the apparatuses provided above, refer to the corresponding method embodiments provided above. Details are not described herein again.

In the foregoing embodiments, unless otherwise stated or there is a logic conflict, terms and/or descriptions in different embodiments are consistent and may be mutually referenced, and technical features in the different embodiments may be combined into a new embodiment based on an internal logical relationship thereof.

In embodiments of this application, terms such as "example" and "for example" are for representing giving an example, an illustration, or descriptions. Any embodiment or design solution described as an "example" in this application should not be explained as being more preferred or having more advantages than another embodiment or design solution. Exactly, the term "example" is used to present a concept in a specific manner.

It should be understood that "an embodiment" mentioned in the whole specification means that particular features, structures, or characteristics related to the embodiment are included in at least one embodiment of this application. Therefore, embodiments in the entire specification do not necessarily refer to a same embodiment. In addition, these particular features, structures, or characteristics may be combined in one or more embodiments by using any appropriate manner.

It should be understood that, in various embodiments of this application, sequence numbers of the foregoing processes do not mean execution sequences. The execution sequences of the processes should be determined based on functions and internal logic thereof, and should not be construed as any limitation on implementation processes of embodiments of this application. Names of all nodes and messages in this application are merely names specified for ease of description in this application, and may be different in an actual network. It should not be understood that names of various nodes and messages are limited in this application. On the contrary, any name that has a same or similar function as that of a node or a message used in this application is considered as a method or an equivalent replacement in this application, and is within the protection scope of this application.

It should be further understood that, in this application, "when" and "if" both mean that the network element performs corresponding processing in an objective case, are not intended to limit time, do not require the network element to necessarily have a determining action during implementation, and do not mean other limitation.

It should be noted that, in embodiments of this application, "preset", "preconfigure", or the like may be implemented by pre-storing, in a device (for example, a terminal device), corresponding code, a table, or another manner that can indicate related information. A specific implementation thereof is not limited in this application, for example, a preset rule or a preset constant in embodiments of this application.

In addition, the terms "system" and "network" are usually used interchangeably in this specification.

The term "at least one of ..." in this specification represents all or any combination of the listed items. For example, "at least one of A, B, and C" may represent the following six cases: Only A exists, only B exists, only C exists, both A and B exist, both B and C exist, and A, B, and C all exist. In this specification, "at least one" means one or more. "A plurality of" means two or more.

It should be understood that, in embodiments of this application, "B corresponding to A" indicates that B is associated with A, and B may be determined based on A. However, it should be further understood that determining B based on A does not mean that B is determined based only on A. That is, B may alternatively be determined based on A and/or other information.

In addition, "of (of)", "corresponding, relevant (corresponding, relevant)", "corresponding (corresponding)", and "associate (associate)" may be interchangeably used sometimes. It should be noted that meanings expressed by the terms are consistent when differences between the terms are not emphasized. The terms "include", "contain", "have", and variants thereof all mean "include but are not limited to", unless otherwise specially emphasized in another manner.

A person of ordinary skill in the art may be aware that, with reference to the units and algorithm steps in the examples described in embodiments disclosed in this specification, this application can be implemented by electronic hardware or a combination of computer software and the electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the foregoing apparatus embodiments are merely examples. For example, division into the units is merely logical function division. During actual implementation, another division manner may be used. For example, a plurality of units or components may be combined or integrated into another system, or some features may be ignored or not performed. In addition, the displayed or discussed mutual coupling, direct coupling, or communication connection may be implemented through some interfaces. The indirect coupling or communication connection between the apparatuses or the units may be implemented in electrical, mechanical, or other forms.

The units described as separate parts may or may not be physically separate, and parts displayed as units may or may not be physical units, that is, may be located at one location, or may be distributed on a plurality of network units. Some or all of the units may be selected based on actual requirements to achieve the objectives of the solutions in embodiments.

In addition, functional units in embodiments of this application may be integrated into one processing unit, each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions in this application essentially, in other words, the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps in the methods in embodiments of this application. The foregoing storage medium includes any medium that can store program code, for example, a USB flash drive, a removable hard disk, a ROM, a RAM, a magnetic disk, or an optical disc.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, performed by a verification network element, wherein the method comprises:
receiving first indication information from a communication apparatus, wherein the first indication information indicates at least one key agreement algorithm; and
sending second indication information to the communication apparatus, wherein the second indication information indicates a first key agreement algorithm, the first key agreement algorithm is one of the at least one key agreement algorithm, the first key agreement algorithm is for determining a first key, and the first key is for encrypting or decrypting a message transmitted between the communication apparatus and the verification network element.

2. The method according to claim 1, wherein the first key agreement algorithm is determined based on first information and the first indication information, and the first information comprises at least one of the following information:
a security level corresponding to a key agreement algorithm, computational complexity of the key agreement algorithm, a network standard, a type of the communication apparatus, and a computing capability of the communication apparatus.

3. The method according to claim 1 or 2, wherein the at least one key agreement algorithm comprises at least one of the following:
an elliptic curve Diffie-Hellman ECDH key agreement algorithm, an ephemeral elliptic curve Diffie-Hellman ECDHE key agreement algorithm, a key agreement algorithm based on post-quantum cryptography PQC, a key agreement algorithm based on post-quantum cryptography PQC and elliptic curve Diffie-Hellman ECDH, a key agreement algorithm based on post-quantum cryptography PQC and ephemeral elliptic curve Diffie-Hellman ECDHE, and a key agreement algorithm based on a preset key.

4. The method according to claim 3, wherein the method further comprises:
determining the first key based on the first key agreement algorithm.

5. The method according to claim 4, wherein the first key agreement algorithm is the ECDHE key agreement algorithm, and the determining the first key based on the first key agreement algorithm comprises:
receiving a first public key from the communication apparatus, wherein the first public key is a public key in a first ephemeral public-private key pair generated by the communication apparatus; and
determining the first key based on the first public key and a second private key, wherein the second private key is a private key in a second ephemeral public-private key pair generated by the verification network element.

6. The method according to claim 5, wherein the method further comprises:
sending a second public key to the communication apparatus, wherein the second public key is a public key in the second ephemeral public-private key pair, and the second public key is used by the communication apparatus to determine the first key.

7. The method according to claim 4, wherein the first key agreement algorithm is the key agreement algorithm based on PQC, and the determining the first key based on the first key agreement algorithm comprises:
receiving a third public key from the communication apparatus, wherein the third public key is a public key in a third ephemeral public-private key pair generated by the communication apparatus based on the post-quantum cryptography algorithm; and
inputting the third public key into the post-quantum cryptography algorithm to generate a ciphertext and the first key.

8. The method according to claim 7, wherein the method further comprises:
sending the ciphertext to the communication apparatus, wherein the ciphertext is used by the communication apparatus to determine the first key.

9. The method according to claim 4, wherein the first key agreement algorithm is the key agreement algorithm based on PQC and ECDH, and the determining the first key based on the first key agreement algorithm comprises:
receiving a first public key and a third public key from the communication apparatus, wherein the first public key is a public key in a first ephemeral public-private key pair generated by the communication apparatus, and the third public key is a public key in a third ephemeral public-private key pair generated by the communication apparatus based on the post-quantum cryptography algorithm;
determining a second key based on the first public key and a private key of the verification network element;
inputting the third public key into the post-quantum cryptography algorithm to generate a ciphertext and a third key; and
determining the first key based on the second key and the third key.

10. The method according to claim 9, wherein the method further comprises:
sending a public key of the verification network element and the ciphertext to the communication apparatus, wherein the public key of the verification network element and the ciphertext are used by the communication apparatus to determine the first key.

11. The method according to claim 4, wherein the first key agreement algorithm is the key agreement algorithm based on PQC and ECDHE, and the determining the first key based on the first key agreement algorithm comprises:
receiving a first public key and a third public key from the communication apparatus, wherein the first public key is a public key in a first ephemeral public-private key pair generated by the communication apparatus, and the third public key is a public key in a third ephemeral public-private key pair generated by the communication apparatus based on the post-quantum cryptography algorithm;
determining a second key based on the first public key and a second private key, wherein the second private key is a private key in a second ephemeral public-private key pair generated by the verification network element;
inputting the third public key into the post-quantum cryptography algorithm to generate a ciphertext and a third key; and
determining the first key based on the second key and the third key.

12. The method according to claim 11, wherein the method further comprises:
sending a second public key and the ciphertext to the communication apparatus, wherein the second public key is a public key in the second ephemeral public-private key pair, and the second public key and the ciphertext are used by the communication apparatus to determine the first key.

13. The method according to any one of claims 1 to 12, wherein the method further comprises:
sending a first digital signature to the communication apparatus, wherein the first digital signature is a signature on a first message using the private key of the verification network element, and the first message comprises a message that has been exchanged between the verification network element and the communication apparatus; and
sending a certificate of the verification network element to the communication apparatus, wherein the certificate comprises the public key of the verification network element, and the public key of the verification network element is used by the communication apparatus to verify the first digital signature.

14. The method according to any one of claims 1 to 13, wherein the method further comprises:
receiving a request message from the communication apparatus, wherein the request message is for requesting to access a network, the request message comprises a first identifier encrypted by using the first key, and there is a correspondence between the first identifier and authentication information of the communication apparatus;
obtaining first authentication information in the authentication information based on the first identifier; and
performing authentication on the communication apparatus based on the first authentication information.

15. The method according to claim 14, wherein before the receiving the request message from the communication apparatus, the method further comprises:
receiving third indication information from the communication apparatus, wherein the third indication information indicates at least one authentication mode, and authentication information indicated by each of the at least one authentication mode is independent of each other; and
sending fourth indication information to the communication apparatus, wherein the fourth indication information indicates a first authentication mode, the first authentication mode is one of the at least one authentication mode, and the first authentication mode corresponds to the first authentication information.

16. The method according to claim 14 or 15, wherein the authentication information comprises any one of the following information:
a credential of the communication apparatus and a cryptographic algorithm, wherein
the credential of the communication apparatus comprises a public key of the communication apparatus, and the cryptographic algorithm comprises a signature algorithm applicable to the communication apparatus.

17. The method according to claim 15 or 16, wherein a type of a first identifier indicated by each of the at least one authentication mode is different, and the first identifier comprises at least one of the following:
a first-type identifier of the communication apparatus, a second-type identifier of the communication apparatus, a block identifier or a transaction identifier, and a pseudo identifier of the communication apparatus, wherein
there is a first correspondence between the first-type identifier and a root key of the communication apparatus, there is a second correspondence between the second-type identifier and at least one credential of the communication apparatus, the block identifier or the transaction identifier is for obtaining the second correspondence stored on a blockchain, and there is a correspondence between the pseudo identifier and the second-type identifier.

18. The method according to any one of claims 15 to 17, wherein the first authentication mode is determined based on second information and the third indication information, and the second information comprises at least one of the following information:
an issuer of the credential of the communication apparatus, a security level of the credential of the communication apparatus, and a cryptographic algorithm corresponding to the credential of the communication apparatus.

19. The method according to any one of claims 14 to 18, wherein the first authentication information comprises a first credential of the communication apparatus, and the performing authentication on the communication apparatus based on the first authentication information comprises:
verifying the first credential based on a credential of an issuer of the first credential;
receiving a second digital signature from the communication apparatus, wherein the second digital signature is a signature on a second message using a private key of the communication apparatus, and the second message comprises a message that has been exchanged between the communication apparatus and the verification network element; and
verifying the second digital signature based on a public key corresponding to the first credential.

20. A communication method, performed by a verification network element, wherein the method comprises:
receiving an ephemeral public key from a communication apparatus, wherein the ephemeral public key is a public key in an ephemeral public-private key pair generated by the communication apparatus; and
performing authentication on the communication apparatus based on a first key, wherein the first key is determined based on the ephemeral public key and a second private key, and the second private key is a private key of the verification network element or a private key in an ephemeral public-private key pair generated by the verification network element; or the first key is generated by inputting the ephemeral public key into a post-quantum cryptography algorithm.

21. The method according to claim 20, wherein if the first key is determined based on the ephemeral public key and the second private key, and the second private key is the private key in the ephemeral public-private key pair generated by the verification network element, the method further comprises:
sending a second public key to the communication apparatus, wherein the second public key comprises a public key in the ephemeral public-private key pair generated by the verification network element, and the second public key is used by the communication apparatus to determine the first key.

22. The method according to claim 20, wherein the ephemeral public key is a third public key, the third public key is a public key in a third ephemeral public-private key pair generated by the communication apparatus based on the post-quantum cryptography algorithm, and the first key is generated by inputting the third public key into the post-quantum cryptography algorithm.

23. The method according to claim 22, wherein the method further comprises:
sending a ciphertext to the communication apparatus, wherein the ciphertext is generated by inputting the third public key into the post-quantum cryptography algorithm, and the ciphertext is used by the communication apparatus to determine the first key.

24. The method according to claim 20, wherein the ephemeral public key comprises a first public key and a third public key, the first public key is a public key in a first ephemeral public-private key pair generated by the communication apparatus, the third public key is a public key in a third ephemeral public-private key pair generated by the communication apparatus based on the post-quantum cryptography algorithm, and the first key being determined based on the ephemeral public key and the second private key comprises:
the first key is determined based on a second key and a third key, wherein the second key is determined based on the second private key and the first public key, and the third key is generated by inputting the third public key into the post-quantum cryptography algorithm.

25. The method according to claim 24, wherein the method further comprises:
sending a ciphertext and a second public key to the communication apparatus, wherein the second public key comprises a public key of the verification network element or a public key in the ephemeral public-private key pair generated by the verification network element, the ciphertext is generated by inputting the third public key into the post-quantum cryptography algorithm, and the ciphertext and the second public key are used by the communication apparatus to determine the first key.

26. The method according to any one of claims 20 to 25, wherein the ephemeral public key is sent based on second indication information, the second indication information indicates a first key agreement algorithm, the first key agreement algorithm is one of at least one key agreement algorithm, and before the receiving the ephemeral public key from the communication apparatus, the method further comprises:
receiving first indication information from the communication apparatus, wherein the first indication information indicates the at least one key agreement algorithm; and
sending the second indication information to the communication apparatus.

27. The method according to claim 26, wherein the first key agreement algorithm is determined based on first information and the first indication information, and the first information comprises at least one of the following information:
a security level corresponding to a key agreement algorithm, computational complexity of the key agreement algorithm, a network standard, a type of the communication apparatus, and a computing capability of the communication apparatus.

28. The method according to claim 26 or 27, wherein the at least one key agreement algorithm comprises at least one of the following:
an elliptic curve Diffie-Hellman ECDH key agreement algorithm, an ephemeral elliptic curve Diffie-Hellman ECDHE key agreement algorithm, the key agreement algorithm based on post-quantum cryptography PQC, a key agreement algorithm based on post-quantum cryptography PQC and elliptic curve Diffie-Hellman ECDH, a key agreement algorithm based on post-quantum cryptography PQC and ephemeral elliptic curve Diffie-Hellman ECDHE, and a key agreement algorithm based on a preset key.

29. The method according to any one of claims 20 to 28, wherein the method further comprises:
sending a first digital signature to the communication apparatus, wherein the first digital signature is a signature on a first message using the private key of the verification network element, and the first message comprises a message that has been exchanged between the verification network element and the communication apparatus; and
sending a certificate of the verification network element to the communication apparatus, wherein the certificate comprises the public key of the verification network element, and the public key of the verification network element is used by the communication apparatus to verify the first digital signature.

30. The method according to any one of claims 20 to 29, wherein the performing authentication on the communication apparatus based on the first key comprises:
receiving a request message from the communication apparatus, wherein the request message is for requesting to access a network, the request message comprises a first identifier encrypted by the communication apparatus by using the first key, and there is a correspondence between the first identifier and authentication information of the communication apparatus;
decrypting the encrypted first identifier based on the first key;
obtaining first authentication information in the authentication information based on the first identifier; and
performing authentication on the communication apparatus based on the first authentication information.

31. The method according to claim 30, wherein before the receiving the request message from the communication apparatus, the method further comprises:
receiving third indication information from the communication apparatus, wherein the third indication information indicates at least one authentication mode, and authentication information indicated by each of the at least one authentication mode is different; and
sending fourth indication information to the communication apparatus, wherein the fourth indication information indicates a first authentication mode, the first authentication mode is one of the at least one authentication mode, and the first authentication mode corresponds to the first authentication information.

32. The method according to claim 30 or 31, wherein the authentication information comprises any one of the following information:
a credential of the communication apparatus and a cryptographic algorithm, wherein
the credential of the communication apparatus comprises a public key of the communication apparatus, and the cryptographic algorithm comprises a signature algorithm applicable to the communication apparatus.

33. The method according to claim 31 or 32, wherein a type of a first identifier indicated by each of the at least one authentication mode is different, and the first identifier comprises at least one of the following:
a first-type identifier of the communication apparatus, a second-type identifier of the communication apparatus, a block identifier or a transaction identifier, and a pseudo identifier of the communication apparatus, wherein
there is a first correspondence between the first-type identifier and a root key of the communication apparatus, there is a second correspondence between the second-type identifier and at least one credential of the communication apparatus, the block identifier or the transaction identifier is for obtaining the second correspondence stored on a blockchain, and there is a correspondence between the pseudo identifier and the second-type identifier.

34. The method according to any one of claims 31 to 33, wherein the first authentication mode is determined based on second information and the third indication information, and the second information comprises at least one of the following information:
an issuer of the credential of the communication apparatus, a security level of the credential of the communication apparatus, and a cryptographic algorithm corresponding to the credential of the communication apparatus.

35. The method according to any one of claims 30 to 34, wherein the authentication information comprises a first credential of the communication apparatus, and the performing authentication on the communication apparatus based on the first authentication information comprises:
verifying the first credential based on a credential of an issuer of the first credential;
receiving a second digital signature from the communication apparatus, wherein the second digital signature is a signature of the communication apparatus on a second message, and the second message comprises a message that has been exchanged between the communication apparatus and the verification network element; and
verifying the second digital signature based on a public key corresponding to the first credential.

36. A communication method, performed by a communication apparatus, wherein the method comprises:
sending first indication information to a verification network element, wherein the first indication information indicates at least one key agreement algorithm; and
receiving second indication information from the verification network element, wherein the second indication information indicates a first key agreement algorithm, the first key agreement algorithm is one of the at least one key agreement algorithm, the first key agreement algorithm is for determining a first key, and the first key is for encrypting or decrypting a message transmitted between the communication apparatus and the verification network element.

37. The method according to claim 36, wherein the first key agreement algorithm is determined based on first information and the first indication information, and the first information comprises at least one of the following information:
a security level corresponding to a key agreement algorithm, computational complexity of the key agreement algorithm, a network standard, a type of the communication apparatus, and a computing capability of the communication apparatus.

38. The method according to claim 36 or 37, wherein the at least one key agreement algorithm comprises at least one of the following:
an elliptic curve Diffie-Hellman ECDH key agreement algorithm, an ephemeral elliptic curve Diffie-Hellman ECDHE key agreement algorithm, a key agreement algorithm based on post-quantum cryptography PQC, a key agreement algorithm based on post-quantum cryptography PQC and elliptic curve Diffie-Hellman ECDH, a key agreement algorithm based on post-quantum cryptography PQC and ephemeral elliptic curve Diffie-Hellman ECDHE, and a key agreement algorithm based on a preset key.

39. The method according to claim 22, wherein the method further comprises:
determining the first key based on the first key agreement algorithm.

40. The method according to claim 23, wherein the first key agreement algorithm is the ECDHE key agreement algorithm, and the determining the first key based on the first key agreement algorithm comprises:
receiving a second public key from the verification network element, wherein the second public key is a public key in a second ephemeral public-private key pair generated by the verification network element; and
determining the first key based on the second public key and a first private key, wherein the first private key is a private key in a first ephemeral public-private key pair generated by the communication apparatus.

41. The method according to claim 22 or 23, wherein before the determining the first key based on the first key agreement algorithm, the method further comprises:
sending a first public key to the verification network element, wherein the first public key is a public key in a first ephemeral public-private key pair generated by the communication apparatus, and the first public key is used by the verification network element to determine the first key.

42. The method according to claim 23, wherein the first key agreement algorithm is the key agreement algorithm based on PQC, and the determining the first key based on the first key agreement algorithm comprises:
receiving a ciphertext from the verification network element, wherein the ciphertext is generated by the verification network element based on the post-quantum cryptography algorithm; and
inputting the ciphertext and a third private key into the post-quantum cryptography algorithm to generate the first key, wherein the third private key is a private key in a third ephemeral public-private key pair generated by the communication apparatus based on the post-quantum cryptography algorithm.

43. The method according to claim 26, wherein before the determining the first key based on the first key agreement algorithm, the method further comprises:
sending a third public key to the verification network element, wherein the third public key is a public key in the third ephemeral public-private key pair, and the third public key is used by the verification network element to determine the first key.

44. The method according to claim 23, wherein the first key agreement algorithm is the key agreement algorithm based on PQC and ECDH, and the determining the first key based on the first key agreement algorithm comprises:
receiving a ciphertext and a public key of the verification network element from the verification network element, wherein the ciphertext is generated by the verification network element based on the post-quantum cryptography algorithm;
determining a second key based on the public key of the verification network element and a first private key, wherein the first private key is a private key in a first ephemeral public-private key pair generated by the communication apparatus;
inputting the ciphertext and a third private key into the post-quantum cryptography algorithm to generate a third key, wherein the third private key is a private key in a third ephemeral public-private key pair generated by the communication apparatus based on the post-quantum cryptography algorithm; and
determining the first key based on the second key and the third key.

45. The method according to claim 23, wherein the first key agreement algorithm is the key agreement algorithm based on PQC and ECDHE, and the determining the first key based on the first key agreement algorithm comprises:
receiving a ciphertext and a second public key from the verification network element, wherein the ciphertext is generated by the verification network element based on the post-quantum cryptography algorithm, and the second public key is a public key in a second ephemeral public-private key pair generated by the verification network element;
determining a second key based on the second public key and a first private key, wherein the first private key is a private key in a first ephemeral public-private key pair generated by the communication apparatus;
inputting the ciphertext and a third private key into the post-quantum cryptography algorithm to generate a third key, wherein the third private key is a private key in a third ephemeral public-private key pair generated by the communication apparatus based on the post-quantum cryptography algorithm; and
determining the first key based on the second key and the third key.

46. The method according to claim 28 or 29, wherein before the determining the first key based on the first key agreement algorithm, the method further comprises:
sending a first public key and a third public key to the verification network element, wherein the first public key is a public key in the first ephemeral public-private key pair, the third public key is a public key in the third ephemeral public-private key pair, and the first public key and the third public key are used by the verification network element to determine the first key.

47. The method according to any one of claims 20 to 30, wherein the method further comprises:
receiving a first digital signature from the verification network element, wherein the first digital signature is a signature on a first message using a private key of the verification network element, and the first message comprises a message that has been exchanged between the verification network element and the communication apparatus;
receiving a certificate of the verification network element from the verification network element, wherein the certificate comprises the public key of the verification network element; and
verifying the first digital signature based on the public key of the verification network element.

48. The method according to any one of claims 20 to 31, wherein the method further comprises:
sending a request message to the verification network element, wherein the request message is for requesting to access a network, the request message comprises a first identifier encrypted by using the first key, there is a correspondence between the first identifier and authentication information of the communication apparatus, the authentication information comprises first authentication information, and the first authentication information is for performing authentication on the communication apparatus.

49. The method according to claim 32, wherein before the sending the request message to the verification network element, the method further comprises:
sending third indication information to the verification network element, wherein the third indication information indicates at least one authentication mode, and authentication information indicated by each of the at least one authentication mode is independent of each other; and
receiving fourth indication information from the verification network element, wherein the fourth indication information indicates a first authentication mode, the first authentication mode is one of the at least one authentication mode, and the first authentication mode corresponds to the first authentication information.

50. The method according to claim 32 or 33, wherein the authentication information comprises any one of the following information:
a credential of the communication apparatus and a cryptographic algorithm, wherein
the credential of the communication apparatus comprises a public key of the communication apparatus, and the cryptographic algorithm comprises a signature algorithm applicable to the communication apparatus.

51. The method according to claim 33 or 34, wherein a type of a first identifier indicated by each of the at least one authentication mode is different, and the first identifier comprises at least one of the following:
a first-type identifier of the communication apparatus, a second-type identifier of the communication apparatus, a block identifier or a transaction identifier, and a pseudo identifier of the communication apparatus, wherein
there is a first correspondence between the first-type identifier and a root key of the communication apparatus, there is a second correspondence between the second-type identifier and at least one credential of the communication apparatus, the block identifier or the transaction identifier is for obtaining the second correspondence stored on a blockchain, and there is a correspondence between the pseudo identifier and the second-type identifier.

52. The method according to any one of claims 33 to 35, wherein the first authentication mode is determined based on second information and the third indication information, and the second information comprises at least one of the following information:
an issuer of the credential of the communication apparatus, a security level of the credential of the communication apparatus, and a cryptographic algorithm corresponding to the credential of the communication apparatus.

53. The method according to any one of claims 32 to 36, wherein the method further comprises:
sending a second digital signature to the verification network element, wherein the second digital signature is a signature on a second message using a private key of the communication apparatus, the second message comprises a message that has been exchanged between the communication apparatus and the verification network element, and the second digital signature is used by the verification network element to perform authentication on the communication apparatus.

54. A communication method, performed by a communication apparatus, wherein the method comprises:
sending an ephemeral public key to the verification network element, wherein the ephemeral public key is a public key in an ephemeral public-private key pair generated by the communication apparatus, the ephemeral public key is for determining a first key, and the first key is used by the verification network element to perform authentication on the communication apparatus, wherein
the first key is determined based on the ephemeral public key and a second private key, and the second private key is a private key of the verification network element or a private key in an ephemeral public-private key pair generated by the verification network element; or the first key is generated by inputting the ephemeral public key into a post-quantum cryptography algorithm.

55. The method according to claim 54, wherein if the first key is determined based on the ephemeral public key and the second private key, and the second private key is the private key in the ephemeral public-private key pair generated by the verification network element, the method further comprises:
receiving a second public key from the verification network element, wherein the second public key is a public key in the ephemeral public-private key pair generated by the verification network element; and
determining the first key based on a first private key and the second public key, wherein the first public key is a private key in the ephemeral public-private key pair generated by the communication apparatus.

56. The method according to claim 54, wherein the ephemeral public key is a third public key, the third public key is a public key in a third ephemeral public-private key pair generated by the communication apparatus based on the post-quantum cryptography algorithm, and the first key is generated by inputting the third public key into the post-quantum cryptography algorithm.

57. The method according to claim 56, wherein the method further comprises:
receiving a ciphertext from the verification network element, wherein the ciphertext is generated by inputting the third public key into the post-quantum cryptography algorithm; and
inputting the ciphertext and a third private key into the post-quantum cryptography algorithm to generate the first key, wherein the third private key is a private key in the third ephemeral public-private key pair.

58. The method according to claim 54, wherein the ephemeral public key comprises a first public key and a third public key, the first public key is a public key in a first ephemeral public-private key pair generated by the communication apparatus, the third public key is a public key in a third ephemeral public-private key pair generated by the communication apparatus based on the post-quantum cryptography algorithm, and the first key being determined based on the ephemeral public key and the second private key comprises:
the first key is determined based on a second key and a third key, wherein the second key is determined based on the second private key and the first public key, and the third key is generated by inputting the third public key into the post-quantum cryptography algorithm.

59. The method according to claim 58, wherein the method further comprises:
receiving a ciphertext and a second public key from the verification network element, wherein the second public key comprises a public key of the verification network element or a public key in the ephemeral public-private key pair generated by the verification network element, and the ciphertext is generated by inputting the third public key into the post-quantum cryptography algorithm;
generating the second key based on a first private key and the second public key, wherein the first private key is a private key in the first public-private key pair;
inputting the ciphertext and a third private key into the post-quantum cryptography algorithm to generate the third key, wherein the third private key is a private key in the third public-private key pair; and
determining the first key based on the second key and the third key.

60. The method according to any one of claims 54 to 59, wherein the ephemeral public key is sent based on second indication information, the second indication information indicates a first key agreement algorithm, the first key agreement algorithm is one of at least one key agreement algorithm, and before the receiving the ephemeral public key from the communication apparatus, the method further comprises:
sending first indication information to the verification network element, wherein the first indication information indicates the at least one key agreement algorithm; and
receiving the second indication information from the verification network element.

61. The method according to claim 60, wherein the first key agreement algorithm is determined based on first information and the first indication information, and the first information comprises at least one of the following information:
a security level corresponding to a key agreement algorithm, computational complexity of the key agreement algorithm, a network standard, a type of the communication apparatus, and a computing capability of the communication apparatus.

62. The method according to claim 60 or 61, wherein the at least one key agreement algorithm comprises at least one of the following:
an elliptic curve Diffie-Hellman ECDH key agreement algorithm, an ephemeral elliptic curve Diffie-Hellman ECDHE key agreement algorithm, the key agreement algorithm based on post-quantum cryptography PQC, a key agreement algorithm based on post-quantum cryptography PQC and elliptic curve Diffie-Hellman ECDH, a key agreement algorithm based on post-quantum cryptography PQC and ephemeral elliptic curve Diffie-Hellman ECDHE, and a key agreement algorithm based on a preset key.

63. The method according to any one of claims 54 to 62, wherein the method further comprises:
receiving a first digital signature from the verification network element, wherein the first digital signature is a signature on a first message using the private key of the verification network element, and the first message comprises a message that has been exchanged between the verification network element and the communication apparatus;
receiving a certificate of the verification network element from the verification network element, wherein the certificate comprises the public key of the verification network element; and
verifying the first digital signature based on the public key of the verification network element.

64. The method according to any one of claims 54 to 63, wherein the method further comprises:
sending a request message to the verification network element, wherein the request message is for requesting to access a network, the request message comprises a first identifier encrypted by the communication apparatus by using the first key, there is a correspondence between the first identifier and authentication information of the communication apparatus, the authentication information comprises first authentication information, and the first authentication information is for performing authentication on the communication apparatus.

65. The method according to claim 64, wherein before the sending the request message to the verification network element, the method further comprises:
sending third indication information to the verification network element, wherein the third indication information indicates at least one authentication mode, and authentication information indicated by each of the at least one authentication mode is different; and
receiving fourth indication information from the verification network element, wherein the fourth indication information indicates a first authentication mode, the first authentication mode is one of the at least one authentication mode, and the first authentication mode corresponds to the first authentication information.

66. The method according to claim 64 or 65, wherein the authentication information indicates any one of the following information:
a credential of the communication apparatus and a cryptographic algorithm, wherein
the credential of the communication apparatus comprises a public key of the communication apparatus, and the cryptographic algorithm comprises a signature algorithm applicable to the communication apparatus.

67. The method according to claim 66, wherein a type of a first identifier indicated by each of the at least one authentication mode is different, and the first identifier comprises at least one of the following:
a first-type identifier of the communication apparatus, a second-type identifier of the communication apparatus, a block identifier or a transaction identifier, and a pseudo identifier of the communication apparatus, wherein
there is a first correspondence between the first-type identifier and a root key of the communication apparatus, there is a second correspondence between the second-type identifier and at least one credential of the communication apparatus, the block identifier or the transaction identifier is for obtaining the second correspondence stored on a blockchain, and there is a correspondence between the pseudo identifier and the second-type identifier.

68. The method according to any one of claims 65 to 67, wherein the first authentication mode is determined based on second information and the third indication information, and the second information comprises at least one of the following information:
an issuer of the credential of the communication apparatus, a security level of the credential of the communication apparatus, and a cryptographic algorithm corresponding to the credential of the communication apparatus.

69. The method according to any one of claims 64 to 68, wherein the method further comprises:
sending a second digital signature to the verification network element, wherein the second digital signature is a signature on a second message using a private key of the communication apparatus, the second message comprises a message that has been exchanged between the communication apparatus and the verification network element, and the second digital signature is used by the verification network element to perform authentication on the communication apparatus.

70. A communication apparatus, wherein the communication apparatus comprises a transceiver unit, and the transceiver unit is configured to:
receive first indication information from a first apparatus, wherein the first indication information indicates at least one key agreement algorithm; and
send second indication information to the first apparatus, wherein the second indication information indicates a first key agreement algorithm, the first key agreement algorithm is one of the at least one key agreement algorithm, the first key agreement algorithm is for determining a first key, and the first key is for encrypting or decrypting a message transmitted between the first apparatus and the communication apparatus.

71. The communication apparatus according to claim 70, wherein the first key agreement algorithm is determined based on first information and the first indication information, and the first information comprises at least one of the following information:
a security level corresponding to a key agreement algorithm, computational complexity of the key agreement algorithm, a network standard, a type of the first apparatus, and a computing capability of the first apparatus.

72. The communication apparatus according to claim 70 or 71, wherein the at least one key agreement algorithm comprises at least one of the following:
an elliptic curve Diffie-Hellman ECDH key agreement algorithm, an ephemeral elliptic curve Diffie-Hellman ECDHE key agreement algorithm, a key agreement algorithm based on post-quantum cryptography PQC, a key agreement algorithm based on post-quantum cryptography PQC and elliptic curve Diffie-Hellman ECDH, a key agreement algorithm based on post-quantum cryptography PQC and ephemeral elliptic curve Diffie-Hellman ECDHE, and a key agreement algorithm based on a preset key.

73. The communication apparatus according to claim 72, wherein the communication apparatus further comprises a processing unit, and the processing unit is configured to:
determine the first key based on the first key agreement algorithm.

74. The communication apparatus according to claim 73, wherein the first key agreement algorithm is the ECDHE key agreement algorithm;
the transceiver unit is further configured to receive a first public key from the first apparatus, wherein the first public key is a public key in a first ephemeral public-private key pair generated by the first apparatus; and
the processing unit is specifically configured to determine the first key based on the first public key and a second private key, wherein the second private key is a private key in a second ephemeral public-private key pair generated by the communication apparatus.

75. The communication apparatus according to claim 74, wherein the transceiver unit is further configured to:
send a second public key to the first apparatus, wherein the second public key is a public key in the second ephemeral public-private key pair, and the second public key is used by the first apparatus to determine the first key.

76. The communication apparatus according to claim 73, wherein the first key agreement algorithm is the key agreement algorithm based on PQC;
the transceiver unit is further configured to receive a third public key from the first apparatus, wherein the third public key is a public key in a third ephemeral public-private key pair generated by the first apparatus based on the post-quantum cryptography algorithm; and
the processing unit is specifically configured to input the third public key into the post-quantum cryptography algorithm to generate a ciphertext and the first key.

77. The communication apparatus according to claim 76, wherein the transceiver unit is further configured to:
send the ciphertext to the first apparatus, wherein the ciphertext is used by the first apparatus to determine the first key.

78. The communication apparatus according to claim 73, wherein the first key agreement algorithm is the key agreement algorithm based on PQC and ECDH;
the transceiver unit is further configured to receive a first public key and a third public key from the first apparatus, wherein the first public key is a public key in a first ephemeral public-private key pair generated by the first apparatus, and the third public key is a public key in a third ephemeral public-private key pair generated by the first apparatus based on the post-quantum cryptography algorithm; and
the processing unit is specifically configured to:
determine a second key based on the first public key and a private key of the communication apparatus;
input the third public key into the post-quantum cryptography algorithm to generate a ciphertext and a third key; and
determine the first key based on the second key and the third key.

79. The communication apparatus according to claim 78, wherein the transceiver unit is further configured to:
sending a public key of the communication apparatus and the ciphertext to the first apparatus, wherein the public key of the communication apparatus and the ciphertext are used by the first apparatus to determine the first key.

80. The communication apparatus according to claim 73, wherein the first key agreement algorithm is the key agreement algorithm based on PQC and ECDHE;
the transceiver unit is further configured to receive a first public key and a third public key from the first apparatus, wherein the first public key is a public key in a first ephemeral public-private key pair generated by the first apparatus, and the third public key is a public key in a third ephemeral public-private key pair generated by the first apparatus based on the post-quantum cryptography algorithm; and
the processing unit is specifically configured to:
determine a second key based on the first public key and a second private key, wherein the second private key is a private key in a second ephemeral public-private key pair generated by the communication apparatus;
input the third public key into the post-quantum cryptography algorithm to generate a ciphertext and a third key; and
determine the first key based on the second key and the third key.

81. The communication apparatus according to claim 80, wherein the transceiver unit is further configured to:
send a second public key and the ciphertext to the first apparatus, wherein the second public key is a public key in the second ephemeral public-private key pair, and the second public key and the ciphertext are used by the first apparatus to determine the first key.

82. The communication apparatus according to any one of claims 70 to 81, wherein the transceiver unit is further configured to:
send a first digital signature to the first apparatus, wherein the first digital signature is a signature on a first message using the private key of the communication apparatus, and the first message comprises a message that has been exchanged between the communication apparatus and the first apparatus; and
send a certificate of the communication apparatus to the first apparatus, wherein the certificate comprises the public key of the communication apparatus, and the public key of the communication apparatus is used by the first apparatus to verify the first digital signature.

83. The communication apparatus according to any one of claims 70 to 82, wherein the communication apparatus further comprises the processing unit;
the transceiver unit is further configured to receive a request message from the first apparatus, wherein the request message is for requesting to access a network, the request message comprises a first identifier encrypted by using the first key, and there is a correspondence between the first identifier and authentication information of the first apparatus; and
the processing unit is configured to:
obtain first authentication information in the authentication information based on the first identifier; and
perform authentication on the first apparatus based on the first authentication information.

84. The communication apparatus according to claim 83, wherein the transceiver unit is further configured to:
receive third indication information from the first apparatus, wherein the third indication information indicates at least one authentication mode, and authentication information indicated by each of the at least one authentication mode is independent of each other; and
send fourth indication information to the first apparatus, wherein the fourth indication information indicates a first authentication mode, the first authentication mode is one of the at least one authentication mode, and the first authentication mode corresponds to the first authentication information.

85. The communication apparatus according to claim 83 or 84, wherein the authentication information comprises any one of the following information:
a credential of the first apparatus and a cryptographic algorithm, wherein
the credential of the first apparatus comprises a public key of the first apparatus, and the cryptographic algorithm comprises a signature algorithm applicable to the first apparatus.

86. The communication apparatus according to claim 84 or 85, wherein a type of a first identifier indicated by each of the at least one authentication mode is different, and the first identifier comprises at least one of the following:
a first-type identifier of the first apparatus, a second-type identifier of the first apparatus, a block identifier or a transaction identifier, and a pseudo identifier of the first apparatus, wherein
there is a first correspondence between the first-type identifier and a root key of the first apparatus, there is a second correspondence between the second-type identifier and at least one credential of the first apparatus, the block identifier or the transaction identifier is for obtaining the second correspondence stored on a blockchain, and there is a correspondence between the pseudo identifier and the second-type identifier.

87. The communication apparatus according to any one of claims 84 to 86, wherein the first authentication mode is determined based on second information and the third indication information, and the second information comprises at least one of the following information:
an issuer of the credential of the first apparatus, a security level of the credential of the first apparatus, and a cryptographic algorithm corresponding to the credential of the first apparatus.

88. The communication apparatus according to any one of claims 83 to 87, wherein the first authentication information comprises a first credential of the first apparatus;
the processing unit is specifically configured to verify the first credential based on a credential of an issuer of the first credential;
the transceiver unit is further configured to receive a second digital signature from the first apparatus, wherein the second digital signature is a signature on a second message using a private key of the first apparatus, and the second message comprises a message that has been exchanged between the first apparatus and the communication apparatus; and
the processing unit is further configured to verify the second digital signature based on a public key corresponding to the first credential.

89. A communication apparatus, wherein the communication apparatus comprises a transceiver unit and a processing unit, wherein
the transceiver unit is configured to receive an ephemeral public key from a first apparatus, wherein the ephemeral public key is a public key in an ephemeral public-private key pair generated by the first apparatus; and
the processing unit is configured to perform authentication on the first apparatus based on a first key, wherein the first key is determined based on the ephemeral public key and a second private key, and the second private key is a private key of the communication apparatus or a private key in an ephemeral public-private key pair generated by the communication apparatus; or the first key is generated by inputting the ephemeral public key into a post-quantum cryptography algorithm.

90. The communication apparatus according to claim 89, wherein if the first key is determined based on the ephemeral public key and the second private key, and the second private key is the private key in the ephemeral public-private key pair generated by the communication apparatus, the transceiver unit is further configured to:
send a second public key to the first apparatus, wherein the second public key comprises a public key in the ephemeral public-private key pair generated by the communication apparatus, and the second public key is used by the first apparatus to determine the first key.

91. The communication apparatus according to claim 89, wherein the ephemeral public key is a third public key, the third public key is a public key in a third ephemeral public-private key pair generated by the first apparatus based on the post-quantum cryptography algorithm, and the first key is generated by inputting the third public key into the post-quantum cryptography algorithm.

92. The communication apparatus according to claim 91, wherein the transceiver unit is further configured to:
send a ciphertext to the first apparatus, wherein the ciphertext is generated by inputting the third public key into the post-quantum cryptography algorithm, and the ciphertext is used by the first apparatus to determine the first key.

93. The communication apparatus according to claim 89, wherein the ephemeral public key comprises a first public key and a third public key, the first public key is a public key in a first ephemeral public-private key pair generated by the first apparatus, the third public key is a public key in a third ephemeral public-private key pair generated by the first apparatus based on the post-quantum cryptography algorithm, and the first key being determined based on the ephemeral public key and the second private key comprises:
the first key is determined based on a second key and a third key, wherein the second key is determined based on the second private key and the first public key, and the third key is generated by inputting the third public key into the post-quantum cryptography algorithm.

94. The communication apparatus according to claim 93, wherein the transceiver unit is further configured to:
send a ciphertext and a second public key to the first apparatus, wherein the second public key comprises a public key of the communication apparatus or a public key in the ephemeral public-private key pair generated by the communication apparatus, the ciphertext is generated by inputting the third public key into the post-quantum cryptography algorithm, and the ciphertext and the second public key are used by the first apparatus to determine the first key.

95. The communication apparatus according to any one of claims 89 to 94, wherein the ephemeral public key is sent based on second indication information, the second indication information indicates a first key agreement algorithm, the first key agreement algorithm is one of at least one key agreement algorithm, and the transceiver unit is further configured to:
receive first indication information from the first apparatus, wherein the first indication information indicates the at least one key agreement algorithm; and
send the second indication information to the first apparatus.

96. The communication apparatus according to claim 95, wherein the first key agreement algorithm is determined based on first information and the first indication information, and the first information comprises at least one of the following information:
a security level corresponding to a key agreement algorithm, computational complexity of the key agreement algorithm, a network standard, a type of the first apparatus, and a computing capability of the first apparatus.

97. The communication apparatus according to claim 95 or 96, wherein the at least one key agreement algorithm comprises at least one of the following:
an elliptic curve Diffie-Hellman ECDH key agreement algorithm, an ephemeral elliptic curve Diffie-Hellman ECDHE key agreement algorithm, the key agreement algorithm based on post-quantum cryptography PQC, a key agreement algorithm based on post-quantum cryptography PQC and elliptic curve Diffie-Hellman ECDH, a key agreement algorithm based on post-quantum cryptography PQC and ephemeral elliptic curve Diffie-Hellman ECDHE, and a key agreement algorithm based on a preset key.

98. The communication apparatus according to any one of claims 89 to 97, wherein the transceiver unit is further configured to:
send a first digital signature to the first apparatus, wherein the first digital signature is a signature on a first message using the private key of the communication apparatus, and the first message comprises a message that has been exchanged between the communication apparatus and the first apparatus; and
send a certificate of the communication apparatus to the first apparatus, wherein the certificate comprises the public key of the communication apparatus, and the public key of the communication apparatus is used by the first apparatus to verify the first digital signature.

99. The communication apparatus according to any one of claims 89 to 98, wherein
the transceiver unit is further configured to receive a request message from the first apparatus, wherein the request message is for requesting to access a network, the request message comprises a first identifier encrypted by the first apparatus by using the first key, and there is a correspondence between the first identifier and authentication information of the first apparatus; and
the processing unit is specifically configured to:
decrypt the encrypted first identifier based on the first key;
obtain first authentication information in the authentication information based on the first identifier; and
perform authentication on the first apparatus based on the first authentication information.

100. The communication apparatus according to claim 99, wherein the transceiver unit is further configured to:
receive third indication information from the first apparatus, wherein the third indication information indicates at least one authentication mode, and authentication information indicated by each of the at least one authentication mode is different; and
send fourth indication information to the first apparatus, wherein the fourth indication information indicates a first authentication mode, the first authentication mode is one of the at least one authentication mode, and the first authentication mode corresponds to the first authentication information.

101. The communication apparatus according to claim 99 or 100, wherein the authentication information comprises any one of the following information:
a credential of the first apparatus and a cryptographic algorithm, wherein
the credential of the first apparatus comprises a public key of the first apparatus, and the cryptographic algorithm comprises a signature algorithm applicable to the first apparatus.

102. The communication apparatus according to claim 100 or 101, wherein a type of a first identifier indicated by each of the at least one authentication mode is different, and the first identifier comprises at least one of the following:
a first-type identifier of the first apparatus, a second-type identifier of the first apparatus, a block identifier or a transaction identifier, and a pseudo identifier of the first apparatus, wherein
there is a first correspondence between the first-type identifier and a root key of the first apparatus, there is a second correspondence between the second-type identifier and at least one credential of the first apparatus, the block identifier or the transaction identifier is for obtaining the second correspondence stored on a blockchain, and there is a correspondence between the pseudo identifier and the second-type identifier.

103. The communication apparatus according to any one of claims 100 to 102, wherein the first authentication mode is determined based on second information and the third indication information, and the second information comprises at least one of the following information:
an issuer of the credential of the first apparatus, a security level of the credential of the first apparatus, and a cryptographic algorithm corresponding to the credential of the first apparatus.

104. The communication apparatus according to any one of claims 99 to 103, wherein the authentication information comprises a first credential of the first apparatus;
the processing unit is specifically configured to verify the first credential based on a credential of an issuer of the first credential;
the transceiver unit is further configured to receive a second digital signature from the first apparatus, wherein the second digital signature is a signature of the first apparatus on a second message, and the second message comprises a message that has been exchanged between the first apparatus and the communication apparatus; and
the processing unit is further configured to verify the second digital signature based on a public key corresponding to the first credential.

105. A communication apparatus, wherein the communication apparatus comprises a transceiver unit, and the transceiver unit is configured to:
send first indication information to a verification network element, wherein the first indication information indicates at least one key agreement algorithm; and
receive second indication information from the verification network element, wherein the second indication information indicates a first key agreement algorithm, the first key agreement algorithm is one of the at least one key agreement algorithm, the first key agreement algorithm is for determining a first key, and the first key is for encrypting or decrypting a message transmitted between the communication apparatus and the verification network element.

106. The communication apparatus according to claim 105, wherein the first key agreement algorithm is determined based on first information and the first indication information, and the first information comprises at least one of the following information:
a security level corresponding to a key agreement algorithm, computational complexity of the key agreement algorithm, a network standard, a type of the communication apparatus, and a computing capability of the communication apparatus.

107. The communication apparatus according to claim 105 or 106, wherein the at least one key agreement algorithm comprises at least one of the following:
an elliptic curve Diffie-Hellman ECDH key agreement algorithm, an ephemeral elliptic curve Diffie-Hellman ECDHE key agreement algorithm, a key agreement algorithm based on post-quantum cryptography PQC, a key agreement algorithm based on post-quantum cryptography PQC and elliptic curve Diffie-Hellman ECDH, a key agreement algorithm based on post-quantum cryptography PQC and ephemeral elliptic curve Diffie-Hellman ECDHE, and a key agreement algorithm based on a preset key.

108. The communication apparatus according to claim 107, wherein the communication apparatus further comprises a processing unit, and the processing unit is configured to:
determine the first key based on the first key agreement algorithm.

109. The communication apparatus according to claim 108, wherein the first key agreement algorithm is the ECDHE key agreement algorithm;
the transceiver unit is further configured to receive a second public key from the verification network element, wherein the second public key is a public key in a second ephemeral public-private key pair generated by the verification network element; and
the processing unit is specifically configured to:
determine the first key based on the second public key and a first private key, wherein the first private key is a private key in a first ephemeral public-private key pair generated by the communication apparatus.

110. The communication apparatus according to claim 107 or 108, wherein the transceiver unit is further configured to:
send a first public key to the verification network element, wherein the first public key is a public key in a first ephemeral public-private key pair generated by the communication apparatus, and the first public key is used by the verification network element to determine the first key.

111. The communication apparatus according to claim 108, wherein the first key agreement algorithm is the key agreement algorithm based on PQC;
the transceiver unit is further configured to receive a ciphertext from the verification network element, wherein the ciphertext is generated by the verification network element based on the post-quantum cryptography algorithm; and
the processing unit is specifically configured to input the ciphertext and a third private key into the post-quantum cryptography algorithm to generate the first key, wherein the third private key is a private key in a third ephemeral public-private key pair generated by the communication apparatus based on the post-quantum cryptography algorithm.

112. The communication apparatus according to claim 111, wherein the transceiver unit is further configured to:
send a third public key to the verification network element, wherein the third public key is a public key in the third ephemeral public-private key pair, and the third public key is used by the verification network element to determine the first key.

113. The communication apparatus according to claim 108, wherein the first key agreement algorithm is the key agreement algorithm based on PQC and ECDH;
the transceiver unit is further configured to receive a ciphertext and a public key of the verification network element from the verification network element, wherein the ciphertext is generated by the verification network element based on the post-quantum cryptography algorithm; and
the processing unit is specifically configured to:
determine a second key based on the public key of the verification network element and a first private key, wherein the first private key is a private key in a first ephemeral public-private key pair generated by the communication apparatus;
input the ciphertext and a third private key into the post-quantum cryptography algorithm to generate a third key, wherein the third private key is a private key in a third ephemeral public-private key pair generated by the communication apparatus based on the post-quantum cryptography algorithm; and
determine the first key based on the second key and the third key.

114. The communication apparatus according to claim 108, wherein the first key agreement algorithm is the key agreement algorithm based on PQC and ECDHE;
the transceiver unit is further configured to receive a ciphertext and a second public key from the verification network element, wherein the ciphertext is generated by the verification network element based on the post-quantum cryptography algorithm, and the second public key is a public key in a second ephemeral public-private key pair generated by the verification network element; and
the processing unit is specifically configured to:
determine a second key based on the second public key and a first private key, wherein the first private key is a private key in a first ephemeral public-private key pair generated by the communication apparatus;
input the ciphertext and a third private key into the post-quantum cryptography algorithm to generate a third key, wherein the third private key is a private key in a third ephemeral public-private key pair generated by the communication apparatus based on the post-quantum cryptography algorithm; and
determine the first key based on the second key and the third key.

115. The communication apparatus according to claim 113 or 114, wherein the transceiver unit is further configured to:
send a first public key and a third public key to the verification network element, wherein the first public key is a public key in the first ephemeral public-private key pair, the third public key is a public key in the third ephemeral public-private key pair, and the first public key and the third public key are used by the verification network element to determine the first key.

116. The communication apparatus according to any one of claims 105 to 115, wherein
the transceiver unit is further configured to receive a first digital signature from the verification network element, wherein the first digital signature is a signature on a first message using a private key of the verification network element, and the first message comprises a message that has been exchanged between the verification network element and the communication apparatus;
the transceiver unit is further configured to receive a certificate of the verification network element from the verification network element, wherein the certificate comprises the public key of the verification network element; and
the processing unit is further configured to verify the first digital signature based on the public key of the verification network element.

117. The communication apparatus according to any one of claims 105 to 116, wherein the transceiver unit is further configured to:
send a request message to the verification network element, wherein the request message is for requesting to access a network, the request message comprises a first identifier encrypted by using the first key, there is a correspondence between the first identifier and authentication information of the communication apparatus, the authentication information comprises first authentication information, and the first authentication information is for performing authentication on the communication apparatus.

118. The communication apparatus according to claim 117, wherein the transceiver unit is further configured to:
send third indication information to the verification network element, wherein the third indication information indicates at least one authentication mode, and authentication information indicated by each of the at least one authentication mode is independent of each other; and
receive fourth indication information from the verification network element, wherein the fourth indication information indicates a first authentication mode, the first authentication mode is one of the at least one authentication mode, and the first authentication mode corresponds to the first authentication information.

119. The communication apparatus according to claim 117 or 118, wherein the authentication information comprises any one of the following information:
a credential of the communication apparatus and a cryptographic algorithm, wherein
the credential of the communication apparatus comprises a public key of the communication apparatus, and the cryptographic algorithm comprises a signature algorithm applicable to the communication apparatus.

120. The communication apparatus according to claim 118 or 119, wherein a type of a first identifier indicated by each of the at least one authentication mode is different, and the first identifier comprises at least one of the following:
a first-type identifier of the communication apparatus, a second-type identifier of the communication apparatus, a block identifier or a transaction identifier, and a pseudo identifier of the communication apparatus, wherein
there is a first correspondence between the first-type identifier and a root key of the communication apparatus, there is a second correspondence between the second-type identifier and at least one credential of the communication apparatus, the block identifier or the transaction identifier is for obtaining the second correspondence stored on a blockchain, and there is a correspondence between the pseudo identifier and the second-type identifier.

121. The communication apparatus according to any one of claims 118 to 120, wherein the first authentication mode is determined based on second information and the third indication information, and the second information comprises at least one of the following information:
an issuer of the credential of the communication apparatus, a security level of the credential of the communication apparatus, and a cryptographic algorithm corresponding to the credential of the communication apparatus.

122. The communication apparatus according to any one of claims 117 to 121, wherein the transceiver unit is further configured to:
send a second digital signature to the verification network element, wherein the second digital signature is a signature on a second message using a private key of the communication apparatus, the second message comprises a message that has been exchanged between the communication apparatus and the verification network element, and the second digital signature is used by the verification network element to perform authentication on the communication apparatus.

123. A communication apparatus, wherein the communication apparatus comprises a transceiver unit, and the transceiver unit is configured to:
send an ephemeral public key to the verification network element, wherein the ephemeral public key is a public key in an ephemeral public-private key pair generated by the communication apparatus, the ephemeral public key is for determining a first key, and the first key is used by the verification network element to perform authentication on the communication apparatus, wherein
the first key is determined based on the ephemeral public key and a second private key, and the second private key is a private key of the verification network element or a private key in an ephemeral public-private key pair generated by the verification network element; or the first key is generated by inputting the ephemeral public key into a post-quantum cryptography algorithm.

124. The communication apparatus according to claim 123, wherein the communication apparatus further comprises a processing unit; and if the first key is determined based on the ephemeral public key and the second private key, and the second private key is the private key in the ephemeral public-private key pair generated by the verification network element,
the transceiver unit is further configured to receive a second public key from the verification network element, wherein the second public key is a public key in the ephemeral public-private key pair generated by the verification network element; and
the processing unit is configured to determine the first key based on a first private key and the second public key, wherein the first public key is a private key in the ephemeral public-private key pair generated by the communication apparatus.

125. The communication apparatus according to claim 123, wherein the ephemeral public key is a third public key, the third public key is a public key in a third ephemeral public-private key pair generated by the communication apparatus based on the post-quantum cryptography algorithm, and the first key is generated by inputting the third public key into the post-quantum cryptography algorithm.

126. The communication apparatus according to claim 125, wherein the communication apparatus further comprises a processing unit;
the transceiver unit is further configured to receive a ciphertext from the verification network element, wherein the ciphertext is generated by inputting the third public key into the post-quantum cryptography algorithm; and
the processing unit is configured to input the ciphertext and a third private key into the post-quantum cryptography algorithm to generate the first key, wherein the third private key is a private key in the third ephemeral public-private key pair.

127. The communication apparatus according to claim 123, wherein the ephemeral public key comprises a first public key and a third public key, the first public key is a public key in a first ephemeral public-private key pair generated by the communication apparatus, the third public key is a public key in a third ephemeral public-private key pair generated by the communication apparatus based on the post-quantum cryptography algorithm, and the first key being determined based on the ephemeral public key and the second private key comprises:
the first key is determined based on a second key and a third key, wherein the second key is determined based on the second private key and the first public key, and the third key is generated by inputting the third public key into the post-quantum cryptography algorithm.

128. The communication apparatus according to claim 127, wherein the communication apparatus further comprises a processing unit;
the communication apparatus further comprises the processing unit, configured to receive a ciphertext and a second public key from the verification network element, wherein the second public key comprises a public key of the verification network element or a public key in the ephemeral public-private key pair generated by the verification network element, and the ciphertext is generated by inputting the third public key into the post-quantum cryptography algorithm; and
the processing unit is configured to:
generate the second key based on a first private key and the second public key, wherein the first private key is a private key in the first public-private key pair;
input the ciphertext and a third private key into the post-quantum cryptography algorithm to generate the third key, wherein the third private key is a private key in the third public-private key pair; and
determine the first key based on the second key and the third key.

129. The communication apparatus according to any one of claims 123 to 128, wherein the ephemeral public key is sent based on second indication information, the second indication information indicates a first key agreement algorithm, the first key agreement algorithm is one of at least one key agreement algorithm, and the transceiver unit is further configured to:
send first indication information to the verification network element, wherein the first indication information indicates the at least one key agreement algorithm; and
receive the second indication information from the verification network element.

130. The communication apparatus according to claim 129, wherein the first key agreement algorithm is determined based on first information and the first indication information, and the first information comprises at least one of the following information:
a security level corresponding to a key agreement algorithm, computational complexity of the key agreement algorithm, a network standard, a type of the communication apparatus, and a computing capability of the communication apparatus.

131. The communication apparatus according to claim 129 or 130, wherein the at least one key agreement algorithm comprises at least one of the following:
an elliptic curve Diffie-Hellman ECDH key agreement algorithm, an ephemeral elliptic curve Diffie-Hellman ECDHE key agreement algorithm, the key agreement algorithm based on post-quantum cryptography PQC, a key agreement algorithm based on post-quantum cryptography PQC and elliptic curve Diffie-Hellman ECDH, a key agreement algorithm based on post-quantum cryptography PQC and ephemeral elliptic curve Diffie-Hellman ECDHE, and a key agreement algorithm based on a preset key.

132. The communication apparatus according to any one of claims 123 to 131, wherein the communication apparatus further comprises the processing unit;
the transceiver unit is further configured to receive a first digital signature from the verification network element, wherein the first digital signature is a signature on a first message using the private key of the verification network element, and the first message comprises a message that has been exchanged between the verification network element and the communication apparatus;
the transceiver unit is further configured to receive a certificate of the verification network element from the verification network element, wherein the certificate comprises the public key of the verification network element; and
the processing unit is configured to verify the first digital signature based on the public key of the verification network element.

133. The communication apparatus according to any one of claims 123 to 132, wherein the transceiver unit is further configured to:
send a request message to the verification network element, wherein the request message is for requesting to access a network, the request message comprises a first identifier encrypted by the communication apparatus by using the first key, there is a correspondence between the first identifier and authentication information of the communication apparatus, the authentication information comprises first authentication information, and the first authentication information is for performing authentication on the communication apparatus.

134. The communication apparatus according to claim 133, wherein the transceiver unit is further configured to:
send third indication information to the verification network element, wherein the third indication information indicates at least one authentication mode, and authentication information indicated by each of the at least one authentication mode is different; and
receive fourth indication information from the verification network element, wherein the fourth indication information indicates a first authentication mode, the first authentication mode is one of the at least one authentication mode, and the first authentication mode corresponds to the first authentication information.

135. The communication apparatus according to claim 133 or 134, wherein the authentication information indicates any one of the following information:
a credential of the communication apparatus and a cryptographic algorithm, wherein
the credential of the communication apparatus comprises a public key of the communication apparatus, and the cryptographic algorithm comprises a signature algorithm applicable to the communication apparatus.

136. The communication apparatus according to claim 135, wherein a type of a first identifier indicated by each of the at least one authentication mode is different, and the first identifier comprises at least one of the following:
a first-type identifier of the communication apparatus, a second-type identifier of the communication apparatus, a block identifier or a transaction identifier, and a pseudo identifier of the communication apparatus, wherein
there is a first correspondence between the first-type identifier and a root key of the communication apparatus, there is a second correspondence between the second-type identifier and at least one credential of the communication apparatus, the block identifier or the transaction identifier is for obtaining the second correspondence stored on a blockchain, and there is a correspondence between the pseudo identifier and the second-type identifier.

137. The communication apparatus according to any one of claims 134 to 136, wherein the first authentication mode is determined based on second information and the third indication information, and the second information comprises at least one of the following information:
an issuer of the credential of the communication apparatus, a security level of the credential of the communication apparatus, and a cryptographic algorithm corresponding to the credential of the communication apparatus.

138. The communication apparatus according to any one of claims 133 to 137, wherein the transceiver unit is further configured to:
send a second digital signature to the verification network element, wherein the second digital signature is a signature on a second message using a private key of the communication apparatus, the second message comprises a message that has been exchanged between the communication apparatus and the verification network element, and the second digital signature is used by the verification network element to perform authentication on the communication apparatus.

139. A communication apparatus, wherein the apparatus is configured to perform the method according to any one of claims 1 to 69.

140. A communication apparatus, comprising:
a processor, wherein the processor is configured to cause, by executing a computer program stored in a memory and/or by using a logic circuit, the apparatus to perform the method according to any one of claims 1 to 69.

141. The apparatus according to claim 140, wherein the apparatus further comprises the memory.

142. A communication apparatus, comprising:
a processor and a communication interface, wherein
the communication interface is configured to: receive code instructions and transmit the code instructions to the processor, and the processor is configured to cause, by executing a computer program stored in a memory and/or by using a logic circuit, the apparatus to perform the method according to any one of claims 1 to 69.

143. A computer-readable storage medium, wherein the computer-readable storage medium comprises a computer program or instructions; and when the computer program or the instructions are run on a computer, the computer is caused to perform the method according to any one of claims 1 to 69.

144. A computer program product, wherein the computer program product comprises a computer program or instructions; and when the computer program or the instructions are run on a computer, the computer is caused to perform the method according to any one of claims 1 to 69.

145. A communication system, comprising an authentication entity and a first terminal device, wherein the authentication entity is configured to perform the method according to any one of claims 1 to 35, and the first terminal device is configured to perform the method according to any one of claims 36 to 69.
